# EUROPÄISCHE PATENTSCHRIFT

(11) **EP 2 782 668 B1**
(45) Veröffentlichungstag und Bekanntmachung des Hinweises auf die Patenterteilung: **28.12.2016**
(21) Anmeldenummer: 12769326.5
(22) Anmeldetag: 27.09.2012
(51) Int. Cl.: B01J 20/20, B01J 20/30, B01J 20/28, B01J 20/06, B01J 20/10, B01J 20/18, B01J 20/22, B01D 53/02

(54) **FASERVERSTÄRKTER KOMPOSIT-FORMKÖRPER MIT ADSORPTIVEN EIGENSCHAFTEN**
FIBER REINFORCED COMPOSITE SHAPED BODY WITH ADSORPTIVE PROPERTIES
CORPS MOULÉ COMPOSITE RENFORCÉ PAR DES FIBRES ET À PROPRIÉTÉS ADSORBANTES

(30) Priorität: 24.11.2011 DE 102011119269; 25.11.2011 DE 102011119324; 23.12.2011 DE 102011122168
(43) Veröffentlichungstag der Anmeldung: 01.10.2014
(73) Patentinhaber: Blücher GmbH, 40699 Erkrath (DE)
(72) Erfinder: GIEBELHAUSEN, Jann-Michael, 14712 Rathenow (DE); FICHTNER, Sven, 40699 Erkrath (DE); SCHRAGE, Christian, 01097 Dresden (DE); KOPPKA, Christian, 40699 Erkrath (DE); KRENKEL, Sharon, 04279 Leipzig (DE)
(74) Vertreter: Von Rohr Patentanwälte Partnerschaft mbB
(86) Internationale Anmeldenummer: PCT/EP2012/004058
(87) Internationale Veröffentlichungsnummer: WO 2013/075768

(56) Entgegenhaltungen:
- EP-A2- 0 338 551
- DE-A1- 19 845 526
- DE-T2- 69 117 471
- DE-U1- 20 221 547

## Beschreibung

Die vorliegende Erfindung betrifft das Gebiet der Adsorptionsfiltertechnologie und insbesondere den Bereich von Filtermaterialien mit kombinierten Adsorptionseigenschaften einerseits und Partikel- bzw. Aerosolfiltereigenschaften andererseits.

Insbesondere betrifft die vorliegende Erfindung ein Verfahren zur Herstellung von dreidimensionalen, adsorptiven faserverstärkten Komposit-Formkörpern, welche mindestens ein partikuläres Adsorptionsmaterial einerseits und mindestens ein Fasermaterial andererseits aufweisen. Darüber hinaus betrifft die vorliegende Erfindung dreidimensionale, adsorptive faserverstärkte Komposit-Formkörper als solche und deren Verwendungen.

Zur Aufreinigung oder Aufbereitung von fluiden Medien, wie insbesondere Gasen oder Gasgemischen, wie z. B. Luft, oder aber Flüssigkeiten, wie z. B. Wasser, kommen oft partikuläre Systeme auf Basis von Teilchen mit spezifischer Wirkung (z. B. Adsorbentien, Ionenaustauscher und Katalysatoren) zum Einsatz. So ist beispielsweise die Verwendung von Adsorberpartikeln zur Entfernung von Gift- oder Schadstoffen und Gerüchen aus Gas- oder Luftströmen oder aber aus Flüssigkeiten aus dem Stand der Technik bekannt.

Die Verwendung loser Schüttungen von derartigen Teilchen, vorzugsweise von Adsorberpartikeln, insbesondere in Form von so genannten Schüttfiltern, stellt dabei eine zentrale Anwendungsform dar, um die betreffenden Partikel, wie z. B. Adsorberpartikel, mit dem aufzureinigenden Gas oder der aufzureinigenden Flüssigkeit in Kontakt zu bringen.

Nachteilig an der Verwendung loser Schüttungen ist jedoch, dass diese unter Einsatz- bzw. Betriebsbedingungen meist mit einem hohen Druckverlust und folglich mit einer verringerten Adsorptionskapazität verbunden ist. Darüber hinaus wird die Bildung von Kanälen innerhalb der Schüttungen gefördert, so dass es zum Durchbruch von einem noch nicht gereinigten Medium kommen kann.

Insbesondere sind lose Schüttungen von Adsorberpartikeln auch insofern nachteilig, als diese nur einer eingeschränkten geometrischen Formgebung zugänglich sind, d. h. eine individuelle und insbesondere zweckgerichtete Anpassung der geometrischen Form in Bezug auf den beabsichtigten Verwendungszweck ist kaum umsetzbar, zumal auf Basis von Schüttungen keine starren Formkörper erhalten werden können.

Aus der DE 38 13 564 A1 und aus der zu derselben Patentfamilie gehörenden EP 0 338 551 A2 ist eine Aktivkohlefilterschicht für ABC-Schutzmasken bekannt, welche ein hochluftdurchlässiges, im Wesentlichen formstabiles dreidimensionales Trägergerüst umfasst, an welchem eine Schicht von körnigen, insbesondere kugelförmigen Aktivkohleteilchen mit Durchmessern von 0,1 bis 1 mm fixiert ist, wobei es sich bei dem Trägergerüst um ein Geflecht aus Drähten, Monofilamenten oder Stegen oder um einen großporigen retikulierten Polyurethanschaumstoff handeln soll. Nachteilig bei dem dort beschriebenen System ist die Tatsache, dass das verwendete Trägermaterial einen relativ aufwendigen Bearbeitungsprozess im Zusammenhang mit der Beaufschlagung mit den betreffenden Partikeln erfordert. Weiterhin sind die ausgewählten Trägermaterialien nicht universell einsetzbar bzw. formbar, so dass die resultierenden Filter auf wenige Anwendungen beschränkt sind. Zudem weist das Material keine optimalen Partikel- bzw. Aerosolfiltereigenschaften auf.

Weiterhin ist aus der DE 42 39 520 A1 ein Hochleistungsfilter bekannt, welches aus einem dreidimensionalen Trägergerüst besteht, auf welchem mittels einer Haftmasse Adsorberteilchen fixiert sind, wobei das Trägergerüst mit einem thermisch stabilen und hydrolysebeständigen Kunststoff ummantelt ist. Insbesondere handelt es sich bei dem Trägergerüst um einen großporigen retikulierten Polyurethanschaumstoff, welcher von einem Silikonharz, Polypropylen, einem hydrolysefesten Polyurethan, einem Acrylat, einem Synthesekautschuk oder mit Fluorpolymeren ummantelt ist. Der Herstellungsprozess für diese mitunter mehrfach ummantelten Strukturen, insbesondere die Herstellung der Trägerstruktur, ist relativ aufwendig. Auch eine individuelle bzw. zweckgerichtete Formgebung ist nur in eingeschränktem Maße möglich.

Des Weiteren sind aus der DE 43 43 358 A1 Aktivkohle enthaltende poröse Körper bekannt, welche aus Platten und Agglomeraten aus vermahlener, in einer porösen SiO₂-Matrix eingebauter Aktivkohle bestehen. Insbesondere werden dort poröse Platten oder Körper mit adsorbierenden Eigenschaften beschrieben, bei denen Aktivkohlekörner oder Aktivkohlekügelchen bzw. Aktivkohle enthaltende Körner oder Kügelchen mithilfe einer Silikatlösung aneinander zum Haften gebracht sind und nachfolgend die Silikatbrücken in Silicagelbrücken umgewandelt werden. Auch hierbei ist die festgelegte Geometrie dieser porösen Körper bzw. deren mangelnde Flexibilität im Zusammenhang mit der Formgebung nachteilig. Darüber hinaus weisen die Körper als solche keine ausreichende mechanische Stabilität auf. Ebenfalls nachteilig ist, dass die aktivkohlehaltigen Partikel vollständig mit der Silikatlösung benetzt werden, so dass ein großer Teil der Kapazität dieser Partikel nicht mehr für adsorptive Prozesse zur Verfügung steht.

Zudem betrifft die DE 42 38 142 A1 Adsorberteilchen, die über Brücken aus einem anorganischen Material, insbesondere Tonerde, miteinander verbunden sind, wobei die Hohlräume zwischen den Adsorberteilchen 10 bis 100 % des Volumens der Adsorberteilchen betragen sollen. Auch die dort beschriebenen porösen Körper weisen eine nur geringe mechanische Stabilität auf, da die Brücken aus anorganischem Material einer mechanischen Einwirkung nur in geringem Maße standhalten können, so dass eine Verwendung unter mechanischer Belastung und eine Weiterverarbeitung zu Formkörpern unter Verpressung nicht ohne Weiteres möglich ist. Nachteilig ist in diesem Zusammenhang auch, dass eine zweckgerichtete Formgebung mitunter nicht möglich ist.

Weiterhin betrifft die DE 202 21 547 U1 poröse Aktivkohlekörper mit einer ersten Gerüststruktur auf Basis eines karbonisierten Harzes sowie einer weiteren Gerüststruktur auf Basis von Keramikmaterial und/oder gebranntem Feuerfestmaterial und Bindemittel, wobei die Aktivkohlepartikel an der Gerüststruktur fixiert sind. Durch die Fixierung der Aktivkohlepartikel mittels Einschmelzen in das Harz sind diese jedoch zu großen Teilen bedeckt und für zu reinigende Gase oder Flüssigkeiten nur eingeschränkt zugänglich, so dass es zu Verlusten hinsichtlich der Adsorptionskapazität kommen kann.

Aus der DE 10 2008 058 249 A1, die auf die Anmelderin selbst zurückgeht, sind adsorptive Strukturen bzw. adsorptive Formkörper bekannt, welche die Nachteile herkömmlicher Schüttfilter auf Basis von einzelnen Partikeln vermeiden bzw. zumindest abschwächen und zudem auch eine Verwendung unter mechanischer Belastung ermöglichen. Die zugrunde liegenden adsorptiven Strukturen bzw. adsorptiven Formkörper basieren dabei auf Agglomeraten von Adsorberpartikeln, wobei in diesem Zusammenhang Adsorberpartikel gleicher Ausprägung über ein thermoplastisches Bindemittel miteinander verbunden sind. Auf Basis derartiger Agglomerate können bereits leistungsfähige Adsorptionsmaterialien bereitgestellt werden, welche insbesondere im Schüttbett im Vergleich zu den reinen Basisadsorberpartikeln deutlich verringerte Druckdifferenzen, einhergehend mit einem verbesserten Durchströmungsverhalten, aufweisen.

Allerdings weisen die zuvor genannten Systeme keinen effektiven Schutz gegenüber mitunter toxischen Aerosolen bzw. feinverteilten Partikeln in einem Medium, wie Luft, auf. Daher kann mit den bekannten Systemen dem Problem der mangelnden Schutzfunktion gegenüber schädigenden Aerosolen (z. B. feinverteilt ausgebrachte chemische Schadstoffe, insbesondere Kampfstoffe) oder schädigenden Partikeln (z. B. schädigende Mikroorganismen oder an Trägerpartikeln fixierte Mikroorganismen, insbesondere als biologische Kampfstoffe eingesetzte Viren oder Bakterien) nicht begegnet werden.

Daher wurden Systeme entwickelt, die sowohl Adsorptionseigenschaften als auch Partikel- bzw. Aerosolfiltereigenschaften aufweisen, so dass mit einem einzigen Material sowohl gasförmige Substanzen als auch sich in dem aufzureinigenden Medium befindliche feste bzw. flüssige Partikel bzw. Schwebeteilchen in effektiver Weise zurückgehalten werden können.

So sind im Stand der Technik adsorptive Strukturen bekannt, welche - zur Gewährleistung von adsorptiven Eigenschaften - ein partikuläres Adsorptionsmaterial einerseits und - zur Gewährleistung einer Partikel- bzw. Aerosolfilterfunktion - ein Fasermaterial andererseits aufweisen. Das partikuläre Adsorptionsmaterial und das Fasermaterial sind dabei jeweils auf einem Bindemittelträger fixiert und über den Bindemittelträger zu einer einzelnen adsorptiven Struktur, insbesondere zu einem einzelnen Agglomerat, verbunden.

Bei den bekannten Systemen ist es mitunter nicht in optimaler Weise möglich, stabile dreidimensionale Formkörper herzustellen, insbesondere im Hinblick auf die Bereitstellung von Strukturen bzw. Körpern mit geringer Dicke und gleichzeitig hoher Stabilität und Flexibilität. Weiterhin weisen die im Stand der Technik bekannten Systeme oftmals keine optimale Faserverteilung bzw. keine gleichmäßige Verteilung der zugrunde liegenden Komponenten auf, was die Filter- bzw. Adsorptionseigenschaften insgesamt nachteilig beeinträchtigen kann. Ferner können im resultierenden Produkt einzelne Bereiche vorliegen, bei denen der Verbund zwischen Adsorptionsmaterial und Fasermaterial schwächer ist als in anderen Bereichen des Produkts, was sich auch nachteilig auf die Stabilität auswirken kann. Zudem ist es oftmals nicht möglich, einen hohen Anteil des eingesetzten Fasermaterials in dem resultierenden Produkt zu binden. Außerdem lassen sich bei den bekannten Verfahren einige besonders vorteilhafte Bindemittel aufgrund unzureichender Kompatibilität nur eingeschränkt verwenden.

Weiterhin betrifft die DE 198 45 526 A1 ein Filtermaterial, insbesondere in Form einer Flächenware, für fluide Medien mit einer Trägerschicht und einer Adsorptionsschicht, wobei die Adsorptionsschicht von mit Adsorberpartikeln beladenen Schmelzkleberfäden gebildet ist. In diesem Zusammenhang soll die Trägerschicht aus einem Vlies, Gewebe, Gewirke oder Gestrick bestehen.

Zudem betrifft die US 2006/0096911 A1 einen porösen Schichtgegenstand, welcher einen selbsttragenden Vliesstoff aus Polymerfasern und mindestens 80 Gew.-% Adsorbenspartikel, welche in den Vliesstoff eingebracht sind, aufweist. Die Fasern sollen eine größere Elastizität bzw. einen größeren Kristallisationsschrumpf als vergleichbare Polypropylenfasern aufweisen, und die Adsorbenspartikel sollen gleichmäßig in dem Vliesstoff verteilt sein.

Schließlich betrifft die WO 2010/054714 A2 einen adsorptiven Formkörper, welcher aus einer Vielzahl adsorptiver Strukturen auf Basis von Agglomeraten von Adsorberpartikeln aufgebaut ist, wobei die Agglomerate vorzugsweise kugelförmige Adsorberpartikel sowie ein thermoplastisches organisches Polymer aufweisen und wobei die Adsorberpartikel zumindest teilweise an das entsprechende Polymer gebunden bzw. zum Haften gebracht sind.

Der vorliegenden Erfindung liegt daher die Aufgabe zugrunde, dreidimensionale, adsorptive faserverstärkte Komposit-Formkörper bzw. entsprechende Verfahren zu deren Herstellung bereitzustellen, welche die zuvor geschilderten Nachteile des Standes der Technik zumindest weitgehend vermeiden oder aber wenigstens abschwächen.

Insbesondere ist eine Aufgabe der vorliegenden Erfindung darin zu sehen, ein Verfahren bereitzustellen, welches die Herstellung von Formkörpern mit kombinierten Adsorptionsfiltereigenschaften und zusätzlichen Partikel- bzw. Aerosolfiltereigenschaften ermöglichen soll, wobei das Verfahren zudem zu Formkörpern führen soll, welche eine homogene Verteilung der die Formkörper ausbildenden Komponenten bei gleichzeitig einstellbarer Materialdichte aufweisen. Zudem soll das erfindungsgemäße Verfahren eine individuelle bzw. variable Formgebung bei gleichzeitig hoher Stabilität und Flexibilität bzw. Biegsamkeit der resultierenden Formkörper ermöglichen. Weiterhin soll das erfindungsgemäße Verfahren zu einer Optimierung der einzusetzenden Mengen der dem Formkörper zugrundeliegenden Komponenten führen, wobei auch eine hohe Ausbeute bezüglich der eingesetzten Materialmengen realisiert werden soll.

Weiterhin liegt eine Aufgabe der vorliegenden Erfindung darin, dreidimensionale, adsorptive faserverstärkte Komposit-Formkörper als solche mit verbesserten Adsorptions- und Partikel- bzw. Aerosolfiltereigenschaften bereitzustellen, die - insbesondere unter Gewährleistung einer gewissen Flexibilität bzw. Biegsamkeit - eine hohe Formstabilität auch bei geringer Dicke des Formkörpers aufweisen sollen. Zudem soll eine insbesondere zweckgerichtete Formgebung in verschiedenste geometrische Formen ermöglicht werden. Darüber hinaus soll eine hohe Homogenität bzw. Gleichmäßigkeit der Verteilung der Komponenten im Formkörper vorliegen.

Die zuvor geschilderte Aufgabenstellung wird - gemäß einem **ersten** Aspekt der vorliegenden Erfindung - durch das erfindungsgemäße Verfahren gemäß den jeweiligen unabhängigen Verfahrensansprüchen zur Herstellung dreidimensionaler, adsorptiver faserverstärkter Komposit-Formkörper nach der Erfindung gelöst. Weitere, vorteilhafte Ausgestaltungen dieses Erfindungsaspekts sind Gegenstand der diesbezüglichen Verfahrensunteransprüche.

Weiterer Gegenstand der vorliegenden Erfindung - gemäß einem **zweiten** Aspekt der vorliegenden Erfindung - sind dreidimensionale, adsorptive faserverstärkte Komposit-Formkörper gemäß dem diesbezüglichen unabhängigen Anspruch. Weitere, vorteilhafte Ausgestaltungen dieses Erfindungsaspekts sind Gegenstand der entsprechenden Unteransprüche.

Des Weiteren ist Gegenstand der vorliegenden Erfindung - gemäß einem **dritten** Aspekt der vorliegenden Erfindung - die Verwendung der erfindungsgemäßen dreidimensionalen, adsorptiven faserverstärkten Komposit-Formkörper, wie sie in den unabhängigen Verwendungsansprüchen definiert ist.

Es versteht sich von selbst, dass Ausgestaltungen, Ausführungsformen, Vorteile und dergleichen, welche nachfolgend zu Zwecken der Vermeidung von Wiederholungen nur zu einem Erfindungsaspekt angeführt sind, selbstverständlich auch in Bezug auf die übrigen Erfindungsaspekte entsprechend gelten.

Weiterhin versteht es sich von selbst, dass bei den nachfolgenden Werte-, Zahlen- und Bereichsangaben die angegebenen Bereiche nicht beschränkend zu verstehen sind; es versteht sich für den Fachmann von selbst, dass einzelfallbedingt oder anwendungsbezogen von den angegebenen Bereichen und Angaben abgewichen werden kann, ohne dass der Rahmen der vorliegenden Erfindung verlassen ist.

Zudem gilt, dass alle im Folgenden genannten Werte- bzw. Parameterangaben oder dergleichen grundsätzlich mit genormten bzw. standardisierten oder explizit angegebenen Bestimmungsverfahren oder aber andernfalls mit dem Fachmann auf diesem Gebiet an sich geläufigen Bestimmungs- bzw. Messmethoden ermittelt bzw. bestimmt werden können.

Im Übrigen gilt, dass bei allen nachstehend aufgeführten relativen bzw. prozentualen, insbesondere gewichtsbezogenen Mengenangaben, zu beachten ist, dass diese Angaben im Rahmen der vorliegenden Erfindung vom Fachmann derart auszuwählen bzw. zu kombinieren sind, dass in der Summe - gegebenenfalls unter Einbeziehung weiterer Komponenten bzw. Inhaltsstoffe, insbesondere wie nachfolgend definiert - stets 100 % bzw. 100 Gew.-% resultieren. Dies versteht sich für den Fachmann aber von selbst.

Dies vorausgeschickt, wird im Folgenden die vorliegende Erfindung näher beschrieben.

Gegenstand der vorliegenden Erfindung ist - gemäß einem **ersten** Aspekt der vorliegenden Erfindung - ein Verfahren zur Herstellung eines dreidimensionalen, adsorptiven faserverstärkten Komposit-Formkörpers, wie nachfolgend definiert, wobei der Komposit-Formkörper mindestens ein partikuläres Adsorptionsmaterial und mindestens ein Fasermaterial aufweist, wobei das Verfahren die nachfolgenden Schritte in der nachstehend spezifizierten Abfolge (a) bis (c) umfasst:
(a) Bereitstellen mindestens eines Agglomerats mit einer Vielzahl diskreter Adsorberpartikel einerseits und mindestens eines Fasermaterials in Form einer Vielzahl diskreter Fasern andererseits,
(b) Zusammenführen und Inkontaktbringen der in Verfahrensschritt (a) bereitgestellten Komponenten, unter Verwendung mindestens eines Bindemittels, wobei als Bindemittel mindestens ein thermoplastisches und/oder hitzeklebriges organisches Polymer und/oder mindestens ein thermoplastischer Schmelzklebstoff eingesetzt wird und wobei einerseits das Bindemittel teilweise durch das Agglomerat bereitgestellt und nicht in Form von Schmelzfasern eingesetzt wird und anderseits das Bindemittel teilweise durch eine Vielzahl von Schmelzfasern bereitgestellt wird, und
(c) homogene und gleichmäßige Vermischung einerseits und formstabiles und dauerhaftes miteinander Verbinden und aneinander Fixieren der in Schritt (b) zusammengeführten und in Kontakt gebrachten Komponenten andererseits, so dass ein dreidimensionaler, adsorptiver faserverstärkter Komposit-Formkörper resultiert.

Unter dem Begriff "Komposit-Formkörper" sind im Rahmen der vorliegenden Erfindung Körper im physikalischen Sinne, also stoffliche und räumliche bzw. dreidimensionale Gebilde mit einer Oberfläche und einer Masse, zu verstehen, wobei die Körper mittels Formgebung in vielfältige geometrische Formen gebracht werden können. Insbesondere kann der Komposit-Formkörper eine regelmäßige (z. B. die Form einer Matte) oder unregelmäßige geometrische Form aufweisen. Zur Gewährleistung von kombinierten Adsorptions- sowie Partikel- bzw. Aerosolfiltereigenschaften weisen die mit dem erfindungsgemäßen Verfahren hergestellten Komposit-Formkörper mindestens zwei unterschiedliche Materialien auf - und zwar in Form von Adsorberpartikeln einerseits und diskreten Fasern andererseits -, die mittels der Verwendung von Bindemitteln miteinander verbunden und/oder aneinander fixiert sind und/oder aneinander haften. Somit fokussiert der Begriff "Komposit-Formkörper", wie er im Rahmen der vorliegenden Erfindung verwendet wird, insbesondere auf eine funktionale Gesamtheit von Bestandteilen, wobei die einzelnen Bestandteile bzw. Komponenten so aufeinander abgestimmt sind und in einer derartigen Weise miteinander wechselwirken bzw. in Verbindung stehen, dass sie als eine zweckgebundene Einheit in Form des dreidimensionalen Formkörpers angesehen werden können und dort gewissermaßen als ein Gefüge bzw. ein Verbund unterschiedlicher Bestandteile vorliegen. Der Begriff "Komposit-Formkörper" als solcher umfasst auch Bruchstücke bzw. Aktivkohle/Faser-Agglomerate, welche beispielsweise durch Zerkleinern der zugrundeliegenden Körper erhalten werden können.

Der Begriff "faserverstärkt", wie er erfindungsgemäß verwendet wird, bezieht sich auf die Inkorporation von Fasern in den Komposit-Formkörper nach der Erfindung. Insbesondere können durch die Faserverstärkung eine oder mehrere Eigenschaften des Komposit-Formkörpers verändert werden, beispielsweise die mechanische Festigkeit. Im Rahmen der erfindungsgemäßen Konzeption führt der Einsatz des Fasermaterials aber auch zur Bereitstellung von Partikel- bzw. Aerosolfiltereigenschaften.

Der Begriff "Agglomerat", wie er erfindungsgemäß für eine gemäß dem erfindungsgemäßen Verfahren zum Erhalt der erfindungsgemäßen Komposit-Formkörper eingesetzte Komponente verwendet wird, ist sehr breit zu verstehen und bezeichnet insbesondere eine mehr oder weniger verfestigte bzw. zusammengefügte Anhäufung von zuvor losen bzw. separaten Bestandteilen (d. h. insbesondere diskreten Adsorberpartikeln unter Verwendung mindestens eines Bindemittels) zu einem mehr oder weniger festen Verbund. Der Begriff "Agglomerat" bezeichnet im Rahmen der vorliegenden Erfindung in Bezug auf die eingesetzte Komponente sozusagen technisch hergestellte Zusammenballungen bzw. Anhäufungen einzelner bzw. diskreter Adsorberpartikel, welche im vorliegenden Fall durch ein Bindemittel zusammengefügt sind. Im Rahmen des erfindungsgemäßen Verfahrens fungieren die eingesetzten (Ausgangs-)Agglomerate als ein Ausgangsmaterial bzw. eine Ausgangskomponente zum Erhalt der erfindungsgemäßen Komposit-Formkörper. Dabei bezieht sich der Begriff, wie er für die erfindungsgemäß als Ausgangsmaterial eingesetzte Komponente verwendet wird, insbesondere darauf, dass das Agglomerat in Form einer Vielzahl von Agglomeratteilchen eingesetzt werden kann, welche jeweils das Bindemittel gewissermaßen als Kern aufweisen, wobei die Adsorberpartikel auf der Oberfläche des Kerns fixiert bzw. befestigt sind.

Für weitere Informationen und Ausführungen zum Aufbau und zur Herstellung des erfindungsgemäß eingesetzten Agglomerats kann verwiesen werden auf die DE 10 2010 024 990.4 sowie auf die zu derselben Patentfamilie gehörende PCT/EP 2011/000268 (WO 2011/098210 A1).

Der Begriff "adsorptiv", wie er erfindungsgemäß verwendet wird, zielt maßgeblich darauf ab, dass die erfindungsgemäßen Komposit-Formkörper gleichermaßen Adsorptionseigenschaften, insbesondere gegenüber vorzugsweise gasförmigen, mitunter aber auch flüssigen bzw. festen Substanzen bzw. Verbindungen aufweisen, wobei die Adsorptionseigenschaften insbesondere anorganische bzw. organische Verbindungen bzw. Substanzen umfassen. Insbesondere handelt es sich hierbei um Schad- bzw. Giftstoffe, wie militärische Giftstoffe bzw. Kampfstoffe.

Der Begriff "Partikel- und/oder Aerosolfilterfunktion" bezieht sich maßgeblich auf die Filtereigenschaften der erfindungsgemäßen Komposit-Formkörper in Bezug auf feste und/oder flüssige Schwebeteilchen in einem aufzureinigenden Medium bzw. deren Zurückbehaltung bzw. Entfernung aus dem aufzureinigenden Medium. Bei den Schwebeteilchen kann es sich beispielsweise und nicht beschränkend um Staub, Ruß, Pollen, Sporen, Viren, Bakterien oder um flüssige Schad- bzw. Giftstoffe oder dergleichen handeln.

Was den Begriff "Vielzahl diskreter Adsorberpartikeln" bzw. "Vielzahl diskreter Fasern" anbelangt, so sind hierunter im Rahmen der vorliegenden Erfindung jeweils insbesondere mindestens zwei, vorzugsweise mehr als zwei diskrete Adsorberpartikel bzw. diskrete Fasern zu verstehen.

Die Formulierung "homogen und/oder gleichmäßig miteinander vermengt und/oder vermischt" zielt im Falle der vorliegenden Erfindung darauf ab, dass das Vermengen oder Vermischen der zugrunde liegenden Komponenten - insbesondere der Adsorberpartikel und des Fasermaterials - derart durchgeführt wird, dass im resultierenden Endprodukt in Form des Komposit-Formkörpers eine möglichst homogene bzw. gleichmäßige Verteilung der Komponenten, insbesondere in Form der Bindemittel, der diskreten Adsorberpartikel und der diskreten Fasern, vorliegt.

Der Begriff "formstabil" im Sinne der vorliegenden Erfindung bedeutet, dass der durch das erfindungsgemäße Verfahren hergestellte Komposit-Formkörper eine gewisse Widerstandskraft gegenüber mechanischen (Kraft-)Einwirkungen aufweist, insbesondere insofern, als sein Zusammenhalt bzw. Gefüge nicht zerstört wird, wenn der Körper Einwirkungen ausgesetzt ist, die gegen diesen Zusammenhalt gerichtet sind. Insbesondere weist der erfindungsgemäße Komposit-Formkörper dabei auch eine gewisse insbesondere reversible Verformbarkeit bzw. Elastizität oder Biegsamkeit auf.

Eine grundlegende Idee der vorliegenden Erfindung ist somit darin zu sehen, dass zum Erhalt eines dreidimensionalen, adsorptiven faserverstärkten Komposit-Formkörpers einerseits mindestens ein Agglomerat, das eine Vielzahl diskreter Adsorberpartikel aufweist, und andererseits ein Fasermaterial in Form einer Vielzahl diskreter Fasern, unter Verwendung eines Bindemittels, derart miteinander vermengt und/oder vermischt werden, dass die Adsorberpartikel und die Fasern zumindest im Wesentlichen homogen und/oder gleichmäßig im resultierenden Komposit-Formkörper verteilt sind und dass die aus dem Agglomerat stammenden Adsorberpartikel und das Fasermaterial zumindest im Wesentlichen formstabil und/oder dauerhaft miteinander verbunden und/oder aneinander fixiert und/oder aneinander zum Haften gebracht werden.

Dabei werden erfindungsgemäß zwei Bindemittel zur Ausbildung des Verbundes eingesetzt, nämlich einerseits das aus den Agglomeraten stammende Bindemittel und andererseits das weitere Bindemittel, welches in Form von Schmelzfasern eingesetzt wird. Erfindungsgemäß werden somit mindestens zwei verschiedene Teile an Bindemittel eingesetzt. Hierdurch entstehen besonders stabile Verbunde bei gleichzeitig hoher Flexibilität der erhaltenen Körper.

Bei den erfindungsgemäßen Verfahren dienen dabei die eingesetzten Agglomerate mit einer Vielzahl diskreter Adsorberpartikel und ein Fasermaterial in Form einer Vielzahl diskreter Fasern als Ausgangsmaterialien. Bei der homogenen oder gleichmäßigen Vermengung und/oder Vermischung dieser beiden Ausgangsmaterialien miteinander wird dabei, ohne sich auf diese Theorie beschränken oder festlegen zu wollen, die ursprüngliche Agglomeratstruktur zumindest im Wesentlichen vollständig aufgelöst bzw. aufgehoben, was, wie im Folgenden noch ausführlich geschildert wird, insbesondere durch den Eintrag von Wärmeenergie und/oder mechanischer Energie hervorgerufen wird. Infolgedessen tritt - ohne sich auf diese Theorie beschränken oder festlegen zu wollen - zumindest ein Teil des durch die Agglomerate bereitgestellten Bindemittels aus dem inneren Bereich bzw. dem Kern der Agglomerate nach außen, wobei es zudem gegebenenfalls zu einer Auflösung der durch das Bindemittel der Agglomerate bereitgestellten Verbindung der Adsorberpartikel in den Agglomeraten kommen kann. Zumindest aber wir die Erwärmung derart durchgeführt, dass auf der Oberfläche des Agglomerats, insbesondere auf der Oberfläche des durch das Bindemittel gebildeten Kerns des Agglomerats, klebrige Stellen und/oder klebrige Bereiche resultieren; hierbei handelt es sich insbesondere um solche Bereiche, die im Agglomerat sozusagen noch "freie Bindemittel- bzw. Klebstoffstellen/-bereiche" ausbilden, welche nicht von Adsorberpartikeln belegt bzw. bedeckt sind, so dass sie gewissermaßen frei zugänglich sind und nach dem Aufschmelzen bzw. Erwärmen zum Anbinden der weiteren Materialen (wie insbesondere dem Fasermaterial) zur Verfügung stehen.

Durch den zusätzlichen Eintrag von mechanischer Energie erfolgt zudem ein intensives Durchmischen der Komponenten unter (Neu-)Ausbildung von (Klebe-)Verbindungen zwischen den Komponenten, wobei diesbezüglich auch dem weiteren Bindemittel auf Basis der Schmelzfasern eine große Bedeutung zukommt. Auf Basis des im Wesentlichen formstabilen und/oder dauerhaften Verbindens und/oder Fixierens und/oder Zumhaftenbringens der Komponenten in Form der Adsorberpartikel, des Fasermaterials sowie des Bindemittel entsteht dabei unter Ausbildung eines dreidimensionalen Gerüstes bzw. Geflechts der dreidimensionaler Komposit-Formkörper.

Aufgrund der erfindungsgemäßen Konzeption resultieren eine hohe Formstabilität, eine hohe Biegsamkeit und eine hohe Reißfestigkeit des derart hergestellten dreidimensionalen, adsorptiven faserverstärkten Komposit-Formkörpers, auch wenn dieser eine geringe Dicke aufweist, und dies bei gleichzeitig hervorragenden Partikel- bzw. Aerosolfiltereigenschaften sowie adsorptiven Eigenschaften. Durch die gezielte Verwendung eines (weiteren) Bindemittels, welches in Form von Schmelzfasern eingesetzt wird, entsteht dabei ein besonders stabiler und homogener Verbund der entsprechenden Komponenten.

Das erfindungsgemäße Verfahren ermöglicht eine homogene Verteilung der Komponenten im Komposit-Formkörper sowie einen gleichmäßig starken Verbund zwischen den diskreten Adsorberpartikeln und den diskreten Fasern über den gesamten Formkörper. Dadurch lassen sich wiederum eine hohe Biegsamkeit und eine hohe Reißfestigkeit des resultierenden Komposit-Formkörpers erreichen. Zudem werden die Möglichkeiten für eine zweckgerichtete Formgebung in verschiedenste geometrische Formen signifikant erweitert. Dies verbessert die Anwendbarkeit der resultierenden Komposit-Formkörper beispielsweise in Filtervorrichtungen oder dergleichen.

Zudem zeichnet sich das erfindungsgemäße Verfahren dadurch aus, dass praktisch der gesamte eingewogene bzw. eingesetzte Faseranteil in den Komposit-Formkörper eingearbeitet wird. Dadurch lassen sich sehr genaue Verhältnisse realisieren und eine hohe Ausbeute erreichen. Die hohe Ausbeute führt zu einer signifikanten Kostenreduktion. Aufgrund der hohen Ausbeute lassen sich die Materialmengen und Mengenverhältnisse im resultierenden Komposit-Formkörper präzise vorgeben. Gleichermaßen kann auch der Einsatz an Bindemittel signifikant reduziert werden, zumal sozusagen ein Teil des Bindemittels aus den eingesetzten Agglomeraten zur Ausbildung des Komposit-Formkörpers verwendet wird.

Aufgrund der homogenen und/oder gleichmäßigen Verteilung der Fasern und Adsorberpartikel im resultierenden Komposit-Formkörper lassen sich Formkörper mit einer vorgegebenen Dichte präzise und reproduzierbar herstellen.

Zudem können auf Basis des erfindungsgemäßen Verfahrens Komposit-Formkörper in Form von Adsorberpartikel/Faser-Agglomeraten hergestellt werden, welche neben den Adsorberpartikeln mit einem Fasermaterial und einem weiteren Bindemittel in Form von Schmelzfasern ausgerüstet sind, wobei die Agglomerate z. B. durch Zerkleinern der Komposit-Formkörper erhalten werden können. Diese Adsorberpartikel/Faser-Agglomerate eignen sich insbesondere zur Anwendung in Form von losen Schüttungen und weisen eine besonders gleichmäßige Verteilung von Fasern und Adsorberteilchen auf.

Die vorliegende Erfindung betrifft somit ein Verfahren zur Herstellung eines dreidimensionalen, adsorptiven faserverstärkten Komposit-Formkörpers, wie nachfolgend definiert, wobei der Komposit-Formkörper mindestens ein partikuläres Adsorptionsmaterial und mindestens ein Fasermaterial aufweist, wobei das Verfahren die nachfolgenden Schritte in der nachstehend spezifizierten Abfolge (a) bis (c) umfasst:
(a) Bereitstellen mindestens eines Agglomerats mit einer Vielzahl diskreter Adsorberpartikel einerseits und mindestens eines Fasermaterials in Form einer Vielzahl diskreter Fasern andererseits,
(b) Zusammenführen und/oder Inkontaktbringen der in Verfahrensschritt (a) bereitgestellten Komponenten, unter Verwendung mindestens eines Bindemittels, wobei als Bindemittel mindestens ein thermoplastisches und/oder hitzeklebriges organisches Polymer und/oder mindestens ein thermoplastischer Schmelzklebstoff eingesetzt wird und wobei einerseits das Bindemittel teilweise durch das Agglomerat bereitgestellt und nicht in Form von Schmelzfasern eingesetzt wird und anderseits das Bindemittel teilweise durch eine Vielzahl von Schmelzfasern bereitgestellt wird, und
(c) homogene und gleichmäßige Vermischung einerseits und formstabiles und dauerhaftes miteinander Verbinden und aneinander Fixieren der in Schritt (b) zusammengeführten und in Kontakt gebrachten Komponenten andererseits, so dass ein dreidimensionaler, adsorptiver faserverstärkter Komposit-Formkörper resultiert.

Bei dem erfindungsgemäßen Verfahren hat es sich als besonders vorteilhaft erwiesen, wenn als Bindemittel mindestens ein organisches Polymer, vorzugsweise ein thermoplastisches und/oder hitzeklebriges organisches Polymer, und/oder mindestens ein thermoplastischer Schmelzklebstoff eingesetzt wird bzw. werden, wobei das organische Polymer und/oder der thermoplastische Schmelzklebstoff, unabhängig voneinander, aus Polymeren aus der Gruppe von Polyestern, Polyamiden, Polyethern, Polyetherestern und/oder Polyurethanen sowie deren Mischungen und Copolymeren ausgewählt werden. In diesem Zusammenhang können die als Bindemittel bzw. Schmelzklebstoff eingesetzten Polymere ausgewählt werden aus amorphen, teilkristallinen und kristallinen Polymeren, insbesondere teilkristallinen Polymeren. Im Allgemeinen können die teilkristallinen Polymere einen Kristallisationsgrad von 10 bis 80 % aufweisen.

Bei Schmelzklebstoffen (synonym auch als *Hotmelts* bezeichnet) handelt es sich im Allgemeinen um ein thermisch aufschmelzbares Klebesystem, welches nach Abkühlung eine Kohäsion bzw. innere Festigkeit entwickelt. Schmelzklebstoffe sind im Allgemeinen lösungsmittelfreie und bei Raumtemperatur mehr oder weniger feste Produkte. Wird der Schmelzklebstoff insbesondere zum nachfolgenden Inkontaktbringen mit einem Substrat erwärmt, verringert sich die Viskosität des Schmelzklebstoffs, wodurch das Substrat mit dem Schmelzklebstoff benetzt wird. Dabei treten Adhäsionskräfte auf. Bei Abkühlung des resultierenden Zwischenprodukts treten schließlich Kohäsionskräfte auf.

Vorzugsweise ist das Bindemittel, insbesondere der Schmelzklebstoff, bei 25 °C und Atmosphärendruck fest. Insbesondere weist das Bindemittel, insbesondere der Schmelzklebstoff, einen Erweichungs- oder Schmelzpunkt oberhalb von 100 °C, vorzugsweise von 110 °C, insbesondere oberhalb von 120 °C, auf. Insbesondere weist das Bindemittel, insbesondere der Schmelzklebstoff einen Erweichungs- oder Schmelzpunkt im Bereich von 70 °C bis 220 °C, insbesondere 80 °C bis 200 °C, vorzugsweise 90 °C bzw. 90 K bis 180 °C, bevorzugt 100 °C bis 150 °C, auf. Sofern das erfindungsgemäß eingesetzte Bindemittel bzw. der erfindungsgemäß eingesetzte Schmelzklebstoff neben dem Erweichungspunkt einen Schmelzpunkt aufweist, wie es insbesondere für teilkristalline Polymere der Fall ist, so kann der Schmelzpunkt um mindestens 10 °C bzw. 10 K, insbesondere um mindestens 15 °C bzw. 15 K, vorzugsweise um mindestens 20 °C bzw. 20 K, bevorzugt um mindestens 30 °C bzw. 30 K, höher liegen als der entsprechende Erweichungspunkt des zugrundeliegenden Polymers bzw. Schmelzklebstoffs. In diesem Zusammenhang ist es bevorzugt, wenn das Bindemittel, insbesondere der Schmelzklebstoff, eine Temperaturbeständigkeit von mindestens 110°C, vorzugsweise mindestens 125 °C, insbesondere mindestens 150 °C, aufweist.

Was den Begriff "Erweichungspunkt", wie er erfindungsgemäß verwendet wird, anbelangt, so gibt dieser insbesondere die Temperatur an, bei welcher das Bindemittel, insbesondere der Schmelzklebstoff, von einem festen in einen weichen Zustand übergeht bzw. bei welcher sich die Härte des Bindemittels bzw. des Schmelzklebstoffs insbesondere abrupt und substantiell ändert. Der Erweichungspunkt kann insbesondere gemäß im Stand der Technik bekannten Bestimmungsverfahren auf Basis von Ring und Kugel sowie Kofler-Heizbank ermittelt werden. Insbesondere kann der Erweichungspunkt auf Basis der Norm ASTM E28 unter Anwendung eines Verfahrens gemäß Ring und Kugel bestimmt werden. Insbesondere bezeichnet der Erweichungspunkt das entsprechende Maximum im zugrundeliegenden DSC-Diagramm (*Differential Scanning Calorimetry*).

Weiterhin bezieht sich der Begriff "Schmelzpunkt" insbesondere auf die Temperatur, bei welcher ein teilkristallines Polymer bzw. ein teilkristallines Bindemittel, insbesondere ein teilkristalliner Schmelzklebstoff, seine Kristalleigenschaften verliert. Dabei weisen teilkristalline Polymere bzw. Bindemittel bzw. Schmelzklebstoffe im Allgemeinen sowohl einen Erweichungspunkt, welcher sich auf das Verhalten der amorphen Phase des Polymers bezieht, sowie einen davon verschiedenen Schmelzpunkt auf, wobei sich der Schmelzpunkt auf die kristalline Phase des zugrundeliegenden Polymers bezieht. Der Schmelzpunkt liegt dabei im Allgemeinen höher als der entsprechende Erweichungspunkt des Polymers. Im Gegensatz dazu weisen kristalline Polymere nur eine Schmelztemperatur und somit keinen Erweichungspunkt auf. Bei amorphen Polymeren verhält es sich zudem im Allgemeinen derart, dass das Schmelzverhalten in einem gewissen Temperaturbereich stattfindet. Insbesondere kann der Schmelzpunkt auf Basis der Norm ASTM D3461 bestimmt werden. Die vorgenannten Eigenschaften der zugrundeliegenden Polymere hinsichtlich ihres Erweichungs- bzw. Schmelzverhaltens sind dem Fachmann grundlegend bekannt.

Erfindungsgemäß wird das Bindemittel teilweise durch durch eine Vielzahl von Schmelzfasern bereitgestellt und/oder zumindest teilweise in Form von Schmelzfasern eingesetzt. Bei den erfindungsgemäß einsetzbaren Schmelzfasern handelt es sich insbesondere um einen faserartigen Schmelzklebstoff. Schmelzfasern können beispielsweise von der Firma EMS-Chemie GmbH & Co. KG, Neumünster, Deutschland, bezogen werden. Als besonders vorteilhaft haben sich dabei Schmelzfasern mit der Bezeichnung Grilon^{®} Typ KE 150, KA 115 und KA 140 erwiesen.

Durch den Einsatz von Schmelzfasern werden die Stabilität und Flexibilität bzw. Biegsamkeit des resultierenden Komposit-Formkörpers weiter erhöht, insbesondere da - ohne sich auf diese Theorie beschränken oder festlegen zu wollen - sich die Schmelzfasern gewissermaßen netzartig durch die Formkörper ziehen und so eine sehr flexible Verklebung der Komponenten erfolgt. Ein weiterer zentraler Vorteil der Verwendung von Schmelzfasern ist darin zu sehen, dass diese gleichermaßen zu den Partikel- bzw. Aerosolfiltereigenschaften beitragen und somit eine funktionelle Ergänzung des erfindungsgemäß eingesetzten Fasermaterials darstellen.

Erfindungsgemäß wird das Bindemittel einerseits teilweise durch das Agglomerat bereitgestellt und andererseits teilweise durch eine Vielzahl von Schmelzfasern bereitgestellt bzw. ist das Bindemittel einerseits teilweise Bestandteil des Agglomerats und wird andererseits teilweise in Form von Schmelzfasern eingesetzt.

Bei dieser bevorzugten Ausführungsform kann es zudem vorgesehen sein, dass sich das durch das Agglomerat bereitgestellte Bindemittel und das durch die Schmelzfasern bereitgestellte Bindemittel in mindestens einem Parameter voneinander unterscheiden. Hierbei handelt es sich insbesondere um einen Parameter, welcher ausgewählt wird aus der Gruppe von physikalischen und/oder chemischen Parametern, insbesondere chemischer Beschaffenheit, Erweichungs- oder Schmelzpunkt, Viskosität, insbesondere Viskosität der Schmelze und Haft- und/oder Klebeeigenschaften sowie deren Kombinationen. In diesem Zusammenhang kann es erfindungsgemäß vorgesehen sein, dass sich das durch das Agglomerat bereitgestellte Bindemittel einerseits und das durch die Schmelzfasern bereitgestellte Bindemittel hinsichtlich ihres Erweichungs- oder Schmelzpunktes unterscheiden, insbesondere wobei sich die jeweiligen Erweichungs- oder Schmelzpunkte um höchstens 50 °C bzw. 50 K, insbesondere höchstens 40 °C bzw. 40 K, vorzugsweise höchstens 30 °C bzw. 30 K, besonders bevorzugt höchstens 20 °C bzw. 20 K voneinander unterscheiden.

Bei der zuvor beschriebenen bevorzugten Ausführungsform kann das durch das Agglomerat bereitgestellte Bindemittel insbesondere einen höheren Erweichungs- oder Schmelzpunkt als das durch die Schmelzfasern bereitgestellte Bindemittel aufweisen. Gleichermaßen kann es aber auch vorgesehen sein, dass das durch die Schmelzfasern bereitgestellte Bindemittel einen höheren einen höheren oder gleichen Erweichungs- oder Schmelzpunkt als das durch das Agglomerat bereitgestellte Bindemittel aufweist.

Bei der bevorzugten Ausführungsform weist das Agglomerat vorzugsweise ein Gewichtsverhältnis von diskreten Adsorberpartikeln zu Bindemittel von mindestens 1,5 : 1, insbesondere mindestens 2 : 1, vorzugsweise mindestens 3 : 1, besonders bevorzugt mindestens 5 : 1, ganz besonders bevorzugt mindestens 7 : 1, auf. Alternativ oder zusätzlich kann das Agglomerat jeweils ein Gewichtsverhältnis von Adsorberpartikeln zu Bindemittel im Bereich von 1,5 : 1 bis 30 : 1, insbesondere 2 : 1 bis 20 : 1, vorzugsweise 3 : 1 bis 15 : 1, besonders bevorzugt 4 : 1 bis 10 : 1, aufweisen.

In diesem Zusammenhang kann das Agglomerat das Bindemittel, d. h. das durch das Agglomerat bereitgestellte Bindemittelteil, in Mengen von mindestens 1 Gew.-%, insbesondere mindestens 2 Gew.-%, vorzugsweise mindestens 5 Gew.-%, bevorzugt mindestens 10 Gew.-%, bezogen auf das Gesamtgewicht des Agglomerats, enthalten. Darüber hinaus ist es bevorzugt, wenn das Agglomerat das Bindemittel in Mengen von höchstens 80 Gew.-%, insbesondere höchstens 70 Gew.-%, vorzugsweise höchstens 60 Gew.-%, bevorzugt höchstens 50 Gew.-%, bezogen auf das Gesamtgewicht des Agglomerats, enthält. Vorzugsweise enthält das Agglomerat das Bindemittel in Mengen im Bereich von 1 Gew.-% bis 80 Gew.-%, insbesondere 2 Gew.-% bis 70 Gew.-%, vorzugsweise 3 Gew.-% bis 60 Gew.-%, bevorzugt 4 Gew.-% bis 55 Gew.-%, besonders bevorzugt 5 Gew.-% bis 50 Gew.-%, bezogen auf das Gesamtgewicht des Agglomerats.

Was die erfindungsgemäß als Bindemittel eingesetzten Schmelzfasern anbelangt, so hat es sich als vorteilhaft erwiesen, wenn die Schmelzfasern im Rahmen der erfindungsgemäßen Verfahrensführung in Mengen von mindestens 0,1 Gew.-%, vorzugsweise 0,2 Gew.-%, bevorzugt mindestens 0,5 Gew.-%, besonders bevorzugt mindestens 1 Gew.-%, bezogen auf das Gesamtgewicht aus Agglomerat, Fasermaterial und Bindemittel, eingesetzt werden. Bevorzugt ist ferner ein Einsatz der Schmelzfasern in Mengen von höchstens 20 Gew.-%, vorzugsweise höchstens 15 Gew.-%, bevorzugt höchstens 10 Gew.-%, besonders bevorzugt höchstens 8 Gew.-%, bezogen auf das Gesamtgewicht aus Agglomerat, Fasermaterial und Bindemittel. Die Schmelzfasern werden vorzugsweise in Mengen in einem Bereich von 0,1 Gew.-% bis 20 Gew.-%, vorzugsweise 0,2 Gew.-% bis 15 Gew.-%, bevorzugt 0,5 Gew.-% bis 10 Gew.-%, besonders bevorzugt 1 Gew.-% bis 8 Gew.-%, bezogen auf das Gesamtgewicht aus Agglomerat, Fasermaterial und Bindemittel eingesetzt.

Gleichermaßen können die Schmelzfasern eine Faserlänge, insbesondere eine mittlere Faserlänge, von mindestens 0,1 mm, insbesondere mindestens 0,5 mm, vorzugsweise mindestens 1 mm, bevorzugt mindestens 2 mm, aufweisen. Vorzugsweise beträgt die Faserlänge, insbesondere eine mittlere Faserlänge, der Schmelzfasern höchstens 100 mm, insbesondere höchstens 80 mm, vorzugsweise höchstens 50 mm, bevorzugt höchstens 20 mm, besonders bevorzugt höchstens 15 mm, ganz besonders bevorzugt höchstens 10 mm, noch mehr bevorzugt höchstens 5 mm. Bevorzugt eingesetzt werden Schmelzfasern mit einer Faserlänge, insbesondere einer mittleren Faserlänge, im Bereich von 0,1 mm bis 100 mm, insbesondere 0,5 mm bis 20 mm, vorzugsweise 1 mm bis 15 mm, bevorzugt 2 mm bis 10 mm.

Insbesondere weisen die erfindungsgemäß eingesetzten Schmelzfasern einen Faserdurchmesser, insbesondere einen mittleren Faserdurchmesser, von mindestens 0,05 µm, insbesondere mindestens 0,2 µm, vorzugsweise mindestens 0,5 µm, bevorzugt mindestens 1 µm, auf. Erfahrungsgemäß bevorzugt beträgt der Faserdurchmesser, insbesondere der mittlere Faserdurchmesser, der eingesetzten Schmelzfasern höchstens 900 µm, insbesondere höchstens 700 µm, vorzugsweise höchstens 600 µm, bevorzugt höchstens 500 µm. Die Schmelzfasern weisen vorzugsweise einen Faserdurchmesser, insbesondere einen mittleren Faserdurchmesser, im Bereich von 0,05 µm bis 900 µm, insbesondere 0,2 µm bis 700 µm, vorzugsweise 0,5 µm bis 600 µm, bevorzugt 1 µm bis 500 µm, auf.

Durch den Einsatz von Schmelzfasern mit den oben angeführten Eigenschaften bzw. Parametern können insbesondere im Zusammenhang mit dem Teil des Bindemittels, welcher durch das Agglomerat bereitgestellt wird, besonders stabile und mechanisch belastbare Komposit-Formkörper hergestellt werden, welche aufgrund der Faserstruktur des nicht durch die Agglomerate bereitgestellten Bindemittels zudem flexibel sind und weiter verbesserte Partikel- bzw. Aerosolfiltereigenschaften aufweisen.

Zudem kann es erfindungsgemäß auch vorgesehen sein, dass die im Rahmen des erfindungsgemäßen Verfahrens eingesetzten Schmelzfasern mindestens einen nicht schmelzbaren Kern, insbesondere mindestens ein nicht schmelzbares Filament, aufweisen, wobei der Kern und/oder das Filament zumindest im Wesentlichen mit dem Bindemittel umhüllt wird. Demnach können die Schmelzfasern auch in Form von diskreten Fasern mit einem Schmelzklebe- bzw. Bindemittelanteil vorliegen. Die erfindungsgemäß eingesetzten Schmelzfasern können dabei als Kern/Hülle-Fasern eingesetzt werden, insbesondere wobei die Hülle durch das Bindemittel gebildet wird. Derartige Fasern sind dem Fachmann als solche bekannt, so dass es hierzu keiner weiterführenden Ausführungen bedarf.

Gemäß einer weiter bevorzugten Ausführungsform wird das Verhältnis aus durch die Agglomerate bereitgestelltem Bindemittel einerseits und durch die Schmelzfasern bereitgestelltem Bindemittel andererseits auf einen Bereich von 10 : 1 bis 1 : 10, insbesondere 7,5 : 1 bis 1 : 7,5, vorzugsweise 5 : 1 bis 1 : 5, eingestellt.

Was das erfindungsgemäße Verfahren weiterhin anbelangt, so kann es grundsätzlich vorgesehen sein, dass das Bindemittel, insbesondere das durch die Schmelzfasern bereitgestellte Bindemittel, gemeinsam mit dem Fasermaterial, insbesondere in Form einer Mischung, vorzugsweise in Form einer homogenen Mischung, eingesetzt wird, d. h. insbesondere in Form einer Mischung den Agglomeraten zugegeben wird. Das Bindemittel, insbesondere das durch die Schmelzfasern bereitgestellte Bindemittel, und das Fasermaterial können vor dem Zusammenführen und/oder Inkontaktbringen der Komponenten bzw. vor Verfahrensschritt (b) in eine insbesondere im Wesentlichen homogene Mischung überführt werden. Anschließend kann die so erhaltene Mischung dem Agglomerat zugeführt und/oder in Verfahrensschritt (c) eingesetzt werden. Die Menge an Bindemittel, insbesondere durch die Schmelzfasern bereitgestelltes Bindemittel, in der Mischung kann auf mindestens 1 Gew.-%, insbesondere mindestens 2 Gew.-%, vorzugsweise mindestens 5 Gew.-%, bevorzugt mindestens 10 Gew.-%, bezogen auf das Gesamtgewicht aus Bindemittel und Fasermaterial, eingestellt werden. Mit anderen Worten kann das Bindemittel mit dem Fasermaterial gemischt und dann dem Agglomerat zugegeben werden. Die Mischung von Schmelzfasern und Fasermaterial erfolgt also insbesondere vor dem Zusammenführen oder Inkontaktbringen der Komponenten bzw. dem Zusammenbringen mit dem Agglomerat bzw. vor Verfahrensschritt (b). Die so erhaltene Mischung wird dann beim Zusammenführen bzw. Inkontaktbringen der Komponenten bzw. in Verfahrensschritt (b) eingesetzt.

Durch diese Vorgehensweise wird die homogene Verteilung der Komponenten weiter verbessert.

In diesem Fall kann die Bereitstellung der Mischung auf Basis einer vorzugsweise wässrigen Dispersion des Bindemittels, insbesondere des durch die Schmelzfasern bereitgestellten Bindemittels, und des Fasermaterials erfolgen. Vorzugsweise wird das Dispersionsmedium anschließend bzw. vor dem Zusammenbringen der Mischung mit dem Agglomerat bzw. vor Verfahrensschritt (b) entfernt.

Grundsätzlich hat es sich bei dem erfindungsgemäßen Verfahren als vorteilhaft erwiesen, wenn das Bindemittel, insbesondere das durch die Schmelzfasern bereitgestellte Bindemittel, und das Fasermaterial in einem gewichtsbezogenen Verhältnis von Bindemittel, insbesondere durch die Schmelzfasern bereitgestelltes Bindemittel, zu Fasermaterial [Bindemittel : Fasermaterial] im Bereich von 1 : 0,5 bis 1 : 100, insbesondere 1 : 1 bis 1 : 80, vorzugsweise 1 : 1,5 bis 1 : 60, bevorzugt 1 : 2 bis 1 : 20, eingesetzt werden.

Was weiterhin das neben dem Agglomerat und dem Bindemittel eingesetzte Fasermaterial anbelangt, so sollte zur Gewährleistung einer guten Partikel- bzw. Aerosolfilterfunktion das Fasermaterial jeweils in Form von und/oder in Mengen von mindestens 5 Fasern, insbesondere mindestens 10 Fasern, vorzugsweise mindestens 100 Fasern, bevorzugt mindestens 500 Fasern, besonders bevorzugt mindestens 1.000 Fasern, eingesetzt werden. Das Fasermaterial kann jeweils in Form von und/oder in Mengen von bis zu 100 Fasern, insbesondere bis zu 500 Fasern, vorzugsweise bis zu 1.000 Fasern oder mehr, eingesetzt werden. Entsprechendes gilt für die Schmelzfasern.

Was das im Rahmen des erfindungsgemäßen Verfahrens eingesetzte Fasermaterial weiterhin anbelangt, so hat es sich als vorteilhaft erwiesen, wenn das Fasermaterial in Mengen von mindestens 0,2 Gew.-%, vorzugsweise mindestens 0,5 Gew.-%, bevorzugt mindestens 1 Gew.-%, besonders bevorzugt mindestens 3 Gew.-%, bezogen auf das Gesamtgewicht aus Agglomerat, Fasermaterial und Bindemittel, eingesetzt wird. Bevorzugt wird das Fasermaterial in Mengen von höchstens 25 Gew.-%, vorzugsweise höchstens 20 Gew.-%, bevorzugt höchstens 10 Gew.-%, bezogen auf das Gesamtgewicht aus Agglomerat, Fasermaterial und Bindemittel, eingesetzt. Bevorzugt ist der Einsatz des Fasermaterials in Mengen in einem Bereich zwischen 0,2 Gew.-% und 25 Gew.-%, vorzugsweise zwischen 0,5 Gew.-% und 20 Gew.-%, bevorzugt zwischen 1 Gew.-% und 10 Gew.-%, bezogen auf das Gesamtgewicht aus Agglomerat, Fasermaterial und Bindemittel. Hierdurch werden besonders gute Partikel- bzw. Aerosolfiltereigenschaften bei gleichzeitig hoher Stabilität und Flexibilität des Formkörpers erreicht, insbesondere da auch das Fasermaterial als solches aufgrund der sozusagen räumlichen Vernetzung mit den Adsorberpartikeln unter Einsatz des Bindemittels zur Stabilität des Formkörpers beiträgt.

In diesem Zusammenhang kann es zudem vorgesehen sein, dass das Fasermaterial in Form von Fasern mit einer Faserlänge von mindestens 0,1 mm, insbesondere mindestens 0,5 mm, vorzugsweise mindestens 0,75 mm, bevorzugt mindestens 1 mm, eingesetzt wird. Üblicherweise kann das Fasermaterial in Form von Fasern mit einer Faserlänge von höchstens 50 mm, insbesondere höchstens 30 mm, vorzugsweise höchstens 20 mm, bevorzugt höchstens 10 mm, eingesetzt werden. Typischerweise kann das Fasermaterial in Form von Fasern mit einer Faserlänge im Bereich von 0,1 bis 50 mm, insbesondere 0,5 bis 50 mm, vorzugsweise 0,75 bis 20 mm, bevorzugt 1 bis 10 mm, eingesetzt werden.

Zudem kann das Fasermaterial in Form von Fasern mit einer mittleren Faserlänge von mindestens 0,1 mm, insbesondere mindestens 0,5 mm, vorzugsweise mindestens 1 mm, bevorzugt mindestens 2 mm, eingesetzt werden. Üblicherweise kann das Fasermaterial in Form von Fasern mit einer mittleren Faserlänge von höchstens 20 mm, insbesondere höchstens 10 mm, vorzugsweise höchstens 7 mm, bevorzugt höchstens 5 mm, eingesetzt werden. Weiterhin kann das Fasermaterial in Form von Fasern mit einer mittleren Faserlänge im Bereich von 0,1 bis 20 mm, insbesondere 0,5 bis 10 mm, vorzugsweise 1 bis 7 mm, bevorzugt 2 bis 5 mm, eingesetzt werden.

Darüber hinaus können auch die mittleren Faserdurchmesser des Fasermaterials bzw. der Fasern des Fasermaterials in weiten Bereichen variieren: So kann es erfindungsgemäß vorgesehen sein, dass das Fasermaterial in Form von Fasern mit einem mittleren Faserdurchmesser von mindestens 0,4 µm, insbesondere mindestens 0,6 µm, vorzugsweise mindestens 0,8 µm, bevorzugt mindestens 1 µm, eingesetzt wird. Üblicherweise kann das Fasermaterial in Form von Fasern mit einem mittleren Faserdurchmesser von höchstens 1.000 µm, insbesondere höchstens 800 µm, vorzugsweise höchstens 600 µm, bevorzugt höchstens 500 µm, eingesetzt werden. Weiterhin kann das Fasermaterial in Form von Fasern mit einem mittleren Faserdurchmesser im Bereich von 0,4 bis 1.000 µm, insbesondere 0,6 bis 800 µm, vorzugsweise 0,8 bis 600 µm, bevorzugt 1 bis 500 µm, eingesetzt werden.

Bei den erfindungsgemäß in Form des Fasermaterials eingesetzten diskreten Fasern handelt es sich insbesondere um im Verhältnis zur Länge dünne und vorzugsweise flexible Gebilde mit im Vergleich zu ihrer Länge kleinen Durchmessern bzw. Querschnitten, welche einen vorzugsweise zumindest im Wesentlichen kreisförmigen oder ellipsenförmigen Querschnitt aufweisen können. Gleichermaßen kommt aber auch ein Einsatz von profilierten Fasern in Betracht, z. B. Fasern mit einem trilobalen oder sternförmigen Querschnitt. Dies gilt grundsätzlich auch für die eingesetzten Schmelzfasern.

Üblicherweise kann das Fasermaterial ausgewählt werden aus der Gruppe von synthetischen Fasern (Chemiefasern), Naturfasern, insbesondere tierischen und/oder pflanzlichen Fasern, und Mineralfasern sowie deren Mischungen, vorzugsweise synthetischen Fasern (Chemiefasern).

Im Rahmen der vorliegenden Erfindung hat es sich als vorteilhaft erwiesen, wenn das Fasermaterial in Form von synthetischen Fasern (Chemiefasern), eingesetzt wird oder diese umfasst, insbesondere aus der Gruppe von Polyestern (PES); Polyolefinen, wie Polyethylen (PE) und Polypropylen (PP), Polyvinylchlorid (CLF); Polyvinylidenchlorid (CLF); Acetat (CA); Triacetat (CTA); Polyacryl (PAN), Polyamid (PA); Polyvinylalkohol (PVAL); Polyurethanen; Polyvinylestern; (Meth-)Acrylaten; sowie deren Mischungen.

Weiterhin kann das Fasermaterial in Form von Wollfasern, insbesondere Wollfasern tierischen und/oder pflanzlichen Ursprungs, vorzugsweise in Form von Schafswolle und/oder Baumwolle, bevorzugt Schafswolle, eingesetzt werden oder diese umfassen.

In besonders bevorzugter Weise kann das Fasermaterial in Form von Glasfasern eingesetzt werden oder diese umfassen. Gleichermaßen kann das Fasermaterial auch in Form von Bastfasern; Fruchtfasern, insbesondere Kokosfasern; Tierhaar, insbesondere Rosshaar; Seidenfasern; Fasern aus natürlichen Polymeren, insbesondere Viskosefasern; Basaltfasern; Kohlenstofffasern; Metallfasern und/oder Keramikfasern eingesetzt werden oder diese umfassen.

Gemäß einer weiteren erfindungsgemäßen Ausführungsform kann das Fasermaterial auch in Form von Aktivkohlefasern eingesetzt werden. In diesem Zusammenhang können die Aktivkohlefasern beispielsweise erhältlich sein durch Carbonisieren und nachfolgende Aktivierung organischer Ausgangsfasern, insbesondere von Cellulosefasern, Fasern auf Basis von Cellulosederivaten, Phenolharzfasern, Polyvinylalkoholfasern, Pechfasern, Acrylharzfasern, Polyacrylnitrilfasern, aromatischen Polyamidfasern, Formaldehydharzfasern, divinylbenzolvernetzten Polystyrolfasern, Ligninfasern, Baumwollfasern und/oder Hanffasern.

Durch den gezielten Einsatz von Fasermaterialien auf Basis von Aktivkohlefasern ist es im Rahmen der vorliegenden Erfindung sogar möglich, dass die erfindungsgemäßen Komposit-Formkörper - in weiterführender Ergänzung zu der Partikel- und/oder Aerosolfilterfunktion - noch weiter verbesserte bzw. optimierte Eigenschaften hinsichtlich der Adsorption von Schadstoffen aufweisen. Denn die Adsorptionskapazität wird durch die Bereitstellung weiterer adsorptiver Bestandteile - nämlich in Form der Aktivkohlefasern - erhöht. Zudem kann durch den gezielten Einsatz von Aktivkohlefasern in Ergänzung zu den partikulären Adsorberpartikeln eine weiterführende Verbesserung der Adsorptionseigenschaften dahingehend realisiert sein, dass Aktivkohlefasern einerseits und die partikulären Adsorberpartikel andererseits über sich ergänzende positive Adsorptionseigenschaften verfügen. Denn - ohne sich auf diese Theorie beschränken oder festlegen zu wollen - weisen Aktivkohlefasern im Allgemeinen eine höhere Anfangsspontaneität auf, während die partikulären Adsorberpartikel eine höhere Adsorptionskapazität aufweisen. Durch die gezielte Kombination der adsorptiven Systeme, nämlich Aktivkohlefasern einerseits und Adsorberpartikel andererseits, kann die Adsorptionskinetik somit insgesamt verbessert werden. Insbesondere liegt ein verbessertes Durchbruchverhalten in Bezug auf die erfindungsgemäßen Komposit-Formkörper bei gleichzeitig hoher Adsorptionskapazität vor. Zudem weisen auch die Aktivkohlefasern gute Eigenschaften hinsichtlich der Partikel- und/oder Aerosolfilterung auf.

Was das erfindungsgemäß eingesetzte Fasermaterial anbelangt, so können auch solche Fasern eingesetzt werden, welche einen nicht schmelzbaren Kern, insbesondere mindestens ein nicht schmelzbares Filament, aufweisen, wobei der Kern bzw. das Filament zumindest im Wesentlichen mit dem zuvor für die Schmelzfasern definierten Bindemittel umhüllt wird. Folglich können auch in Bezug auf das Fasermaterial so genannte Kern/Hülle-Fasern eingesetzt werden, insbesondere wobei die Hülle der Fasern durch ein Bindemittel ausgebildet wird, insbesondere wie zuvor definiert. Demnach umfasst die vorliegende Erfindung auch solche Ausführungsformen, wonach sowohl das Bindemittel in Form von Kern/Hülle-Fasern als auch das Fasermaterial als solches auf Basis der zuvor definierten Kern/Hülle-Fasern eingesetzt werden.

Im Allgemeinen sollte das Fasermaterial derart ausgewählt werden, dass dieses eine hohe thermische Stabilität aufweist. Insbesondere sollte das eingesetzte Fasermaterial bei den zuvor in Bezug auf das bzw. die Bindemittel definierten Erweichungspunkte bzw. Schmelzpunkte thermisch stabil sein, d. h. bei den in Rede stehenden Temperaturen nicht zerstört werden. Der Fachmann ist jederzeit in der Lage, die Fasermaterialien vor diesem Hintergrund auszuwählen, so dass es diesbezüglich keiner weiterführenden Ausführungen bedarf.

Was weiterhin das im Rahmen des erfindungsgemäßen Verfahrens eingesetzte Agglomerat anbelangt, so können diesbezüglich eine Vielzahl an Materialien eingesetzt werden. Die jeweiligen partikel- bzw. agglomeratbildenden Materialien sind dem Fachmann als solche wohlbekannt, und der Fachmann ist jederzeit in der Lage, die jeweiligen partikel- bzw. agglomeratbildenden Materialien im Lichte der Ausrüstung der erfindungsgemäßen Komposit-Formkörper mit speziellen Adsorptionseigenschaften auszubilden und aufeinander abzustimmen bzw. diesbezüglich abgestimmte Agglomerate einzusetzen.

Insbesondere können die durch die erfindungsgemäß eingesetzten Agglomerate zur Verfügung gestellten diskreten Adsorberpartikel ausgewählt werden aus der Gruppe von
(i) Aktivkohle, insbesondere kornförmiger Aktivkohle, vorzugsweise kugelförmiger Aktivkohle und/oder insbesondere geformter und/oder extrudierter Aktivkohle und/oder pulverförmiger Aktivkohle;
(ii) Zeolithen, insbesondere natürlichen und/oder synthetischen Zeolithen;
(iii) Molekularsieben, insbesondere zeolithischen Molekularsieben, synthetischen Molekularsieben und/oder insbesondere synthetischen Molekularsieben auf Basis von Kohlenstoff, Oxiden und/oder Gläsern;
(iv) Metalloxid- und/oder Metallpartikeln;
(v) Ionenaustauscherharzen, insbesondere polydispersen und/oder monodispersen Kationen- und/oder Anionenaustauschern, insbesondere vom Geltyp und/oder vom makroporösen Typ;
(vi) anorganischen Oxiden, insbesondere Siliciumdioxiden, Silicagelen und/oder Aluminiumoxiden;
(vii) porösen organischen Polymeren und/oder porösen organischanorganischen Hybridpolymeren;
(viii) mineralischen Granulaten;
(ix) Klathraten;
(x) metallorganischen Gerüstverbindungen (*metal-organic frameworks* bzw. MOFs); sowie
(xi) deren Mischungen und/oder Kombinationen.

Vorzugsweise können die diskreten Adsorberpartikel aus Aktivkohle, insbesondere aus kornförmiger, vorzugsweise kugelförmiger Aktivkohle gebildet werden.

Erfindungsgemäß verwendbare Aktivkohlen, welche insbesondere auf Basis kugelförmiger Aktivkohle eingesetzt werden, sind beispielsweise von der Blücher GmbH, Erkrath, Deutschland, oder von der Adsor-Tech GmbH, Premnitz, Deutschland, erhältlich. Zudem kann in Bezug auf die erfindungsgemäß einsetzbare mikroporöse Aktivkohle verwiesen werden auf die auf die Anmelderin selbst zurückgehende europäische Patentanmeldung EP 1 918 022 A1 sowie auf die parallele US 2008/0107589 A1, deren jeweilige Offenbarung hiermit durch Bezugnahme vollumfänglich eingeschlossen ist.

Was die Menge der diskreten Adsorberpartikel in Bezug auf das Gesamtgewicht des für das erfindungsgemäße Verfahren zum Erhalt der Komposit-Formkörper eingesetzte Agglomerats weiterhin anbelangt, so kann auch diese in weiten Bereichen variieren. So ist es erfindungsgemäß insbesondere vorgesehen, dass das Agglomerat die Adsorberpartikel in Mengen von mindestens 5 Gew.-%, insbesondere mindestens 10 Gew.-%, vorzugsweise mindestens 20 Gew.-%, bevorzugt mindestens 30 Gew.-%, besonders bevorzugt mindestens 50 Gew.-% oder mehr, bezogen auf das Gesamtgewicht des Agglomerats, aufweist. Zudem kann es erfindungsgemäß vorgesehen sein, dass die Adsorberpartikel in Mengen im Bereich von 5 bis 95 Gew.-%, insbesondere 10 bis 90 Gew.-%, vorzugsweise 20 bis 85 Gew.-%, bevorzugt 30 bis 85 Gew.-%, besonders bevorzugt 50 bis 85 Gew.-%, bezogen auf das Gesamtgewicht des Agglomerats, eingesetzt werden.

Zudem kann die Menge der diskreten Adsorberpartikel in Bezug auf das Gesamtgewicht aus Agglomerat, Fasermaterial und Bindemittel in weiten Bereichen variieren. So ist es erfindungsgemäß insbesondere vorgesehen, dass die Adsorberpartikel in Mengen von mindestens 1 Gew.-%, insbesondere mindestens 5 Gew.-%, vorzugsweise mindestens 10 Gew.-%, bevorzugt mindestens 15 Gew.-%, besonders bevorzugt mindestens 20 Gew.-% oder mehr, bezogen auf das Gesamtgewicht aus Agglomerat, Fasermaterial und Bindemittel, eingesetzt werden. Üblicherweise werden die Adsorberpartikel in Mengen im Bereich von 1 bis 90 Gew.-%, insbesondere 5 bis 80 Gew.-%, vorzugsweise 10 bis 50 Gew.-%, bevorzugt 15 bis 35 Gew.-%, besonders bevorzugt 20 bis 30 Gew.-%, bezogen auf das Gesamtgewicht aus Agglomerat, Fasermaterial und Bindemittel, eingesetzt.

Die Teilchengrößen der Adsorberpartikel des Agglomerats bzw. der resultierenden Komposit-Formkörper kann gleichermaßen in weiten Bereichen variieren. Üblicherweise weisen die Adsorberpartikel als solche Teilchengrößen, insbesondere Teilchendurchmesser, im Bereich von 0,001 bis 3 mm, insbesondere 0,005 bis 2,5 mm, vorzugsweise 0,01 bis 2 mm, besonders bevorzugt 0,02 bis 1,5 mm, ganz besonders bevorzugt 0,05 bis 1 mm, auf.

Auch die mittleren Teilchengrößen der Adsorberpartikel können in weiten Bereichen variieren: Im Allgemeinen weisen die Adsorberpartikel als solche mittlere Teilchengrößen, insbesondere mittlere Teilchendurchmesser (D50), im Bereich von 0,01 bis 2 mm, insbesondere 0,05 bis 1,5 mm, vorzugsweise 0,1 bis 1 mm, auf.

Die entsprechenden Teilchengrößen bzw. -durchmesser können beispielsweise auf Basis der Methode nach ASTM D2862-97/04 bestimmt werden. Zudem können die vorgenannten Größen mit weiteren Bestimmungen auf Basis einer Siebanalyse, auf Basis von Röntgenbeugung, Laserdiffraktometrie oder dergleichen ermittelt werden. Die jeweiligen Bestimmungsmethoden sind dem Fachmann als solche wohlbekannt, so dass es diesbezüglich keiner weiteren Ausführungen bedarf.

Was die Herstellung der Komposit-Formkörper weiterhin anbelangt, so wird erfindungsgemäß insbesondere bei Temperaturen oberhalb des Erweichungspunkts des durch das Agglomerat bereitgestellten Bindemittels bzw. oberhalb des Erweichungspunktes des durch die Schmelzfasern bereitgestellten Bindemittels verfahren, und zwar bei dem Zusammenführen bzw. Inkontaktbringen der Komponenten bzw. in Verfahrensschritt (b) und/oder bei der Vermengung bzw. Vermischung der Komponenten bzw. dem Verbinden bzw. Fixieren der Komponenten bzw. in Verfahrensschritt (c). Zu diesen Zeitpunkten im erfindungsgemäßen Verfahren kann gleichermaßen auch bei Temperaturen unterhalb des Schmelzpunkts des durch das Agglomerat bereitgestellten Bindemittels und/oder unterhalb des Erweichungspunktes des durch die Schmelzfasern bereitgestellten Bindemittels verfahren werden. Es hat sich gezeigt, dass das Verfahren bei diesen Temperaturen besonders vorteilhaft für die Verbindung bzw. Fixierung bzw. Haftung der Adsorberpartikel mit bzw. an den Fasern ist. Insbesondere sollte bei Verwendung von teilkristallinen oder kristallinen Polymeren bei Temperaturen unterhalb der entsprechenden Schmelzpunkte verfahren werden.

In diesem Zusammenhang sollte bei dem Zusammenführen bzw. Inkontaktbringen der Komponenten bzw. in Verfahrensschritt (b) und/oder bei der Vermengung bzw. Vermischung der Komponenten bzw. dem Verbinden bzw. Fixieren der Komponenten bzw. in Verfahrensschritt (c) derart erwärmt werden bzw. bei solchen Temperaturen verfahren werden, dass bzw. bei welchen das eingesetzte Fasermaterial zumindest im Wesentlichen nicht thermisch beeinträchtigt oder thermisch nicht zerstört wird. Durch diese Vorgehensweise wird das Fasermaterial in vorteilhafter Weise geschont, was sowohl die Stabilität als auch die Partikel- bzw. Aerosolfiltereigenschaften des resultierenden Komposit-Formkörpers weiter verbessert.

Im Allgemeinen kann das Agglomerat allein bzw. vor dem Zusammenführen und/oder Inkontaktbringen der Komponenten bzw. vor Verfahrensschritt (b) auf Temperaturen oberhalb des Erweichungspunkts des durch das Agglomerat bereitgestellten Bindemittels erwärmt werden. Insbesondere können in diesem Fall auch Schmelzfasern verarbeitet werden, deren Schmelzpunkt unterhalb des Erweichungspunkts des durch das Agglomerat bereitgestellten Bindemittels liegt.

In diesem Zusammenhang sollte das Agglomerat vor dem Zusammenführen bzw. Inkontaktbringen der Komponenten bzw. vor Verfahrensschritt (b) auf Temperaturen oberhalb des Erweichungspunktes des durch die Schmelzfasern bereitgestellten Bindemittels bzw. unterhalb des Schmelzpunktes des durch die Schmelzfasern bereitgestellten Bindemittels temperiert, insbesondere abgekühlt, werden. Bei einem derartigen Abkühlen des Agglomerats wird das durch das Agglomerat bereitgestellte Bindemittel zudem nicht vollständig von den Adsorberpartikeln abgeschirmt, wie es gegebenenfalls ohne ein Erwärmen auf entsprechend hohe Temperaturen der Fall wäre.

Im Rahmen der vorliegenden Erfindung hat es sich weiterhin als vorteilhaft erweisen, wenn im Allgemeinen derart erwärmt wird, dass zumindest ein Teil des durch das Agglomerat bereitgestellten Bindemittels an die Oberfläche des Agglomerats tritt bzw. ein Teil des durch das Agglomerat bereitgestellten Bindemittels aus dem inneren Bereich bzw. dem Kern des Agglomerats nach außen bzw. an die Oberfläche des Agglomerats tritt, bzw. wenn derart erwärmt wird, dass das durch das Agglomerat bereitgestellte Bindemittel in einen klebrigen, insbesondere hitzeklebrigen Zustand überführt wird. Insbesondere kann erfindungsgemäß derart erwärmt werden, dass auf der Oberfläche des Agglomerats, insbesondere auf der Oberfläche des durch das Bindemittel gebildeten Kerns des Agglomerats, klebrige Stellen und/oder klebrige Bereiche resultieren. Auf diese Weise wird insgesamt gewissermaßen an der Oberfläche der Agglomerate eine klebrige Schicht bereitgestellt.

Insbesondere sollte derart erwärmt werden, dass das durch die Schmelzfasern bereitgestellte Bindemittel bzw. die Schmelzfasern in einen klebrigen, insbesondere hitzeklebrigen Zustand, überführt wird. Dabei sollte jedoch bei Temperaturen verfahren werden, bei denen die Form bzw. Gestalt der Schmelzfasern bzw. die Faserform zumindest im Wesentlichen aufrechterhalten wird. Diesbezüglich sollte insbesondere unterhalb der Schmelztemperatur der eingesetzten Schmelzfasern verfahren werden.

Vorzugsweise wird das Agglomerat auf eine Temperatur von höchstens 230 °C, insbesondere höchstens 210 °C, bevorzugt höchstens 190 °C, besonders bevorzugt höchstens 160 °C, erwärmt. Zudem kann bei dem Zusammenführen bzw. Inkontaktbringen der Komponenten bzw. in Verfahrensschritt (b) und/oder bei der Vermengung bzw. Vermischung der Komponenten bzw. dem Verbinden bzw. Fixieren der Komponenten bzw. in Verfahrensschritt (c) auf eine Temperatur von höchstens 230 °C, insbesondere höchstens 210 °C, vorzugsweise höchstens 190 °C, bevorzugt höchstens 160 °C, erwärmt werden.

Dabei kann es zudem vorgesehen sein, dass die erreichte Temperatur für eine definierte Zeitdauer gehalten wird, vorzugsweise für mindestens 30 Minuten, bevorzugt mindestens 40 Minuten, besonders bevorzugt mindestens 45 Minuten und/oder vorzugsweise für höchstens 80 Minuten, bevorzugt höchstens 70 Minuten, besonders bevorzugt höchstens 55 Minuten, und/oder vorzugsweise für einen Zeitbereich von 30 bis 80 Minuten, bevorzugt 40 bis 70 Minuten, besonders bevorzugt 45 bis 55 Minuten. Hierdurch wird eine optimale Bereitstellung des Bindemittels aus den Agglomeraten gewährleistet.

Im Allgemeinen kann das Agglomerat somit insbesondere allein oder in Gegenwart des durch die Schmelzfasern bereitgestellten Bindemittels und/oder in Gegenwart der Schmelzfasern und/oder in Gegenwart des Fasermaterials erwärmt werden, wobei das Erwärmen insbesondere auf Temperaturen oberhalb des Erweichungspunkts des durch das Agglomerat bereitgestellten Bindemittels und/oder des durch die Schmelzfasern bereitgestellten Bindemittels erfolgt, insbesondere derart, dass ein Teil des durch das Agglomerat bereitgestellten Bindemittels an die Oberfläche des Agglomerats tritt und/oder ein Teil des durch das Agglomerat bereitgestellten Bindemittels aus dem inneren Bereich des Agglomerats nach außen tritt, gegebenenfalls im Beisein des durch die Schmelzfasern bereitgestellten Bindemittels und/oder in Gegenwart der Schmelzfasern und/oder in Gegenwart des Fasermaterials, und/oder insbesondere derart, dass das durch die Schmelzfasern bereitgestellte Bindemittel und/oder die Schmelzfasern in einen klebrigen, insbesondere hitzeklebrigen Zustand unter zumindest im Wesentlichen vollständiger Aufrechterhaltung der Form und/oder Gestalt der Schmelzfasern überführt wird bzw. werden, sofern das durch die Schmelzfasern bereitgestellte Bindemittel und/oder die Schmelzfasern bei dem Erwärmen des Agglomerats zugegen sind.

Mit anderen Worten kann das Erwärmen des Agglomerats erfindungsgemäß in Gegenwart des durch die Schmelzfasern bereitgestellten Bindemittels bzw. in Gegenwart der Schmelzfasern, gegebenenfalls in Beisein oder vor Zugabe des Fasermaterials, insbesondere vor Zugabe des Fasermaterials, erfolgen.

Erfindungsgemäß kann somit auch derart verfahren werden, dass - sozusagen ausgehend von einer kalten bzw. nicht erwärmten Mischung - die Komponenten zusammengeführt werden - beispielsweise das Agglomerat einerseits mit der zuvor beschriebenen Mischung aus Schmelzfasern und Fasermaterial andererseits - und anschließend eine Erwärmung durchgeführt wird, beispielsweise bei gleichzeitiger Vermischung bzw. Vermengung der Komponenten.

Was das Zusammenführen und/oder Inkontaktbringen des Agglomerats mit den weiteren Komponenten bzw. Verfahrensschritt (b) anbelangt, so können das Agglomerat und die weiteren Komponenten dadurch miteinander in Kontakt gebracht werden, dass die weiteren Komponenten auf der Oberfläche, insbesondere auf einer Ober- und/oder Unterseite, des insbesondere schichtförmig angeordneten Agglomerats verteilt und/oder aufgetragen werden, insbesondere gefolgt von mindestens einem Mischvorgang. Dabei kann das Agglomerat insbesondere im erwärmten Zustand eingesetzt werden. Es erfolgt dann eine Wärmeübertragung auf die Fasern, so dass diese zuvor nicht erwärmt werden müssen.

Dabei ist es bevorzugt, dass zunächst ein Teil, vorzugsweise etwa die Hälfte, der eingesetzten Menge der weiteren Komponenten, insbesondere der Mischung aus Fasermaterial und Schmelzfasern, als eine erste insbesondere flächige Schicht angeordnet wird, anschließend das zuvor erwärmte Agglomerat auf die schichtförmig angeordneten weiteren Komponenten als eine zweite flächige Schicht angeordnet wird und schließlich der restliche Teil der weiteren Komponenten auf das Agglomerat als eine dritte flächige Schicht angeordnet wird. In diesem Fall resultiert eine Schichtung der Komponenten ähnlich einem Sandwich. Diese Vorgehensweise begünstigt eine homogene und/oder gleichmäßige Verteilung der Adsorberpartikel und/oder Fasern.

Im Rahmen der vorliegenden Erfindung kann es zudem vorgesehen sein, dass beim Vermengen und/oder Vermischen und Verbinden und/oder Fixieren und/oder Zumhaftenbringen der Komponenten bzw. in Verfahrensschritt (c) das Agglomerat und die weiteren Komponenten durch Energieeintrag, insbesondere durch Mischen und/oder Fügen, vorzugsweise durch insbesondere alternierendes vertikales und/oder horizontales Pressen, und/oder insbesondere durch Umformen, vorzugsweise durch Druckumformen, bevorzugt durch Walzen, miteinander vermengt und/oder vermischt werden und/oder zumindest im Wesentlichen formstabil und/oder dauerhaft miteinander verbunden und/oder aneinander fixiert und/oder aneinander zum Haften gebracht werden.

Dabei dient das Pressen, z. B. mittels Pressplatten, dem groben Vermengen und/oder Vermischen einerseits sowie dem Verbinden und/oder Fixieren und/oder Zumhaftenbringen andererseits des Agglomerats und der weiteren Komponenten. Das Pressen begünstigt ein eventuell anschließendes Walzen. Durch wiederholtes Pressen und Walzen verbinden sich die Adsorberpartikel mit den Fasern zu einer dichten Gerüststruktur bzw. zu einem Geflecht. Die Agglomeratstruktur auf Basis der eingesetzten Ursprungs- bzw. Ausgangsagglomerate wird dabei zumindest im Wesentlichen vollständig aufgehoben. Mit diesem Verfahren können erfindungsgemäße Komposit-Formkörper in ihren Dicken variabel ausgewalzt werden, wobei die minimale Dicke des erhaltenen Komposit-Formkörpers ca. 1 mm beträgt.

Durch wiederholtes Erwärmen, Pressen und/oder Walzen kann der Anteil des Bindemittels in der Komponentenmasse bzw. dem Komposit-Formkörper verringert werden, insbesondere da sich das insbesondere durch das Agglomerat bereitgestellte Bindemittel auf den Arbeitsflächen bzw. den eingesetzten Walzvorrichtungen absetzen bzw. ablagern kann.

Dem Vermengen bzw. Vermischen und Verbinden bzw. Fixieren bzw. Zumhaftenbringen des Agglomerats und der weiteren Komponenten bzw. dem Verfahrensschritt (c) schließt sich vorzugsweise ein Formgebungsschritt bzw. Abkühlschritt zum Erhalt des Komposit-Formkörpers an. weiterhin kann der resultierende Komposit-Formkörper durch vorzugsweise mechanischen Energieeintrag zertrennt bzw. zerkleinert werden. In diesem Zusammenhang kann es vorgesehen sein, den resultierenden Komposit-Formkörper in mattenförmige Streifen zu zertrennen. Alternativ kann der Komposit-Formkörper, z. B. mittels eines Häckslers, so zertrennt werden, dass Bruchstücke des Komposit-Formkörpers erhalten werden. Auf deren Basis resultieren sozusagen Komposit-Formkörper auf Basis von Agglomeraten, welche neben den Adsorberpartikeln zusätzlich mit einem Fasermaterial bzw. Schmelzfasern ausgerüstet sind.

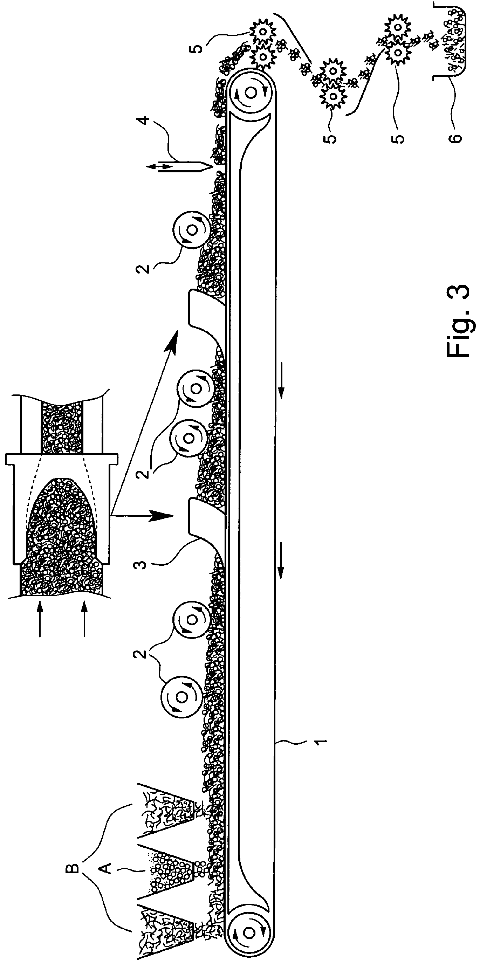

Das erfindungsgemäße Verfahren kann beispielsweise auf einem Fließband, insbesondere auf einem linearen, vorzugsweise kontinuierlich laufenden Fließband, vorzugsweise in Gegenwart von Fügungs- und/oder Umformungs- bzw. Umschichtungseinrichtungen, insbesondere vorzugsweise beheizbaren Walzvorrichtungen und/oder Umschichtungs- bzw. Einrollblechen, durchgeführt werden. Dabei kann über die Laufgeschwindigkeit des Fließbands der Energieeintrag und somit insbesondere die Größe des resultierenden Komposit-Formkörpers gesteuert werden. Eine derartige Vorrichtung, wie sie nachfolgend auch in Fig. 3 beschrieben wird, ist gleichermaßen Gegenstand der vorliegenden Erfindung.

Im Rahmen der vorliegenden Erfindung kann ein dreidimensionaler, adsorptiver faserverstärkter Komposit-Formkörper als solcher bereitgestellt werden, welcher durch das erfindungsgemäße Verfahren, wie zuvor beschrieben, erhältlich ist.

Ein weiterer Gegenstand der vorliegenden Erfindung ist - gemäß einem **zweiten** Aspekt der vorliegenden Erfindung - zudem ein dreidimensionaler, adsorptiver faserverstärkter Komposit-Formkörper, wobei der Komposit-Formkörper mindestens ein Adsorptionsmaterial in Form einer Vielzahl diskreter Adsorberpartikel einerseits und mindestens ein Fasermaterial in Form einer Vielzahl diskreter Fasern andererseits aufweist,
wobei das Adsorptionsmaterial und das Fasermaterial gleichmäßig und homogen im Komposit-Formkörper verteilt sind,
wobei die Adsorberpartikel und das Fasermaterial mittels mindestens zweier voneinander verschiedener Bindemittel formstabil und/oder dauerhaft miteinander verbunden und/oder aneinander fixiert und/oder aneinander zum Haften gebracht sind,
wobei als Bindemittel mindestens ein thermoplastisches und hitzeklebriges organisches Polymer und/oder mindestens ein thermoplastischer Schmelzklebstoff eingesetzt ist und
wobei mindestens ein Bindemittel in Form von Schmelzfasern eingesetzt ist und wobei mindestens ein weiteres, hiervon verschiedenes Bindemittel eingesetzt ist, wobei das weitere Bindemittel nicht in Form von Schmelzfasern eingesetzt ist.

Im Rahmen der vorliegenden Erfindung werden erstmalig dreidimensionale, adsorptive faserverstärkte Komposit-Formkörper bereitgestellt, die eine sich in zielgerichteter Weise ergänzende Kombination von vorteilhaften Eigenschaften besitzen, wie sie im Stand der Technik bislang nicht realisiert werden konnte. So ist es nämlich im Rahmen der vorliegenden Erfindung gelungen, dreidimensionale, adsorptive faserverstärkte Komposit-Formkörper mit hoher Formstabilität und Flexibilität insbesondere auch bei geringer Dicke des Komposit-Formkörpers, mit hervorragender Adsorptionsleistung und Partikel- bzw. Aerosolfilterfunktion sowie darüber hinaus mit guter Handhabbarkeit in Anwendung und Herstellung und mit variabler Formgebung, d. h. Erzeugung zweckgerichteter bzw. maßgeschneiderter geometrischer Formen bzw. Formkörper, bereitzustellen.

Eine grundlegende Idee der vorliegenden Erfindung ist in diesem Zusammenhang darin zu sehen, dass in einem erfindungsgemäßen Komposit-Formkörper Adsorberpartikel und Fasermaterial vorliegen, welche mittels mindestens zweier voneinander verschiedener Bindemittel miteinander verbunden bzw. aneinander fixiert bzw. aneinander zum Haften gebracht sind. Die Verbindung bzw. Fixierung bzw. Haftung mittels zweier voneinander verschiedener Bindemittel erhöht die Formstabilität signifikant, insbesondere sofern eines dieser Bindemittel bzw. ein Bindemittelteil durch Schmelzfasern bereitgestellt wird.

Insbesondere hat es sich als vorteilhaft herausgestellt, wenn mindestens ein Bindemittel in Form von Schmelzfasern, insbesondere in Form einer Vielzahl von Schmelzfasern, eingesetzt ist bzw. wenn mindestens ein weiteres, hiervon verschiedenes Bindemittel bzw. ein hiervon verschiedener Bindemittelteil eingesetzt ist, wobei das weitere Bindemittel nicht in Form von Schmelzfasern eingesetzt ist.

Erfindungsgemäß ist es vorgesehen, dass der Komposit-Formkörper ein erstes Bindemittel bzw. einen ersten Bindemittelteil und ein hiervon verschiedenes zweites Bindemittel bzw. einen hiervon verschiedenen zweiten Bindemittelteil aufweist. Dabei ist das zweite Bindemittel in Form einer Vielzahl von Schmelzfasern eingesetzt.

Der Einsatz von Schmelzfasern begünstigt einerseits einen starken Verbund bzw. eine starke Fixierung bzw. eine starke Haftung der Adsorberpartikel mit bzw. an dem Fasermaterial. Andererseits ist ein Einsatz von Schmelzfasern vorteilhaft für die Formstabilität und Flexibilität aufgrund der weiteren Faserverstärkung. Zudem führen die Schmelzfasern, wie zuvor geschildert, zu einer weiterführende Verbesserung der Partikel- bzw. Aerosolfiltereigenschaften.

In diesem Zusammenhang ist es bevorzugt, wenn die im Komposit-Formkörper vorliegenden Schmelzfasern eine Faserlänge, insbesondere eine mittlere Faserlänge, von mindestens 0,1 mm, insbesondere mindestens 0,5 mm, vorzugsweise mindestens 1 mm, bevorzugt mindestens 2 mm, aufweisen. Vorzugsweise beträgt die Faserlänge, insbesondere eine mittlere Faserlänge, der Schmelzfasern höchstens 100 mm, insbesondere höchstens 80 mm, vorzugsweise höchstens 50 mm, bevorzugt höchstens 20 mm, besonders bevorzugt höchstens 15 mm, ganz besonders bevorzugt höchstens 10 mm, noch mehr bevorzugt höchstens 5 mm. Bevorzugt weisen die Schmelzfasern eine Faserlänge, insbesondere eine mittlere Faserlänge, im Bereich von 0,1 mm bis 100 mm, insbesondere 0,5 mm bis 20 mm, vorzugsweise 1 mm bis 15 mm, bevorzugt 2 mm bis 10 mm, auf.

Insbesondere weisen die im Komposit-Formkörper vorliegenden Schmelzfasern einen Faserdurchmesser, insbesondere einen mittleren Faserdurchmesser, von mindestens 0,05 µm, insbesondere mindestens 0,2 µm, vorzugsweise mindestens 0,5 µm, bevorzugt mindestens 1 µm, auf. Bevorzugt beträgt der Faserdurchmesser, insbesondere der mittlere Faserdurchmesser, der Schmelzfasern höchstens 900 µm, insbesondere höchstens 700 µm, vorzugsweise höchstens 600 µm, bevorzugt höchstens 500 µm. Die Schmelzfasern weisen vorzugsweise einen Faserdurchmesser, insbesondere einen mittleren Faserdurchmesser, im Bereich von 0,05 µm bis 900 µm, insbesondere 0,2 µm bis 700 µm, vorzugsweise 0,5 µm bis 600 µm, bevorzugt 1 µm bis 500 µm, auf.

Grundsätzlich kann bei dem erfindungsgemäßen Komposit-Formkörper das Adsorptionsmaterial bzw. das Fasermaterial zumindest im Wesentlichen gleichmäßig und/oder zumindest im Wesentlichen homogen im Komposit-Formkörper verteilt sein und/oder vorliegen, was die Produkteigenschaften gleichermaßen verbessert, wie zuvor angeführt.

Insbesondere weist der erfindungsgemäße Komposit-Formkörper eine zumindest im Wesentlichen gleichmäßige und/oder zumindest im Wesentlichen homogene Dichte und/oder eine Dichte von mindestens 50 g/dm³, vorzugsweise mindestens 100 g/dm³, bevorzugt mindestens 200 g/dm³, und/oder von höchstens 600 g/dm³, vorzugsweise höchstens 500 g/dm³, bevorzugt höchstens 400 g/dm³, und/oder im Bereich von 100 bis 600 g/dm³, vorzugsweise von 150 bis 500 g/dm³, bevorzugt von 200 bis 400 g/dm³, auf.

Im Allgemeinen ist der Komposit-Formkörper selbsttragend, d. h. der erfindungsgemäße Komposit-Formkörper kommt ohne zusätzliche Trägerstruktur aus, was zu einer signifikanten Gewichtseinsparung und einer verbesserten Handhabung führt.

Vorzugsweise ist der Komposit-Formkörper monolithisch und/oder einstückig ausgebildet. Dabei kann es vorgesehen sein, dass der Komposit-Formkörper eine definierte bzw. zumindest im Wesentlichen regelmäßige Form aufweist. Insbesondere kann der Komposit-Formkörper nach der Erfindung mattenförmig ausgebildet sein, wobei diesbezüglich geringe Dicken realisiert werden können. Dies führt zu anwendungsspezifischen Vorteilen, beispielsweise in Hinsicht auf einen Einsatz des erfindungsgemäßen Komposit-Formkörpers in ABC-Schutzmasken oder Kombinationsfiltern.

So können die erfindungsgemäßen Komposit-Formkörper Dicken bzw. Höhen von mindestens 0,5 mm, vorzugsweise mindestens 1 mm, bevorzugt mindestens 5 mm, besonders bevorzugt mindestens 10 mm, ganz besonders bevorzugt mindestens 15 mm, aufweisen. Darüber hinaus können die erfindungsgemäßen Komposit-Formkörper Kantenlängen bzw. Durchmesser von bis zu 50 cm, insbesondere bis zu 40 cm, vorzugsweise bis zu 30 cm, aufweisen. Gleichermaßen können die Komposit-Formkörper teilchenförmig ausgebildet sein und/oder in Form von Agglomeraten vorliegen, welche beispielsweise durch Zerkleinern der Formkörper erhalten werden können. In diesem Zusammenhang können die Komposit-Formkörper in Form von einzelnen Agglomeraten eine Teilchengröße, insbesondere eine mittlere Teilchengröße, und/oder einen Teilchendurchmesser, insbesondere einen mittleren Teilchendurchmesser D50, im Bereich von 0,05 bis 50 mm, insbesondere 0,1 bis 30 mm, vorzugsweise 0,5 bis 20 mm, besonders bevorzugt 0,5 bis 10 mm, ganz besonders bevorzugt 0,75 bis 5 mm, aufweisen.

Zur Gewährleistung von guten Partikel- bzw. Aerosolfiltereigenschaften kann das Fasermaterial im Allgemeinen Fasern mit einer Faserlänge von mindestens 0,1 mm, insbesondere mindestens 0,5 mm, vorzugsweise mindestens 0,75 mm, bevorzugt mindestens 1 mm, aufweisen. Üblicherweise kann das Fasermaterial Fasern mit einer Faserlänge von höchstens 50 mm, insbesondere höchstens 30 mm, vorzugsweise höchstens 20 mm, bevorzugt höchstens 10 mm, aufweisen. Typischerweise kann das Fasermaterial Fasern mit einer Faserlänge im Bereich von 0,1 bis 50 mm, insbesondere 0,5 bis 50 mm, vorzugsweise 0,75 bis 20 mm, bevorzugt 1 bis 10 mm, aufweisen.

Zudem kann in diesem Zusammenhang das Fasermaterial Fasern mit einer mittleren Faserlänge von mindestens 0,1 mm, insbesondere mindestens 0,5 mm, vorzugsweise mindestens 1 mm, bevorzugt mindestens 2 mm, aufweisen. Üblicherweise kann das Fasermaterial Fasern mit einer mittleren Faserlänge von höchstens 20 mm, insbesondere höchstens 10 mm, vorzugsweise höchstens 7 mm, bevorzugt höchstens 5 mm, aufweisen. Weiterhin kann das Fasermaterial Fasern mit einer mittleren Faserlänge im Bereich von 0,1 bis 20 mm, insbesondere 0,5 bis 10 mm, vorzugsweise 1 bis 7 mm, bevorzugt 2 bis 5 mm, aufweisen.

Darüber hinaus können auch die mittleren Faserdurchmesser des Fasermaterials bzw. der Fasern des Fasermaterials in weiten Bereichen variieren: So kann es erfindungsgemäß vorgesehen sein, dass das Fasermaterial Fasern mit einem mittleren Faserdurchmesser von mindestens 0,4 µm, insbesondere mindestens 0,6 µm, vorzugsweise mindestens 0,8 µm, bevorzugt mindestens 1 µm, aufweist. Üblicherweise kann das Fasermaterial Fasern mit einem mittleren Faserdurchmesser von höchstens 1.000 µm, insbesondere höchstens 800 µm, vorzugsweise höchstens 600 µm, bevorzugt höchstens 500 µm, aufweisen. Weiterhin kann das Fasermaterial Fasern mit einem mittleren Faserdurchmesser im Bereich von 0,4 bis 1.000 µm, insbesondere 0,6 bis 800 µm, vorzugsweise 0,8 bis 600 µm, bevorzugt 1 bis 500 µm, aufweisen.

Zudem kommt auch der Einsatz von Fasern mit geringerem Faserdurchmesser in Betracht, wobei es sich diesbezüglich insbesondere um dem Fachmann an sich wohlbekannte Nanofasern, Meltblown-Fasern und/oder um elektrogesponnene Fasern handeln kann. Derartige Fasern sind im Allgemeinen auf Basis von Polymerwerkstoffen hergestellt und weisen mittlere Faserdurchmesser von höchstens 0,5 µm, insbesondere höchstens 0,4 µm, vorzugsweise höchstens 0,2 µm, auf. Zudem können Nanofasern mit den oben angeführten Fasern, insbesondere Mikrofasern, kombiniert werden. Erfindungsgemäß kann demnach ein gleichzeitiger Einsatz von Nanofasern und Mikrofasern vorgesehen sein.

Zur Gewährleistung einer guten Adsorptionsleistung sollten die einzelnen Komposit-Formkörper die Adsorberpartikel in Mengen von mindestens 2 Adsorberpartikeln, insbesondere mindestens 10 Adsorberpartikeln, vorzugsweise mindestens 100 Adsorberpartikeln, bevorzugt mindestens 500 Adsorberpartikeln, besonders bevorzugt mindestens 1.000 Adsorberpartikeln oder mehr, aufweisen. Die Komposit-Formkörper können die Adsorberpartikel in Mengen von bis zu 50 Adsorberpartikeln, insbesondere bis zu 500 Adsorberpartikeln, vorzugsweise bis zu 1.000 Adsorberpartikeln oder mehr, aufweisen.

Die Menge an Adsorberpartikeln in Bezug auf das Gesamtgewicht eines Komposit-Formkörpers nach der Erfindung kann in weiten Bereichen variieren: So können die einzelnen Komposit-Formkörper die Adsorberpartikel in Mengen von mindestens 1 Gew.-%, insbesondere mindestens 5 Gew.-%, vorzugsweise mindestens 10 Gew.-%, bevorzugt mindestens 15 Gew.-%, besonders bevorzugt mindestens 20 Gew.-% oder mehr, bezogen auf das Gesamtgewicht des Komposit-Formkörpers, aufweisen. Üblicherweise liegt der Anteil der Adsorberpartikel im Bereich von 1 bis 90 Gew.-%, insbesondere 5 bis 80 Gew.-%, vorzugsweise 10 bis 50 Gew.-%, bevorzugt 15 bis 35 Gew.-%, besonders bevorzugt 20 bis 30 Gew.-%, bezogen auf das Gesamtgewicht des Komposit-Formkörpers.

Zur Gewährleistung einer guten Partikel- bzw. Aerosolfilterfunktion sollten die einzelnen Komposit-Formkörper das Fasermaterial jeweils in Form von und/oder in Mengen von mindestens 5 Fasern, insbesondere mindestens 10 Fasern, vorzugsweise mindestens 100 Fasern, bevorzugt mindestens 500 Fasern, besonders bevorzugt mindestens 1.000 Fasern oder mehr, aufweisen. Die Komposit-Formkörper können das Fasermaterial jeweils in Form von und/oder in Mengen von bis zu 100 Fasern, insbesondere bis zu 500 Fasern, vorzugsweise bis zu 1.000 Fasern oder mehr, umfassen.

Die Menge an Fasermaterial in Bezug auf das Gesamtgewicht eines Komposit-Formkörpers nach der Erfindung kann in weiten Bereichen variieren: So können die einzelnen Komposit-Formkörper das Fasermaterial in Mengen von höchstens 60 Gew.-%, insbesondere höchstens 30 Gew.-%, vorzugsweise höchstens 15 Gew.-%, bezogen auf das Gesamtgewicht eines einzelnen Komposit-Formkörpers, aufweisen.

Das Mengenverhältnis und somit das Verhältnis der Anzahl der Adsorberpartikel zu der Faseranzahl des Fasermaterials kann in weiten Bereichen variieren. So können die einzelnen erfindungsgemäßen Komposit-Formkörper die Adsorberpartikel und die Fasern in einem Mengenverhältnis von Adsorberpartikeln einerseits zu Fasern andererseits von mindestens 1 : 0,5, insbesondere mindestens 1 : 1, vorzugsweise mindestens 1 : 1,5, bevorzugt mindestens 1 : 2 oder mehr und/oder im Bereich von 1 : 0,5 bis 1 : 100, insbesondere 1 : 1 bis 1 : 80, vorzugsweise 1 : 1,5 bis 1 : 60, bevorzugt 1 : 2 bis 1 : 50, aufweisen. Auch das Gewichtsverhältnis der Adsorberpartikel zu den Fasern kann in weiten Bereichen variieren. So ist es erfindungsgemäß möglich, dass die einzelnen erfindungsgemäßen Komposit-Formkörper die Adsorberpartikel und die Fasern in einem Gewichtsverhältnis von Adsorberpartikeln einerseits zu Fasern andererseits von mindestens 1 : 10, insbesondere mindestens 1 : 5, vorzugsweise mindestens 1 : 1, bevorzugt mindestens 5 : 1, besonders bevorzugt mindestens 10 : 1, ganz besonders bevorzugt mindestens 50 : 1 oder mehr, und/oder im Bereich von 1.000 : 1 bis 1 : 10, insbesondere 500 : 1 bis 1 : 5, vorzugsweise 400 : 1 bis 1 : 1, bevorzugt 300 : 1 bis 5 : 1, besonders bevorzugt 250 : 1 bis 10 : 1, ganz besonders bevorzugt 200 : 1 bis 10 : 1, aufweisen.

Im Allgemeinen kann das Mengenverhältnis bzw. das Gewichtsverhältnis der Adsorberpartikel zu den Fasern im Hinblick auf die gewünschte Funktion der erfindungsgemäßen Komposit-Formkörper ausgewählt bzw. angepasst werden. So kann es beispielsweise vorgesehen sein, dass die erfindungsgemäßen Komposit-Formkörper eine höhere Anzahl bzw. eine höhere Menge der Adsorberpartikel aufweisen, sofern die erfindungsgemäßen Komposit-Formkörper überwiegend adsorptive Eigenschaften aufweisen. Zudem können die erfindungsgemäßen Komposit-Formkörper eine vergleichsweise hohe Anzahl an Fasern bzw. Menge an Fasermaterial aufweisen, sofern die Partikel- bzw. Aerosolfiltrationseigenschaften der erfindungsgemäßen Komposit-Formkörper stärker ausgebildet sein sollen. Der Fachmann ist diesbezüglich jederzeit in der Lage, das jeweilige Mengen- bzw. Gewichtsverhältnis insbesondere vor dem Hintergrund der jeweils gewünschten Funktion auszuwählen bzw. zu optimieren.

Was die erfindungsgemäß eingesetzten Adsorberpartikel anbelangt, so können eine Vielzahl an Materialien eingesetzt werden. Insbesondere können die Adsorberpartikel ausgewählt sein aus der Gruppe von
(i) Aktivkohle, insbesondere kornförmiger Aktivkohle, vorzugsweise kugelförmiger Aktivkohle und/oder insbesondere geformter und/oder extrudierter Aktivkohle und/oder pulverförmiger Aktivkohle;
(ii) Zeolithen, insbesondere natürlichen und/oder synthetischen Zeolithen;
(iii) Molekularsieben, insbesondere zeolithischen Molekularsieben, synthetischen Molekularsieben und/oder insbesondere synthetischen Molekularsieben auf Basis von Kohlenstoff, Oxiden und/oder Gläsern;
(iv) Metalloxid- und/oder Metallpartikeln;
(v) Ionenaustauscherharzen, insbesondere polydispersen und/oder monodispersen Kationen- und/oder Anionenaustauschern, insbesondere vom Geltyp und/oder vom makroporösen Typ;
(vi) anorganischen Oxiden, insbesondere Siliciumdioxiden, Silicagelen und/oder Aluminiumoxiden;
(vii) porösen organischen Polymeren und/oder porösen organischanorganischen Hybridpolymeren;
(viii) mineralischen Granulaten;
(ix) Klathraten;
(x) metallorganischen Gerüstverbindungen (*metal-organic frameworks* bzw. MOFs); sowie
(xi) deren Mischungen und/oder Kombinationen.

Vorzugsweise können die Adsorberpartikel aus Aktivkohle, insbesondere aus kornförmiger, bevorzugt kugelförmiger Aktivkohle gebildet sein.

Die Teilchengrößen der partikulären Adsorberpartikel können in weiten Bereichen variieren. Üblicherweise weisen die Adsorberpartikel Teilchengrößen, insbesondere Teilchendurchmesser, im Bereich von 0,001 bis 3 mm, insbesondere 0,005 bis 2,5 mm, vorzugsweise 0,01 bis 2 mm, besonders bevorzugt 0,02 bis 1,5 mm, ganz besonders bevorzugt 0,05 bis 1 mm, auf.

Auch die mittleren Teilchengrößen der Adsorberpartikel können in weiten Bereichen variieren: Im Allgemeinen weisen die Adsorberpartikel mittlere Teilchengrößen, insbesondere mittlere Teilchendurchmesser (D50), im Bereich von 0,01 bis 2 mm, insbesondere 0,05 bis 1,5 mm, vorzugsweise 0,1 bis 1 mm, auf.

Zur Gewährleistung einer guten Adsorptionseffizienz ist es weiterhin von Vorteil, wenn die Adsorberpartikel eine spezifische Oberfläche (BET-Oberfläche) von mindestens 500 m²/g, insbesondere mindestens 750 m²/g, vorzugsweise mindestens 1.000 m²/g, besonders bevorzugt mindestens 1.200 m²/g, aufweisen. Üblicherweise weisen die Adsorberpartikel eine spezifische Oberfläche (BET-Oberfläche) im Bereich von 500 bis 4.000 m²/g, insbesondere 750 bis 3.000 m²/g, vorzugsweise 900 bis 2.500 m²/g, besonders bevorzugt 950 bis 2.000 m²/g, auf.

Die Bestimmung der spezifischen Oberfläche gemäß BET ist dem Fachmann grundsätzlich als solches bekannt, so dass diesbezüglich keine weitergehenden Einzelheiten ausgeführt werden müssen. Alle BET-Oberflächenangaben beziehen sich auf die Bestimmung gemäß ASTM D6556-04. Im Rahmen der vorliegenden Erfindung wird zur Bestimmung der BET-Oberfläche insbesondere die so genannte MultiPoint-BET-Bestimmungsmethode (MP-BET) in einem Partialdruckbereich p/p₀ von 0,05 bis 0,1 angewendet. In Bezug auf weitergehende Einzelheiten zur Bestimmung der BET-Oberfläche bzw. zu der BET-Methode kann auf die vorgenannte ASTM D6556-04 sowie auf Römpp Chemielexikon, 10. Auflage, Georg Thieme Verlag, Stuttgart/New York, Stichwort: "BET-Methode", einschließlich der dort referierten Literatur und auf Winnacker-Küchler (3. Auflage), Band 7, Seiten 93 ff. verwiesen werden.

Zur Gewährleistung einer guten Stabilität, insbesondere Druckstabilität, ist es von Vorteil, wenn die Adsorberpartikel einen Berstdruck von mindestens 5 Newton, insbesondere einen Berstdruck im Bereich von 5 Newton bis 50 Newton, pro Partikel aufweisen. Hierdurch resultiert eine gute mechanische Belastbarkeit. Zur Gewährleistung guter Adsorptionseffizienzen sollten die eingesetzten Adsorberpartikel weiterhin über hohe Adsorptionsvolumina, hohe Gesamtporenvolumina nach Gurvich, hohe Gesamtporositäten sowie hohe spezifische Gesamtporenvolumina verfügen.

In diesem Zusammenhang sollten die Adsorberpartikel ein Adsorptionsvolumen V_{ads} von mindestens 250 cm³/g, insbesondere mindestens 300 cm³/g, vorzugsweise mindestens 350 cm³/g, besonders bevorzugt mindestens 400 cm³/g, aufweisen. Üblicherweise können die Adsorberpartikel ein Adsorptionsvolumen V_{ads} im Bereich von 250 bis 3.000 cm³/g, insbesondere 300 bis 2.000 cm³/g, vorzugsweise 350 bis 2.500 cm³/g, aufweisen.

Bei dem Adsorptionsvolumen V_{ads} handelt es sich um eine dem Fachmann wohlbekannte Größe zur Charakterisierung der eingesetzten Adsorptionsmaterialien. Auch die diesbezüglichen Bestimmungsmethoden sind dem Fachmann an sich wohlbekannt, so dass es hierzu keinerlei weiterführender Ausführungen bedarf. Insbesondere handelt es sich bei dem Adsorptionsvolumen V_{ads} um das gewichtsbezogene adsorbierte N₂-Volumen, welches im Allgemeinen bei einem Partialdruck p/p₀ von 0,995 bestimmt wird.

Des Weiteren sollten die Adsorberpartikel ein Gesamtporenvolumen nach Gurvich von mindestens 0,50 cm³/g, insbesondere mindestens 0,55 cm³/g, vorzugsweise mindestens 0,60 cm³/g, besonders bevorzugt mindestens 0,65 cm³/g, ganz besonders bevorzugt mindestens 0,70 cm³/g, aufweisen. Üblicherweise weisen die Adsorberpartikel ein Gesamtporenvolumen nach Gurvich im Bereich von 0,50 bis 2,0 cm³/g, insbesondere 0,55 bis 1,5 cm³/g, vorzugsweise 0,60 bis 1,2 cm³/g, besonders bevorzugt 0,65 bis 1,0 cm³/g, auf.

Was die Bestimmung des Gesamtporenvolumens nach Gurvich anbelangt, so handelt es sich um eine dem Fachmann auf diesem Gebiet an sich bekannte Mess- bzw. Bestimmungsmethode. Zu weitergehenden Einzelheiten bezüglich der Bestimmung des Gesamtporenvolumens nach Gurvich kann beispielsweise verwiesen werden auf L. Gurvich (1915), J. Phys. Chem. Soc. Russ. 47, 805, sowie auf S. Lowell et al., Characterization of Porous Solids and Powders: Surface Area Pore Size and Density, Kluwer Academic Publishers, Article Technologies Series, Seiten 111 ff.

Ferner verfügen die Adsorberpartikel vorzugsweise über eine hohe Gesamtporosität. Insbesondere können die Adsorberpartikel eine Gesamtporosität im Bereich von 10 % bis 80 %, insbesondere 20 % bis 75 %, vorzugsweise 25 % bis 70 %, aufweisen.

Im Rahmen der vorliegenden Erfindung kann es vorgesehen sein, dass die Adsorberpartikel ein spezifisches Gesamtporenvolumen im Bereich von 0,01 bis 4,0 cm³/g, insbesondere 0,1 bis 3,0 cm³/g, vorzugsweise 0,2 bis 2,0 cm³/g, aufweisen. Diesbezüglich kann es beispielsweise vorgesehen sein, dass der Anteil an Poren mit Porendurchmessern ≤ 75 Å, mindestens 65 %, insbesondere mindestens 70 %, vorzugsweise mindestens 75 %, beträgt. Zudem können die Adsorberpartikel, bezogen auf das Gesamtporenvolumen, insbesondere auf das Gesamtporenvolumen nach Gurvich, einen Anteil an Mikroporen, insbesondere an Mikroporen mit Porendurchmessern von ≤ 30 Å, insbesondere ≤ 25 Å, vorzugsweise ≤ 20 Å, von mindestens 70 %, insbesondere mindestens 75 %, vorzugsweise mindestens 80 %, bevorzugt mindestens 85 %, besonders bevorzugt mindestens 90 %, aufweisen.

Des Weiteren kann es im Rahmen der vorliegenden Erfindung vorgesehen sein, dass die Adsorberpartikel mit einer basischen und/oder sauren Imprägnierung ausgerüstet sind.

Was die fakultativ vorgesehene Imprägnierung der Adsorberpartikel anbelangt, so kann diese auf Basis von Phosphorsäure, Calciumcarbonat, Trimethanolamin, 2-Amino-1,3-propandiol, Schwefel oder Kupfersalzen durchgeführt sein. In diesem Zusammenhang kann die Menge an Imprägniermittel, bezogen auf die imprägnierten Adsorberpartikel, 0,01 bis 15 Gew.-%, insbesondere 0,05 bis 12 Gew.-%, vorzugsweise 5 bis 12 Gew.-%, betragen.

Zudem können die Adsorberpartikel mit mindestens einem Katalysator ausgerüstet sein. So kann beispielsweise auf Basis einer katalytischen Ausrüstung eine Regenerierbarkeit der Adsorberpartikel gewährleistet werden.

In diesem Zusammenhang kann der Katalysator ausgewählt sein aus Enzymen und/oder Metallen, vorzugsweise Metallen, insbesondere aus der Gruppe von Kupfer, Silber, Cadmium, Platin, Palladium, Rhodium, Zink, Quecksilber, Titan, Zirkonium und/oder Aluminium, bevorzugt in Form der entsprechenden Metallionen. Diesbezüglich kann die Menge an Katalysator im Bereich von 0,05 bis 12 Gew.-%, vorzugsweise 1 bis 10 Gew.-%, besonders bevorzugt 2 bis 8 Gew.-%, bezogen auf die Adsorberpartikel, liegen.

Im Rahmen der vorliegenden Erfindung kann es vorgesehen sein, dass der erfindungsgemäße Komposit-Formkörper mindestens ein weiteres Adsorptionsmaterial aufweist. Dabei können das erste Adsorptionsmaterial und das weitere Adsorptionsmaterial mindestens eine voneinander verschiedene physikalische und/oder chemische Eigenschaft, insbesondere mindestens einen voneinander verschiedenen physikalischen und/oder chemischen Parameter, aufweisen.

Diesbezüglich kann die unterschiedliche physikalische bzw. chemische Eigenschaft, insbesondere der unterschiedliche physikalische bzw. chemische Parameter, ausgewählt sein aus der Gruppe von (i) Teilchengröße, insbesondere mittlerer Teilchengröße, und/oder Teilchendurchmesser, insbesondere mittlerer Teilchendurchmesser D50; (ii) spezifischer Oberfläche, insbesondere BET-Oberfläche; (iii) Porenvolumen, insbesondere Adsorptionsvolumen und/oder Gesamtporenvolumen; (iv) Porosität und/oder Porenverteilung, insbesondere Mikroporenvolumenanteil am Gesamtporenvolumen und/oder mittlerem Porendurchmesser; (v) Teilchenform; (vi) chemischer Natur des partikelbildenden Materials; (vii) Imprägnierung und/oder katalytischer Ausrüstung sowie (viii) Kombinationen von mindestens zwei dieser Eigenschaften.

In diesem Zusammenhang bezieht sich der Begriff "physikalische Eigenschaft" bzw. "physikalischer Parameter", wie er erfindungsgemäß verwendet wird, insbesondere auf die dreidimensionale Struktur bzw. Ausbildung der jeweiligen Adsorptionsmaterialien, wie beispielsweise insbesondere auf die Formgebung, die Teilchengröße und/oder den Teilchendurchmesser. Zudem können beispielsweise auch die Porosität der jeweiligen Adsorptionsmaterialien betreffende Eigenschaften zu den physikalischen Eigenschaften bzw. Parametern der erfindungsgemäß verwendeten Adsorptionsmaterialien gezählt werden, wie beispielsweise das Porenvolumen, die BET-Oberfläche und dergleichen. Die Begriffe "chemische Eigenschaften" bzw. "chemischer Parameter" beziehen sich dagegen insbesondere auf die chemische Natur der erfindungsgemäß eingesetzten Adsorptionsmaterialien betreffende Eigenschaften, wie beispielsweise die chemische Struktur des substanz- bzw. massebildenden Materials der eingesetzten Adsorptionsmaterialien. Im Allgemeinen sind die vorgenannten Begriffe im Rahmen der vorliegenden Erfindung jedoch nicht streng voneinander zu trennen. So kann beispielsweise die chemische Natur des substanz- bzw. massebildenden Materials einen Einfluss auf die Porosität aufweisen, was beispielsweise das Adsorptionsverhalten der eingesetzten Adsorptionsmaterialien beeinflussen kann, so dass im Ergebnis physikalische und chemische Parameter voneinander abhängen bzw. sich gegenseitig bedingen können.

Was das im Rahmen der vorliegenden Erfindung eingesetzte Fasermaterial wiederum anbelangt, so kommen diesbezüglich eine Vielzahl von Fasermaterialien in Betracht.

Üblicherweise kann das Fasermaterial ausgewählt sein aus der Gruppe von synthetischen Fasern (Chemiefasern), Naturfasern, insbesondere tierischen und/oder pflanzlichen Fasern, und Mineralfasern sowie deren Mischungen, vorzugsweise synthetischen Fasern (Chemiefasern).

Im Rahmen der vorliegenden Erfindung hat es sich als vorteilhaft erwiesen, wenn das Fasermaterial in Form von synthetischen Fasern (Chemiefasern), eingesetzt ist oder diese umfasst, insbesondere aus der Gruppe von Polyestern (PES); Polyolefinen, wie Polyethylen (PE) und Polypropylen (PP), Polyvinylchlorid (CLF); Polyvinylidenchlorid (CLF); Acetat (CA); Triacetat (CTA); Polyacryl (PAN), Polyamid (PA); Polyvinylalkohol (PVAL); Polyurethanen; Polyvinylestern; (Meth-)Acrylaten; sowie deren Mischungen.

Weiterhin kann das Fasermaterial in Form von Wollfasern, insbesondere Wollfasern tierischen und/oder pflanzlichen Ursprungs, vorzugsweise in Form von Schafswolle und/oder Baumwolle, bevorzugt Schafswolle, eingesetzt sein oder diese umfassen.

Wiederum weiterhin kann das Fasermaterial in Form von Glasfasern eingesetzt sein oder diese umfassen. Gleichermaßen kann das Fasermaterial auch in Form von Bastfasern; Fruchtfasern, insbesondere Kokosfasern; Tierhaar, insbesondere Rosshaar; Seidenfasern; Fasern aus natürlichen Polymeren, insbesondere Viskosefasern; Basaltfasern; Kohlenstofffasern; Metallfasern und/oder Keramikfasern eingesetzt sein oder diese umfassen.

Gemäß einer weiteren erfindungsgemäßen Ausführungsform kann das Fasermaterial auch in Form von Aktivkohlefasern eingesetzt sein. In diesem Zusammenhang können die Aktivkohlefasern beispielsweise erhältlich sein durch Carbonisieren und nachfolgende Aktivierung organischer Ausgangsfasern, insbesondere von Cellulosefasern, Fasern auf Basis von Cellulosederivaten, Phenolharzfasern, Polyvinylalkoholfasern, Pechfasern, Acrylharzfasern, Polyacrylnitrilfasern, aromatischen Polyamidfasern, Formaldehydharzfasern, divinylbenzolvernetzten Polystyrolfasern, Ligninfasern, Baumwollfasern und/oder Hanffasern.

Im Rahmen der vorliegenden Erfindung kann es vorgesehen sein, dass der Komposit-Formkörper mindestens ein weiteres Fasermaterial aufweist. In diesem Zusammenhang können das Fasermaterial und das weitere Fasermaterial mindestens eine voneinander verschiedene physikalische und/oder chemische Eigenschaft, insbesondere mindestens einen voneinander verschiedenen physikalischen und/oder chemischen Parameter, aufweisen.

Insbesondere kann die physikalische und/oder chemische Eigenschaft, insbesondere der physikalische und/oder chemische Parameter, ausgewählt sein aus der Gruppe von (i) Faserlänge, insbesondere mittlerer Faserlänge; (ii) Faserdurchmesser, insbesondere mittlerem Faserdurchmesser; (iii) chemischer Natur des faserbildenden Materials sowie (vi) Kombinationen von mindestens zwei dieser Eigenschaften.

Ein besonderer Vorteil des erfindungsgemäßen Komposit-Formkörpers ist zudem darin zu sehen, dass der Komposit-Formkörper nach der Erfindung einen deutlich reduzierten Druckverlust, insbesondere im Vergleich zu den jeweiligen Adsorberpartikeln als solchen, aufweist, so dass eine gute Durchströmung des adsorptiven Systems mit dem aufzureinigenden Medium, insbesondere Luft, erfolgen kann - und dies bei gleichzeitiger Bereitstellung von Partikel- und/oder Aerosolfiltereigenschaften. So kann der erfindungsgemäße Komposit-Formkörper einen längenbezogenen Druckverlust bei einer Strömungsgeschwindigkeit von 0,2 m/s von höchstens 180 Pa/cm, insbesondere höchstens 120 Pa/cm, vorzugsweise höchstens 80 Pa/cm, besonders bevorzugt höchstens 60 Pa/cm, ganz besonders bevorzugt höchstens 40 Pa/cm, noch mehr bevorzugt höchstens 30 Pa/cm, aufweisen. Üblicherweise weist der erfindungsgemäße Komposit-Formkörper einen längenbezogenen Druckverlust bei einer Strömungsgeschwindigkeit von 0,2 m/s im Bereich von 3 bis 180 Pa/cm, insbesondere 3 bis 120 Pa/cm, vorzugsweise 3 bis 80 Pa/cm, besonders bevorzugt 5 bis 60 Pa/cm, ganz besonders bevorzugt 5 bis 50 Pa/cm, auf.

Im Vergleich hierzu besitzen lose Schüttungen gleichartiger Adsorberpartikel, wie sie in den erfindungsgemäßen Komposit-Formkörpern eingesetzt werden und welche zudem keine Filterfunktion im Sinne der vorliegenden Erfindung aufweisen, in Form separater Teilchen typischerweise längenbezogene Druckverluste bei einer Strömungsgeschwindigkeit von 0,2 m/s im Bereich von 22 bis 600 Pa/cm. Das Durchströmverhalten der erfindungsgemäßen Komposit-Formkörper ist somit gegenüber dem Stand der Technik deutlich verbessert - und dies bei gleichzeitiger Gewährleistung einer zusätzlichen Partikel- und/oder Aerosolfilterfunktion.

Darüber hinaus verfügen die adsorptiven Strukturen nach der Erfindung über hervorragende Eigenschaften der Partikel- und/oder Aerosolfiltration, insbesondere wie nachfolgend angeführt:

So können die erfindungsgemäßen Komposit-Formkörper einen mittleren Wirkungsgrad Eₘ nach DIN EN 779 (Juli 1993) von mindestens 40 %, insbesondere mindestens 50 %, vorzugsweise mindestens 70 %, besonders bevorzugt mindestens 90 %, ganz besonders bevorzugt mindestens 95 %, aufweisen. Zudem können die Komposit-Formkörper einen mittleren Abscheidegrad Am nach DIN EN 779 (Juli 1993) von mindestens 50 %, insbesondere mindestens 70 %, vorzugsweise mindestens 90 %, besonders bevorzugt mindestens 95 %, ganz besonders bevorzugt mindestens 99 %, aufweisen. Weiterhin können die Komposit-Formkörper einen integralen Anfangsdurchlassgrad D; nach DIN EN 1822 (April 1998; DEHS-Aerosol, MPPS = 0,1 bis 0,3 µm) von höchstens 50 %, insbesondere höchstens 40 %, vorzugsweise höchstens 30 %, besonders bevorzugt höchstens 20 %, ganz besonders bevorzugt höchstens 10 %, aufweisen.

Der mittlere Wirkungsgrad Eₘ kann insbesondere nach DIN EN 779 (Juli 1993) bestimmt werden. Nach dieser Vorschrift wird der mittlere Abscheidegrad Am durch eine gravimetrische Prüfmethode bestimmt, wobei eine mehrmalige Bestaubung des Prüflings mit einer bekannten Menge eines standardisierten künstlichen Prüfstaubes in strömender Luft bis zum maximalen Enddruckverlust von 250 Pa erfolgt, wobei jeweils der Abscheidegrad aus den Massenverhältnissen durch Wägen eines dem Prüfling nachgeschalteten Schwebstofffilters bestimmt wird, wobei der mittlere Abscheidegrad Am, berechnet aus allen Einzelmessungen, gilt; für weitere diesbezügliche Einzelheiten kann auf die DIN EN 779 verwiesen werden. Der mittlere Wirkungsgrad Eₘ dagegen wird nach DIN 779 mittels einer Verfärbungsprüfmethode durch mehrfache Messung des Wirkungsgrades gegenüber natürlichem atmosphärischem Staub in der Luft gemessen, wobei der Prüfling nach einer ersten Messung im Neuzustand mit einer bekannten Menge von standardisierten künstlichem Prüfstaub nach DIN EN 779 beladen und danach die Bestimmung des Wirkungsgrads erneut vorgenommen wird, bis ein Enddruckverlust von 450 Pa erreicht ist, wobei die Messung des Wirkungsgrades auf dem Vergleich jener Prüfluftvolumina beruht, die vor und nach dem Prüfling durch je ein weißes Schwebstofffilterpapier gesaugt werden müssen, bis diese gleich verfärbt bzw. getrübt sind, wobei der mittlere Wirkungsgrad Eₘ, berechnet aus allen Einzelmessungen, gilt; für weitere diesbezügliche Einzelheiten kann auf DIN EN 779 verwiesen werden.

Die Prüfmethode gemäß DIN EN 1822, welche in Bezug auf die Bestimmung des integralen Anfangsdurchlassgrades Dᵢ verwendet werden kann, wird an unverschmutzten Prüflingen mit einem flüssigen Prüfaerosol (DEHS = Diethylhexylsebacat), basierend auf Messwerten für jeweils einen dem Durchlassgradmaximum entsprechenden Partikeldurchmesser (so genannter MPPS, hier: 0,1 bis 0,3 µm), durchgeführt. In einem ersten Schritt der Untersuchung wird an flachen Mustern des Filtermedium jene Partikelgröße ermittelt, bei welcher das Durchlassmaximum (MPPS) erreicht wird, wobei die nachfolgende Beurteilung und Klassierung der Filter nur noch für den MPPS erfolgt. In einem zweiten Schritt wird dann der über die Ausblasfläche ermittelte integrale Durchlassgrad Dᵢ für den MPPS und der Druckverlust des Filters, beides beim Nennvolumenstrom, gemessen. Für weitergehende diesbezügliche Einzelheiten kann auf die DIN EN 1822 verwiesen werden.

Weiterhin können die erfindungsgemäßen Komposit-Formkörper bei einer Einströmgeschwindigkeit von 0,1 m/s eine mittlere Abscheiderate gegenüber Partikeln und/oder Aerosolen mit Durchmessern im Bereich von 0,1 bis 0,3 µm von mindestens 80 %, insbesondere mindestens 90 %, vorzugsweise mindestens 97 %, aufweisen. Zudem können die erfindungsgemäßen Komposit-Formkörper bei einer Anströmgeschwindigkeit von 0,1 m/s eine mittlere Abscheiderate gegenüber Partikeln und/oder Aerosolen mit Durchmessern ≥ 2 µm, insbesondere ≥ 1,5 µm, von mindestens 95 %, insbesondere mindestens 98 %, bevorzugt mindestens 99,5 %, aufweisen.

Bei einer bevorzugten Ausführungsform des erfindungsgemäßen Komposit-Formkörpers weisen die zwei Bindemittel mindestens eine voneinander verschiedene physikalische und/oder chemische Eigenschaft, insbesondere mindestens einen voneinander verschiedenen physikalischen und/oder chemischen Parameter, auf.

Dabei kann die physikalische und/oder chemische Eigenschaft, insbesondere der physikalische und/oder chemische Parameter, ausgewählt sein aus der Gruppe von (i) chemischer Beschaffenheit; (ii) Erweichungs- oder Schmelzpunkt; (iii) Viskosität, insbesondere Viskosität der Schmelze; (iv) Haft- und/oder Klebeeigenschaften sowie (v) Kombinationen von mindestens zwei dieser Eigenschaften.

Insbesondere kann das eine Bindemittel bzw. der eine Bindemittelteil einen höheren Erweichungs- oder Schmelzpunkt, als das andere Bindemittel bzw. der andere Bindemittelteil aufweisen. Hierdurch können die Produkteigenschaften insbesondere hinsichtlich der Stabilität der Komposit-Formkörper nach der Erfindung verbessert werden.

Des Weiteren sind Gegenstand der vorliegenden Erfindung - gemäß einem **dritten** Aspekt der vorliegenden Erfindung - die Verwendungen der dreidimensionalen, adsorptiven faserverstärkten Komposit-Formkörper nach der vorliegenden Erfindung.

So können die erfindungsgemäßen Komposit-Formkörper, wie zuvor definiert, mit einem partikulären Adsorptionsmaterial, insbesondere in Form einer Vielzahl von Adsorberpartikeln, und mit einem Fasermaterial, insbesondere einer Vielzahl von Fasern, für die Adsorption von Giftstoffen, Schadstoffen und Gerüchen, insbesondere aus Gas- oder Luftströmen oder aber aus Flüssigkeiten, insbesondere Wasser, verwendet werden.

Zudem können die erfindungsgemäßen Komposit-Formkörper, wie zuvor definiert, mit einem partikulären Adsorptionsmaterial in Form einer Vielzahl von Adsorberpartikeln und mit einem Fasermaterial in Form einer Vielzahl von Fasern zur Reinigung oder Aufbereitung von Gasen, Gasströmen oder Gasgemischen, insbesondere Luft, oder von Flüssigkeiten, insbesondere Wasser, verwendet werden.

Weiterhin können die erfindungsgemäßen Komposit-Formkörper, wie zuvor definiert, mit einem partikulären Adsorptionsmaterial in Form einer Vielzahl von Adsorberpartikeln und mit einem Fasermaterial in Form einer Vielzahl von Fasern zur Verwendung in Adsorptionsfiltern und/oder zur Herstellung von Filtern, insbesondere Adsorptionsfiltern, eingesetzt werden.

Ferner können die erfindungsgemäßen Komposit-Formkörper, wie zuvor definiert, mit einem partikulären Adsorptionsmaterial in Form einer Vielzahl von Adsorberpartikeln und mit einem Fasermaterial in Form einer Vielzahl von Fasern als Sorptionsspeicher für Gase, insbesondere Wasserstoff, verwendet werden.

Der Komposit-Formkörper, wie zuvor definiert, kann Verwendung finden für ein Filter, welches den dreidimensionalen, adsorptiven faserverstärkten Komposit-Formkörper, wie zuvor definiert, mit einem partikulären Adsorptionsmaterial, insbesondere in Form einer Vielzahl von Adsorberpartikeln, und mit einem Fasermaterial, insbesondere einer Vielzahl von Fasern, umfasst, wobei das Filter einen längenbezogenen Druckverlust bei einer Strömungsgeschwindigkeit von 0,2 m/s von höchstens 180 Pa/cm, insbesondere im Bereich von 3 bis 180 Pa/cm, aufweist.

In diesem Zusammenhang sollte das Filter nach der Erfindung einen längenbezogenen Druckverlust bei einer Strömungsgeschwindigkeit von 0,2 m/s von höchstens 130 Pa/cm, vorzugsweise höchstens 80 Pa/cm, besonders bevorzugt höchstens 80 Pa/cm, ganz besonders bevorzugt höchstens 60 Pa/cm, noch mehr bevorzugt höchstens 40 Pa/cm, aufweisen. Typischerweise sollte das Filter nach der Erfindung einen längenbezogenen Druckverlust bei einer Strömungsgeschwindigkeit von 0,2 m/s im Bereich von 3 bis 130 Pa/cm, vorzugsweise 3 bis 80 Pa/cm, besonders bevorzugt 5 bis 70 Pa/cm, ganz besonders bevorzugt 8 bis 60 Pa/cm, aufweisen.

Für weitergehende Einzelheiten zu dem erfindungsgemäßen Filter kann auf die obigen Ausführungen zu den übrigen Erfindungsaspekten sowie auf nachfolgende Ausführungen verwiesen werden, welche in Bezug auf diesen erfindungsgemäßen Aspekt entsprechend gelten.

Weitere vorteilhafte Eigenschaften, Aspekte und Merkmale der vorliegenden Erfindung ergeben sich aus der folgenden Beschreibung von in den Figuren dargestellten Ausführungsbeispielen. Es zeigt:
Fig. 1a eine Schemadarstellung des Ablaufes des erfindungsgemäßen Verfahrens gemäß einer ersten Ausführungsform der vorliegenden Erfindung zur Herstellung der erfindungsgemäßen Komposit-Formkörper;
Fig. 1b eine Schemadarstellung des erfindungsgemäßen Verfahrens zur Herstellung der adsorptiven Systeme nach der Erfindung gemäß einer zweiten Ausführungsform;
Fig. 2a eine Schemadarstellung des erfindungsgemäßen Verfahrens zur Herstellung der adsorptiven Systeme nach der Erfindung gemäß einer vierten Ausführungsform;
Fig. 2b eine Schemadarstellung des erfindungsgemäßen Verfahrens zur Herstellung der adsorptiven Systeme nach der Erfindung gemäß einer fünften Ausführungsform;
Fig. 3 eine schematische Seitenansicht einer beispielhaften Vorrichtung zur industriellen Herstellung der erfindungsgemäßen Komposit-Formkörper nach dem erfindungsgemäßen Verfahren.

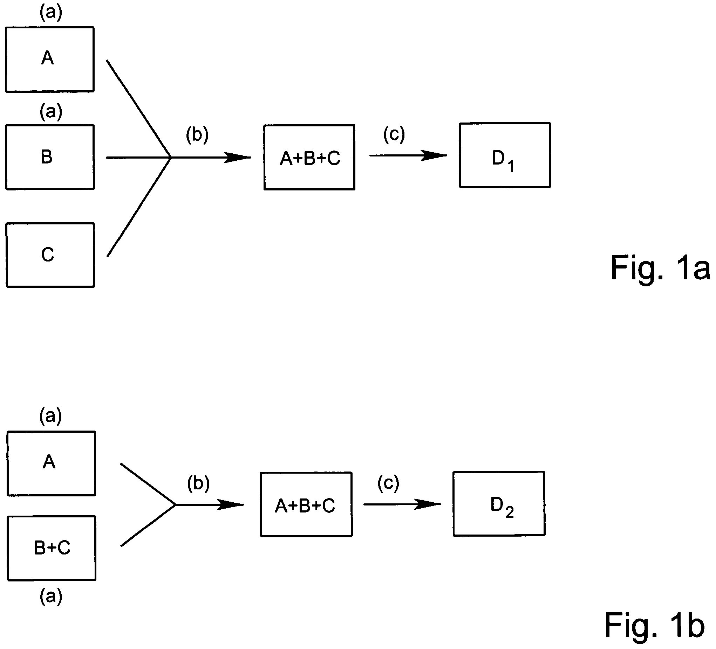

Fig. 1a zeigt schematisch einen beispielhaften Ablauf des erfindungsgemäßen Verfahrens gemäß einer ersten Ausführungsform. Bei dieser Ausführungsform werden gemäß Verfahrensschritt (a) zunächst ein Agglomerat A mit einer Vielzahl diskreter Adsorberpartikel und einem Bindemittel einerseits und ein Fasermaterial B in Form einer Vielzahl diskreter Fasern andererseits bereitgestellt. Außerdem wird ein Bindemittel C in Form von Schmelzfasern eingesetzt.

Die beiden bereitgestellten Komponenten A, B werden anschließend gemäß Verfahrensschritt (b) unter Verwendung des Bindemittels C zusammengeführt und/oder in Kontakt gebracht. Daraus resultiert ein Zwischenprodukt, welches das Agglomerat A, das Fasermaterial B und das Bindemittel C umfasst.

Schließlich werden gemäß Verfahrensschritt (c) die Adsorberpartikel und die Fasern homogen und/oder gleichmäßig vermengt und/oder vermischt und formstabil und/oder dauerhaft miteinander verbunden und/oder aneinander fixiert und/oder aneinander zum Haften gebracht, so dass ein dreidimensionaler, adsorptiver faserverstärkter Komposit-Formkörper D₁ resultiert.

Dabei kann derart verfahren werden, dass das Agglomerat vor Inkontaktbringen mit den Komponenten B und C erwärmt wird und/oder dass die resultierende Mischung aus A, B und C erwärmt wird.

Fig. 1b zeigt schematisch einen zweiten möglichen Ablauf des erfindungsgemäßen Verfahrens. Bei dieser Ausführungsform werden zunächst ein Agglomerat A mit einer Vielzahl diskreter Adsorberpartikel und einem Bindemittel sowie eine Mischung aus dem Fasermaterial B in Form einer Vielzahl diskreter Fasern einerseits mit einer Vielzahl von Schmelzfasern, die das Bindemittel C bilden, andererseits bereitgestellt.

Das Agglomerat A und das Fasermaterial B mit den Schmelzfasern werden anschließend zusammengeführt und/oder in Kontakt gebracht. Daraus resultiert ein Zwischenprodukt, welches das Agglomerat A, das Fasermaterial B und das Bindemittel C umfasst.

Schließlich werden die Adsorberpartikel und die Fasern homogen bzw. gleichmäßig vermengt bzw. vermischt und formstabil bzw. dauerhaft miteinander verbunden bzw. aneinander fixiert, so dass ein dreidimensionaler, adsorptiver faserverstärkter Komposit-Formkörper D₂ resultiert.

Auch gemäß diesem Ausführungsbeispiel kann es vorgesehen sein, zunächst das Agglomerat A alleine zu erwärmen. Gleichermaßen kann eine Erwärmung der Mischung durchgeführt werden.

Gemäß den in Fig. 1a und Fig. 1b dargestellten Ausführungsbeispielen umfasst das Agglomerat A ein weiteres Bindemittel bzw. einen Teil des erfindungsgemäß eingesetzten Bindemittels.

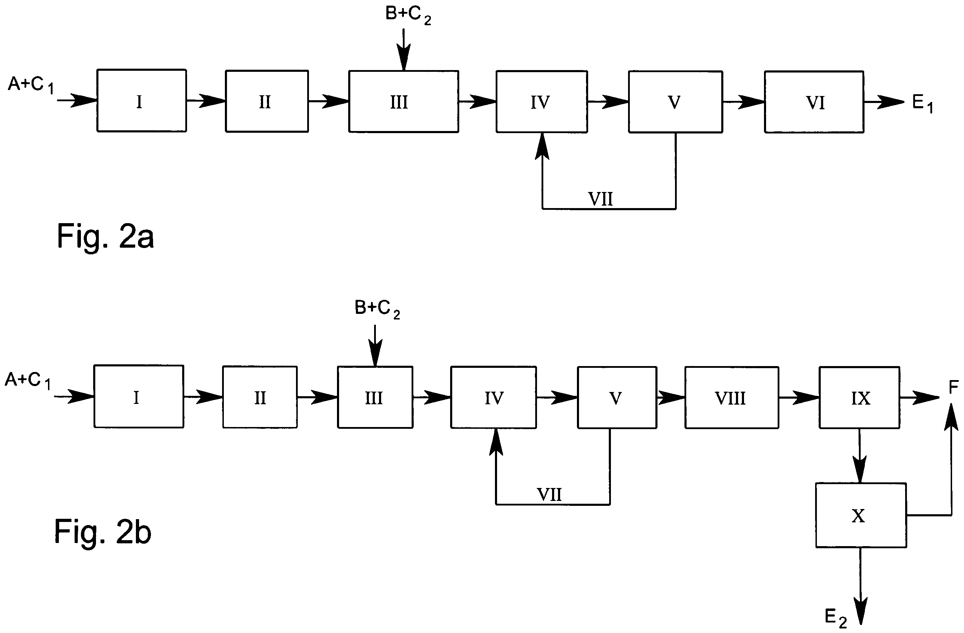

Fig. 2a und 2b werden anhand der nachfolgenden Ausführungsbeispiele erläutert. Auch diese Ausführungsbeispiele sollen die vorliegende Erfindung jedoch keinesfalls beschränken.

Fig. 3 zeigt eine schematische Seitenansicht einer beispielhaften Vorrichtung zur Herstellung von erfindungsgemäßen Komposit-Formkörpern in Form von Aktivkohle/Faser-Agglomeraten auf Basis des erfindungsgemäßen Verfahrens. So kann das erfindungsgemäße Verfahren auch auf einem Fließband 1, insbesondere auf einem linearen, vorzugsweise kontinuierlich laufenden Fließband 1, vorzugsweise in Gegenwart von insbesondere feststehenden Fügungs- und/oder Umformungs- bzw. Umschichtungseinrichtungen, insbesondere Walzvorrichtungen 2 und/oder Umschichtungs- bzw. Einrollblechen 3, durchgeführt werden. Insbesondere kann über die Laufgeschwindigkeit des Fließbands der Energieeintrag und somit die Produkteigenschaften des resultierenden Komposit-Formkörpers gesteuert werden, beispielsweise im Hinblick auf den Grad der Vermischung, die Dichte etc.

In diesem Zusammenhang kann es auch vorgesehen sein, dass das ausgewalzte Komposit mittels eines Schneidmessers 4 zertrennt und anschließend mittels eines mehrstufigen Häckslers, der durch eine Vielzahl von paarweise gegenüberliegenden Zahnrädern 5 gebildet wird, zerkleinert wird. Die resultierenden Komposit-Formkörper auf Basis von neu gebildeten Aktivkohle/Faser-Agglomeraten können dann in einem Behälter 6 aufgefangen bzw. gesammelt werden.

Zusammenfassend wird erfindungsgemäß ein Verfahren zur Herstellung von Komposit-Formkörpern mit Adsorberpartikel einerseits und einem Fasermaterial andererseits bereitgestellt, wobei es sich bei den eingesetzten Adsorberpartikeln insbesondere um so genannte PBSAC-Adsorbentien (*polymerbased-spherical activated carbon*) handeln kann, wobei das Adsorptionsmaterial im Rahmen des erfindungsgemäßen Verfahrens in Form von (Ausgangs-)Agglomeraten eingesetzt wird, bei denen die Adsorberpartikel an einem den Kern eines jeweiligen Agglomeratteilchens bildenden Bindemittel fixiert sind. Dementsprechend kann es sich bei den resultierenden Komposit-Formkörpern nach der Erfindung gleichermaßen um PBSAC/Faser-Komposite handeln, welche beispielsweise im Hinblick auf die erfindungsgemäß realisierbare freie Formgebung der resultierenden Körper in Form von monolithischen Komposit-Formkörpern mit nahezu beliebiger Form bzw. Gestalt vorliegen können.

Die in die Komposit-Formkörper nach der Erfindung eingebrachten Fasern - und zwar sowohl auf Basis des verwendeten Fasermaterials sowie der Verwendung eines zusätzlichen Bindemittels insbesondere in Form von Schmelzfasern - stabilisieren die resultierenden Adsorberbetten in Form der erfindungsgemäßen Komposit-Formkörper und somit die gesamte Filterstruktur, wobei es diesbezüglich auch möglich ist, erfindungsgemäße Komposit-Formkörper mit geringer Dicke und/oder maßgeschneiderter (Filter-)Struktur bereitzustellen. Zudem führen die in die Komposit-Formkörper nach der Erfindung eingebrachten bzw. die in den Komposit-Formkörpern vorhandenen Fasern - in Ergänzung zu den Adsorptionseigenschaften - zu Partikel- bzw. Aerosolfiltereigenschaften der resultierenden Formkörper. Somit ist es auf Basis der erfindungsgemäßen Konzeption möglich, spezifische Partikel- bzw. Aerosolfiltereigenschaften mit adsorptiven Eigenschaften in einem Material bzw. Adsorberbett zu realisieren.

Die in die erfindungsgemäßen Komposit-Formkörper eingebrachten bzw. integrierten Fasern sind dabei für eine Vielzahl von Anwendungen von Vorteil: So können insbesondere Partikel- bzw. Aerosolfiltereigenschaften einerseits und adsorptive Eigenschaften andererseits in einem Filtermaterial bzw. Adsorberbett kombiniert werden, was den Aufbau und Wartung von Filteranlagen oder dergleichen signifikant vereinfachen kann. Gleichermaßen können Formkörper bzw. Adsorberbetten mit geringer bzw. einstellbarer Dichte realisiert werden, wobei die eingesetzten Fasern gewissermaßen nach Art eines Platzhalters bzw. Spacers fungieren und auf dieser Basis eine Einstellung bzw. Regulation der (Material-)Dichte möglich ist. Gleichermaßen ist auch die erhöhte Stabilität und Flexibilität der auf Basis des erfindungsgemäßen Verfahrens erhaltenen Komposit-Formkörper nach der Erfindung für eine Vielzahl von Anwendungen von großem Vorteil.

Im Rahmen der vorliegenden Erfindung ist es somit möglich, auf Basis einer Kombination von Adsorberpartikeln, beispielsweise in Form von PBSAC-Adsorbentien, welche in Form von Agglomeraten eingesetzt werden, unter zusätzlicher Verwendung verschiedener Fasermaterialien entsprechende Komposite bereitzustellen, welche neben den hervorragenden Adsorptionseigenschaften auf Basis der eingesetzten Adsorberpartikel, insbesondere in Form von PBSAC-Adsorbern, auch Partikel- bzw. Aerosolfiltereigenschaften aufweisen, welche insbesondere durch die Fasern in Form des Fasermaterials und der Schmelzfasern bereitgestellt werden. Zudem wird durch den gezielten Einsatz von Fasern die Stabilität und Flexibilität der resultierenden Komposite erhöht.

Im Rahmen der erfindungsgemäßen Verfahrensführung kann beispielsweise und in nicht beschränkender Weise derart vorgegangen werden, dass in einem ersten Schritt die dem resultierenden Komposit-Formkörper zugrundeliegenden Komponenten auf Basis von Agglomeraten einerseits und Fasern, insbesondere Fasermaterial bzw. Schmelzfasern, jeweils in entsprechenden Mengen zur Einstellung eines definierten Verhältnisses der Komponenten in dem resultierenden Komposit-Formkörper zunächst abgewogen werden. Anschließend kann eine Mischung der Komponenten mit nachfolgendem Aufheizen bzw. Erwärmen der Mischung insbesondere auf Temperaturen oberhalb des Erweichungspunkts des insbesondere durch die Schmelzfasern bereitgestellten Bindemittels bzw. des durch die Agglomerate bereitgestellten Bindemittels erfolgen. Alternativ kann auch ein separates bzw. alleiniges Aufheizen der Agglomerate erfolgen, insbesondere für den Fall, dass die Erweichungstemperatur des durch die Agglomerate bereitgestellten Bindemittels oberhalb des Erweichungspunkts bzw. des Schmelzpunkts des in Form von Schmelzfasern bereitgestellten Bindemittels liegt. In diesem Fall ist es bevorzugt, dass die Vermischung der Komponenten nach Abkühlung der Agglomerate auf Temperaturen unterhalb des Schmelzpunkts bzw. oberhalb des Erweichungspunkts der eingesetzten Schmelzfasern erfolgt.

Das Zusammenführen bzw. Vermischen der Komponenten kann insbesondere durch mechanischen Energieeintrag erfolgen. Insbesondere können die Komponenten zunächst z. B. durch aufeinander anzuordnende Schichten insbesondere auf Basis einer ersten Faserschicht, welche in vorteilhafter Weise das Fasermaterial sowie die Schmelzfasern in Form einer Mischung enthält, sowie einer darauf ausgebrachten Agglomeratschicht, gegebenenfalls gefolgt von einer weiteren Faserschicht auf Basis der Mischung des Fasermaterials einerseits und der Schmelzfasern andererseits, in Kontakt gebracht werden. Nachfolgend kann eine Vermischung durch einen mechanischen Energieeintrag erfolgen. In diesem Zusammenhang kann das Vermischen beispielsweise durch ein Zusammenfügen der Komponenten unter Einsatz von Fügevorrichtungen, wie Pressplatten, erfolgen, wobei diesbezüglich zunächst insbesondere eine grobe Vermischung bzw. Verbindung der Komponenten erfolgt.

Dabei können die Pressplatten paarweise eingesetzt werden, wobei der Pressvorgang derart durchgeführt werden kann, dass das Schichtsystem der zugrundeliegenden Komponenten zwischen den insbesondere paarweise angeordneten Fügevorrichtungen, insbesondere in Form der paarweise angeordneten Pressplatten, angeordnet wird. Anschließend können die Pressplatten aufeinander zubewegt und die Komponenten auf diese Weise verpresst werden. Nachfolgend kann die so bearbeitete Komponentenmischung neu positioniert werden insofern, als die Komponentenmischung mit den durch den vorangehenden Füge- bzw. Pressvorgang erhaltenen neuen und sich gegenüberliegenden Schmalseiten zu den Pressplatten angeordnet werden. Es kann sich ein weiteres Zusammenführen der Pressplatten, einhergehend mit einem erneuten Füge- bzw. Pressvorgang vorgenommen werden. Dieser Vorgang mit dem abwechselnden Positionieren und Zusammenführen der Pressplatten kann mehrmals wiederholt werden. Anschließend kann der so bearbeitete Körper, welcher die Adsorberpartikel sowie die in Rede stehenden Fasern enthält, mittels einer Walzvorrichtung ausgerollt und nachfolgend zusammengeklappt werden, wobei sich auch dieser Vorgang mehrfach wiederholen kann, was zu einer homogenen Mischung der zugrundeliegenden Komponenten führt.

Bei den vorgenannten Verfahrensschritten sollte dabei derart vorgegangen werden, dass die Temperatur des zu bearbeitenden Körpers bzw. der Komponentenmischung insbesondere auf Werte oberhalb der Erweichungstemperatur bzw. des Erweichungspunkts der Schmelzfasern und/oder des durch die Agglomerate bereitgestellten Bindemittels, insbesondere oberhalb des Erweichungspunkts der Schmelzfasern und unterhalb der jeweiligen Schmelzpunkte der in Rede stehenden Komponenten liegt. Dies kann durch ein kontrolliertes Abkühlen aber auch durch einen weiteren thermischen Energieeintrag erfolgen. Im Rahmen der vorgenannten Verfahrensschritte erfolgt insbesondere eine zumindest im Wesentlichen vollständige Auflösung der Agglomeratstruktur im entstehenden Formkörper, einhergehend mit einer Verklebung der Komponenten untereinander - insbesondere im Hinblick auf die Adsorberpartikel einerseits und das Fasermaterial andererseits, wobei als diesbezügliches Bindemittel die Schmelzfasern und/oder das durch die Agglomerate bereitgestellte Bindemittel fungieren. Die so erhaltenen Komposit-Formkörper können abschließend entweder zum Erhalt entsprechender Komposit-Formkörper auf eine gewünschte Dicke bzw. Form ausgewalzt bzw. verarbeitet werden. Gleichermaßen ist insbesondere nach Abkühlung der erhaltenen Formkörper eine Zerkleinerung, gegebenenfalls gefolgt von einem Absieben, möglich, um auf diese Weise neue Agglomerate zu erhalten, welche neben den diskreten Adsorberpartikeln noch das eingesetzte Fasermaterial bzw. das Bindemittel, insbesondere in Form von Schmelzfasern enthalten.

Im Hinblick auf die technische Umsetzung zur Herstellung der erfindungsgemäßen Komposit-Formkörper kann zur homogenen Vermischung der Komponenten mit entsprechenden Vorrichtungen gearbeitet werden, beispielsweise mit insbesondere teflonbeschichteten Pressplatten, Walzvorrichtungen, insbesondere aus Edelstahl, sowie Heizvorrichtungen und Zerkleinerungsvorrichtungen. Zudem können, sofern der Komposit-Formkörper zur Gewinnung von mit dem Fasermaterial ausgerüsteten Agglomeraten bzw. Aktivkohle/Faser-Agglomeraten zerkleinert wird, zur Klassierung entsprechende Siebvorrichtungen mit variabler Maschengröße eingesetzt werden. In diesem Zusammenhang dienen die zuvor angeführten Pressplatten insbesondere der groben Vermischung von erwärmter Agglomeratmasse einerseits und den eingesetzten Fasern, insbesondere auf Basis des Fasermaterials sowie der Schmelzfasern, andererseits. Infolge der Verwendung der zuvor angeführten Pressplatten mit dem groben Vormischen der Komponenten ist zudem ein nachfolgender Einsatz von Walzvorrichtungen für die gleichmäßige Verteilung bzw. zur· Ausbildung einer homogenen Verteilung der Fasern im Gemisch optimiert.

In diesem Zusammenhang erleichtert die vorherige Vermischung mittels der Pressplatten das nachfolgende Auswalzen der so erhaltenen Masse unter Verwendung der Walzvorrichtung. Die gegebenenfalls einzusetzende Heizvorrichtung ermöglicht zudem eine längere Bearbeitung der erhaltenen Masse. Zur Herstellung der erfindungsgemäßen Komposit-Formkörper kann in diesem Zusammenhang beispielsweise derart verfahren werden, dass zunächst eine lediglich grobe Vermischung der erwärmten Komponenten durchgeführt wird. Diese lediglich grob eingestellte Vermischung mit einer weniger homogenen bzw. unregelmäßigen Verteilung der Komponenten kann dann beispielsweise plattenförmig ausgebracht werden, wobei die resultierende Platte beispielsweise eine Dicke von 1 cm oder mehr aufweisen kann. Die so ausgebrachte Masse kann nach Abkühlen beispielsweise mit der zuvor beschriebenen Zerkleinerungsvorrichtung bzw. dem Zahnradhäcksler zerkleinert werden, um auf diese Weise auf Basis des erfindungsgemäßen Komposit-Formkörpers neue Agglomerate mit zusätzlichem Faseranteil in Form von Aktivkohle/Faser-Agglomeraten zu erhalten.

Gleichermaßen ist es erfindungsgemäß möglich, den Vermischungsvorgang derart auszuführen, dass eine besonders gleichmäßige bzw. homogene Verteilung der Komponenten erreicht wird, was beispielsweise durch wiederholtes Auswalzen mittels der Walzvorrichtung und Zusammenklappen bzw. Aufeinanderlagerung der ausgewalzten Masse auf Basis, der zusammengeführten Komponenten mit sich wiederum anschließenden Walzen erfolgen kann. Ohne sich auf diese Theorie beschränken oder festlegen zu wollen, verbinden sich dabei die Fasern auf Basis des Fasermaterials bzw. der Schmelzfasern mit den jeweiligen Adsorberpartikel, wobei diesbezüglich die ursprüngliche Agglomeratstruktur zumindest im Wesentlichen komplett aufgehoben wird. Durch einen sich wiederholenden Prozess aus Aufheizen, Ausrollen bzw.

Auswalzen und Zusammenklappen der entsprechenden Masse kann diese zudem zunehmend und in kontrollierter Weise an Bindemittel verlieren, insbesondere im Hinblick auf das durch die Agglomerate bereitgestellte Bindemittel, wobei sich das Bindemittel beispielsweise auf den zur Vermischung der Komponenten eingesetzten Vorrichtungen absetzen bzw. ablagern kann.

Insbesondere aufgrund der hohen Homogenität der resultierenden Mischung kann diese zum Erhalt der erfindungsgemäßen Komposit-Formkörper mattenartig und mit variabler Dicke ausgewalzt werden, wobei diesbezüglich minimale Dicken von etwa 1 mm realisierbar sind.

Die der Erfindung zugrundeliegenden Vorteile können in nicht beschränkender Weise wie folgt zusammengefasst werden:
- Die Komposit-Formkörper nach der Erfindung weisen in Kombination adsorptive Eigenschaften sowie Partikel- bzw. Aerosolfiltereigenschaften in ein und demselben Material auf, was das Anwendungsspektrum grundlegend erweitert.
- Aufgrund der speziellen Verfahrensführung können die erhaltenen Komposit-Formkörper nach der Erfindung sowohl hinsichtlich ihrer Formgebung als auch ihrer Filtereigenschaften individuell eingestellt bzw. maßgeschneidert werden: So können beispielsweise Komposit-Formkörper mit geringer Dicke zum Erhalt mattenförmiger Strukturen hergestellt werden. Durch die gezielte Einstellung der Verfahrensparameter bzw. der Verfahrensdurchführung, insbesondere im Hinblick auf die eingesetzte Faserart, den Faseranteil, die Verarbeitungszeit bzw. -temperatur können die den Komposit-Formkörpern nach der Erfindung zugrundeliegenden Eigenschaften entsprechend eingestellt bzw. maßgeschneidert werden. In diesem Zusammenhang ist auch die Herstellung von Komposit-Formkörpern mit variabler bzw. einstellbarer Dichte möglich, um auf diese Weise beispielsweise die Partikel- bzw. Aerosolfiltereigenschaften gezielt einzustellen.
- Die Komposit-Formkörper nach der Erfindung stellen gewissermaßen frei formbare monolithische Strukturen dar, wobei in diesem Zusammenhang der zweckgerichtete Einsatz eines Fasermaterials, insbesondere in Kombination mit Schmelzfasern, die Stabilität des erhaltenen Komposit-Formkörpers signifikant erhöht.
- In diesem Zusammenhang wird durch den gezielten Einsatz des Fasermaterials, insbesondere in Verbindung mit den Schmelzfasern, die Flexibilität des erhaltenen Komposit-Formkörpers nach der Erfindung erhöht.
- Als Grundlage für die Herstellung der erfindungsgemäßen Komposit-Formkörper können marktübliche Agglomerate bzw. Komponenten, insbesondere wie zuvor beschrieben, eingesetzt werden, was das Herstellungsverfahren weiter vereinfacht und diesbezügliche Kosten minimiert.
- Aufgrund der erfindungsgemäßen Konzeption ist es möglich, Komposit-Formkörper mit einem hohen (Schmelz-)Faseranteil bereitzustellen, welcher beispielsweise mehr als 5 Gew.-%, bezogen auf das Gesamtgewicht des Komposit-Formkörpers, betragen kann. Dies führt zu einer hohen Stabilität und Flexibilität des resultierenden Komposit-Formkörpers.
- In diesem Zusammenhang können zudem sehr hohe Anteile des Fasermaterials realisiert werden. Beispielsweise kann die Menge an Fasermaterial, bezogen auf das Gesamtgewicht des Komposit-Formkörpers, 10 Gew.-% oder mehr betragen. Gleichermaßen können Fasern mit variabler Länge eingesetzt werden, beispielsweise mit einer Länge von etwa 10 mm.
- Zudem liegen bei der Verarbeitung der Komponenten im Rahmen des erfindungsgemäßen Verfahrens, wie zuvor angeführt, nur geringe Einsatz- bzw. Ausbeuteverluste vor.
- Gleichermaßen kann durch Variation des mechanischen Energieeintrags der Mischungs- bzw. Homogenitätsgrad der resultierenden Komposit-Formkörper individuell eingestellt bzw. maßgeschneidert werden, beispielsweise auf Basis einer Variation der durchzuführenden Fügungs- bzw. Vermischungsschritte. Erfindungsgemäß ist jedoch insbesondere zur Gewährleistung einer optimalen Stabilität bzw. Flexibilität sowie optimierter Partikel- bzw. Aerosolfiltereigenschaft einerseits und adsorptiver Eigenschaften andererseits eine möglichst homogene Verteilung der Komponenten von Vorteil.
- Im Rahmen des erfindungsgemäßen Verfahrens kann die Menge an Bindemittel in dem resultierenden Komposit-Formkörper dahingehend optimiert werden, dass insbesondere während des Vermischungsvorgangs gegebenenfalls überschüssiges Bindemittel abgetrennt werden kann, insbesondere insofern, als überschüssiges Bindemittel an den Flächen der zur Verarbeitung bzw. zum Vermischen der Komponenten eingesetzten Vorrichtungen haften bleibt und somit dem Komponentengemisch entzogen werden kann.

Weitere Ausgestaltungen, Abwandlungen und Variationen der vorliegenden Erfindung sind für den Fachmann beim Lesen der Beschreibung ohne weiteres erkennbar und realisierbar, ohne dass er dabei den Rahmen der vorliegenden Erfindung verlässt.

### AUSFÜHRUNGSBEISPIELE:

### 1. Herstellung erfindungsgemäßer Komposit-Formkörper sowie daraus erhältlicher Aktivkohle/Faser-Agglomerate

Nachfolgend wird die Herstellung erfindungsgemäßer dreidimensionaler, adsorptiver faserverstärkter Komposit-Formkörper als monolithische Aktivkohle/Faser-Matten E₁ und Aktivkohle-Faser-Agglomerate E₂ beschrieben.

Zur Herstellung der erfindungsgemäßen Komposit-Formkörper wurden einerseits (Ausgangs-)Agglomerate A mit einer Vielzahl diskreter Adsorberpartikel auf Basis von Aktivkohle sowie einem im Agglomerat enthaltenen ersten Bindemittel C₁ und andererseits eine Mischung aus diskreten Glasfasern B und einem zweiten Bindemittel C₂ in Form von Schmelzfasern verwendet.

Im Rahmen der Herstellung wurden folgende Apparaturen bzw. Vorrichtungen eingesetzt: Pressplatten aus Teflon (1 Paar), Stahlwalze Heizplatte, Trockenschrank.

### a) Erfindungsgemäße Aktivkohle/Faser-Matten E₁

Bei der Herstellung der erfindungsgemäßen Aktivkohle/Faser-Matten E₁ wurde derart vorgegangen, dass zunächst 100 g eines Agglomerats A mit jeweils einer Vielzahl diskreter Adsorberpartikel auf Basis von Aktivkohle pro Agglomeratteilchen bereitgestellt wurde. Die diskreten, kugelförmigen Adsorberpartikel waren dabei mittels eines thermoplastischen Schmelzklebstoffes als erstes Bindemittel C₁ miteinander verbunden. Die eingesetzten Agglomerate enthielten ein partikuläres Adsorptionsmaterial mit einem Gesamtporenvolumen V₍ₜₒₜ₎ von 0,63 cm³/g, mit einer spezifischen Oberfläche A_{(BET)} von 1.350 m²/g und mit einer mittleren Partikelgröße von etwa 0,5 mm. Bei dem Adsorptionsmaterial handelte es sich um eine von der Blücher GmbH, Erkrath, Deutschland, oder von der Adsor-Tech GmbH, Premnitz, Deutschland, vertriebene Aktivkohle.

Darüber hinaus wurde eine Mischung aus Glasfasern B und Schmelzfasern, die das zweite Bindemittel C₂ bilden, bereitgestellt. Die Fasermischung aus Glasfasern B und Schmelzfasern wurde zuvor durch Mischung der Glasfasern B mit den Schmelzfasern auf Basis einer wässrigen Dispersion hergestellt. Die Mischung erfolgte derart, dass eine zumindest im Wesentlichen homogene Mischung der zugrundeliegenden Fasern vorlag. Zuvor wurden die Glasfasern B und die Schmelzfasern auf eine Länge von ca. 1 bis 2 cm gekürzt. Dabei wurden Schmelzfasern mit der Bezeichnung Grilon^{®} Typ KE 150, erhältlich von der Firma EMS-Chemie GmbH & Co. KG, Neumünster, Deutschland, eingesetzt. Das Gesamtgewicht der eingesetzten Glasfasern B betrug 5 g. Das Gesamtgewicht der eingesetzten Schmelzfasern lag bei 0,25 g.

In einem weiteren Schritt wurde das Agglomerat A mit dem ersten Bindemittel C₁ in einem Trockenschrank mittels einer Heizplatte auf eine Zieltemperatur von T = 190 °C erwärmt (Schritt I in Fig. 2a). Die Haltezeiten nach Erreichen der Zieltemperatur betrug t = 65 min. Durch das Erwärmen des Agglomerats A mit dem ersten Bindemittels C₁ auf eine Temperatur oberhalb der Erweichungstemperatur des Schmelzklebstoffes C₁ verringerte sich die Viskosität des Schmelzklebstoffes C₁, was zu einem Austreten des Schmelzklebstoffs C₁ aus dem Agglomerat A führte. Anschließend wurde das Agglomerat A auf einer Arbeitsplatte angeordnet und auf Verarbeitungstemperatur abgekühlt (Schritt II in Fig. 2a). Durch das Abkühlen des Agglomerats A erhöht sich die Viskosität des Schmelzklebstoffs C₁. Dennoch wird der Schmelzklebstoff C₁ nicht vollständig - wie es ohne eine starke Aufheizphase dagegen der Fall wäre - von den Adsorberpartikeln abgeschirmt und behält zudem eine bestimmte Restklebrigkeit.

Die Hälfte der Menge der Fasermischung B+C₂ wurde zudem flächig mit möglichst konstanter Dicke der resultierenden Schicht und somit möglichst gleichmäßig auf einer Arbeitsplatte ausgebracht. Anschließend wurde das auf Verarbeitungstemperatur befindliche Agglomerat A flächig mit möglichst konstanter Dicke der resultierenden Agglomeratschicht und somit möglichst gleichmäßig auf das verteilte Fasergemisch B+C₂ aufgebracht. Das Agglomerat A bedeckte somit das zuvor ausgetragene Fasergemisch B+C₂. Das noch nicht aufgebrachte Fasergemisch B+C₂ wurde daraufhin flächig mit möglichst konstanter Dicke und möglichst gleichmäßig auf dem Agglomerat A verteilt. Die resultierende Schichtung von Fasergemisch B+C₂ und Agglomerat A weist somit einen sandwichartigen Aufbau auf. Die zugrundeliegenden Teilschritte sind in Schritt III in Fig. 2a zusammengefasst. Durch das Zusammenbringen der Komponenten erfolgt zudem eine Übertragung von Wärmeenergie von den Agglomeraten auf die Fasermischung. Ein zusätzliches Erwärmen der Fasern kann somit im vorliegenden Fall entfallen.

In einem weiteren Schritt wurde die Schichtung von Fasermischung B+C₂ und Agglomerat A mittels zweier Teflonplatten abwechselnd horizontal und vertikal verpresst (Schritt IV in Fig. 2a). Dazu wurde die Schichtung zunächst zwischen den beiden horizontal aufeinander zubewegten Teflonplatten verpresst. Die verpresste Schichtung wurde dann auf die größte nicht auf der Arbeitsplatte stehende Seite umgeklappt. Daraufhin wurde die Schichtung wiederum zwischen den beiden horizontal aufeinander zubewegten Teflonplatten verpresst. Dieser Vorgang wurde mehrmals wiederholt. Nach Verpressung bzw. Vermischung der Komponenten wurde das resultierende Gemisch mittels einer Stahlwalze auf der Arbeitsplatte solange ausgewalzt, bis das ausgewalzte Gemisch die gewünschte Dicke, vorzugsweise von 1 cm, aufwies (Schritt V in Fig. 2a).

Die Verfahrenschrittfolge von Verpressen und anschließendem Auswalzen wurden solange wiederholt, bis die gewünschte Verteilung der Fasermischung B+C₂ erreicht ist (Schritt VII in Fig. 2a). Der jeweils beim Verpressen und Walzen eingesetzte Druck und die beim Vermischen auftretenden Scherkräfte beeinflussen dabei das Vermengen bzw. Vermischen und Verbinden bzw. Fixieren und/oder Zumhaftenbringen der Adsorberpartikel und der Glasfasern B bzw. der Schmelzfasern C₂.

Bei dem wiederholten Verfahrensschritt von Verpressen und Walzen kann sich zudem ein Teil des Bindemittels, insbesondere des Schmelzklebstoffs C₁, der ursprünglich in dem Agglomerat A vorlag, auf der Arbeitsplatte, den Pressplatten und der Stahlwalze absetzen, so dass auf diese Weise der Bindemittelgehalt gesteuert bzw. reduziert werden kann.

Da die Verarbeitungstemperatur des Agglomerats A oberhalb des Erweichungspunkts der eingesetzten Schmelzfasern liegt, verringert sich bei erhöhter Klebrigkeit die Viskosität der Schmelzfasern. Es treten somit durch die Schmelzfaser hervorgerufene Adhäsionskräfte bzw. (Klebe-)Verbindungen zwischen den Glasfasern B und den Adsorberpartikeln auf. Durch das Verpressen und Walzen verbinden sich die Glasfasern B mit den Adsorberpartikeln unter Einsatz der Bindemittelkomponenten sozusagen zu einer dreidimensionalen Gerüststruktur. Die ursprüngliche Agglomeratstruktur des eingesetzten Agglomerats A wird dabei zumindest im Wesentlichen vollständig aufgehoben.

Schließlich wurde das Komposit in die gewünschte Form gebracht und in einzelne, mattenförmige Streifen geschnitten (Schritt VI in Fig. 2a). Es resultieren nach Abkühlung monolithische Komposit-Formkörper in Form von Aktivkohle/Faser-Matten E₁ mit Adsorptions- und Aerosol- und/oder Partikelfiltereigenschaften.

Die Dicke der Aktivkohle/Faser-Matten E₁ kann durch das Auswalzen in einem großen Bereich variiert werden. Aufgrund der starken Verbindung bzw. Fixierung bzw. Haftung der Komponenten aus homogen verteilten Glasfasern B, Schmelzfasern und Adsorberpartikeln ist es sogar möglich, die Dicke der Aktivkohle/Faser-Matten E₁ auf bis zu 1 mm zu verringern.

Durch die gezielte Auswahl von Verfahrensparametern sowie Produktparametern, wie Mattendicke, Faserart, Faserlänge und Faseranteil, Zieltemperatur und Haltedauer der Temperatur, können die grundlegenden Eigenschaften der resultierenden Aktivkohle/Faser-Komposite bzw. Aktivkohle/Faser-Matten E₁ in zielgerichteter Weise eingestellt bzw. vorgegeben werden.

### b) Erfindungsgemäße Aktivkohle/Faser-Agglomerate E₂

Bei der Herstellung der erfindungsgemäßen Komposit-Formkörper in Form von Aktivkohle/Faser-Agglomeraten E₂ kann von der zuvor angeführten Herstellung erfindungsgemäßer Aktivkohle/Faser-Matten E₁ insofern abgewichen werden, als der Prozess aus Verpressen und Walzen weniger häufig wiederholt wird.

Zum Erhalt der Aktivkohle/Faser-Agglomerate E₂ nach der Erfindung wurde derart vorgegangen, dass das zuvor beschriebene ausgewalzte Komposit mittels eines Häckslers mit gegenüberliegenden Zahnrädern zerkleinert wurde (Schritt VIII in Fig. 2b). Die erhaltenen Formkörper-Komposite, welche in Form von Partikelfraktionen vorliegen, wurden dann abgesiebt (Schritt IX in Fig. 2b). Hierzu wurden Siebe mit einer Maschengröße von 5 mm und 2,5 mm verwendet. Überschüssige Glasfasern F können mit Hilfe von Luft ausgetragen werden (Schritt X in Fig. 2b). Es resultieren erfindungsgemäße Aktivkohle/Faser-Agglomerate E₂ bzw. Aktivkohle/Faser-Partikel mit gleichmäßiger Faserbeladung und hoher Stabilität der jeweiligen Einzelagglomerate sowie mit Adsorptions- und Aerosol- bzw. Partikelfiltereigenschaften. Derartige Agglomerate können beispielsweise in Form von Schüttungen verwendet werden.

### c) Untersuchungen zur Variation von Zieltemperatur und Haltedauer

Der Einfluss von Zieltemperatur und Haltedauer beim Aufheizen der Mischung aus Agglomeraten und Fasermaterial sowie Schmelzfasern auf die Stabilität von Aktivkohle-Faser-Matten wurde untersucht. Hierzu wurden die Aktivkohle-Faser-Matten bei drei unterschiedlichen Zieltemperaturen und jeweils vier Haltedauern hergestellt.

Zur Herstellung der Komposit-Formkörpers wurden zerschnittene Schmelzfasern der Marke Grilon® vom Typ KE 150 mit einem Schmelzpunkt von 150 °C und einer Faserlänge von höchstens 10 mm eingesetzt.

Hinsichtlich der resultierenden Komposit-Formkörper in Form von Aktivkohle/Faser-Matten wurde eine gleichbleibende Dichte von etwa 350 g/dm³ bei konstanten Ausmaßen (Durchmesser von 10 cm und Höhe von 2 cm) angestrebt, wobei die eingesetzte Masse auf 55 g eingestellt wurde. Der Anteil der Fasern am Gesamtgewicht der eingesetzten Materialien betrug 5 %. Das Gesamtgewicht der eingesetzten Schmelzfasern lag bei 0,25 g.

Nach erfindungsgemäßer Herstellung wurde die Stabilität der resultierenden Aktivkohle/Faser-Matten qualitativ evaluiert und anhand von Schulnoten von 1 (sehr gute Stabilität) bis 6 (ungenügende Stabilität) bewertet. Tabelle 1 gibt einen Überblick über die Ergebnisse der Untersuchung.

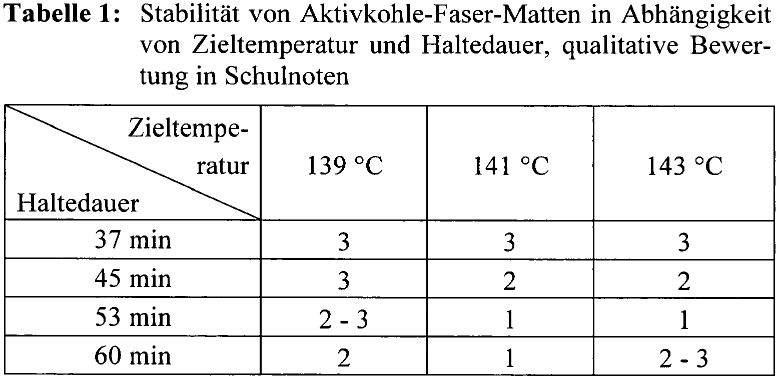

Höhere Temperaturen und längere Haltedauern führen zu einer gewissen Kontraktion der Schmelzfasern. Aufgrund der starken Haftung des Schmelzanteils der Fasern an den Adsorberpartikeln kann sich die gesamte Aktivkohle/Faser-Matte mitunter leicht zusammenziehen, wodurch sich mitunter ungleichmäßige Ränder ausbilden können. Geringere Temperaturen und Haltedauern führen zu einer weniger gleichmäßigen Erweichung bzw. Aufschmelzung des Schmelzklebstoffs. Zudem kann eine Erhöhung der Dichte der Aktivkohle/Faser-Matte resultieren. Insgesamt sind die erhaltenen Ergebnisse in den angeführten Bereichen jedoch zumindest als zufriedenstellend einzustufen.

Hervorragende Werte werden bei den eingesetzten Ausgangsmaterialien bei einer Zieltemperatur von 141 °C sowie einer Haltedauer von 45 bis 53 Minuten erhalten.

In einer weiteren Untersuchung mit Agglomeraten auf Basis von Aktivkohlepartikeln und Glasfasern sowie Schmelzfasern als Ausgangsmaterialien wurden die Agglomerate als solche separat auf eine Zieltemperatur von 190 °C und bei einer Haltedauer von etwa 60 min aufgeheizt. Anschließen erfolgte ein Abkühlen der Agglomerate auf Temperaturen unterhalb des Schmelzpunktes, jedoch oberhalb des Erweichungspunktes der eingesetzten Schmelzfasern. Anschließend wurden die Komponenten zusammengeführt und wie zuvor beschrieben weiterverarbeitet. Die resultierenden Komposit-Formkörper in Form von Aktivkohle/Faser-Matten zeigten keine Tendenz zur Kontraktion bzw. keine Tendenz zu einer ungleichmäßigen Ausbildung der Kompositstruktur.

### 4. Untersuchungen zum Durchbruchsverhalten, zur Partikel- und Aerosolfilterfunktion sowie zur Zug- bzw. Bruchfestigkeit von Komposit-Formkörpern

Zur Herstellung der für die vorliegenden Untersuchungen eingesetzten Komposit-Formkörper wurden Agglomerattypen auf Basis eines partikulären Adsorptionsmaterials mit einem Gesamtporenvolumen V₍ₜₒₜ₎ von 0,63 cm³/g sowie mit einer spezifischen Oberfläche A_{(BET)} von 1.350 m²/g und mit einer mittleren Partikelgröße von etwa 0,5 mm und eines Schmelzklebstoffs - welcher sozusagen den Kern der Agglomerate ausbildet, an dem das partikuläre Adsorptionsmaterial haftet - eingesetzt. Bei dem Adsorptionsmaterial handelte es sich um eine von der Blücher GmbH, Erkrath, Deutschland, oder von der Adsor-Tech GmbH, Premnitz, Deutschland, vertriebene Aktivkohle. Bei dem Bindemittel der Agglomerate handelte es sich um thermoplastische Schmelzklebstoffpartikel mit Korngrößen im Bereich von 200 bis 1.000 µm. Der Schmelzklebstoff war dabei vom Typ 9 EP sein, erhältlich von der Firma EMS-Chemie GmbH & Co. KG, Neumünster, Deutschland.

Die zur Herstellung der Komposit-Formkörper eingesetzten Agglomerate wurden in einem Trockenschrank auf eine Zieltemperatur erhitzt und nachfolgend mit den weiteren Komponenten in Kontakt gebracht bzw. homogen vermischt, um auf diese Weise nach Formgebung und Abkühlung die jeweiligen Komposit-Formkörper zu erhalten. Bei der Vermischung der zugrundeliegenden Komponenten mit den Agglomeraten wird die Agglomeratstruktur zumindest im Wesentlichen vollständig aufgelöst. Für weitere Ausführungen zur zugrundeliegenden Verfahrensführung kann auf obige Ausführungen in Abschnitt 1a) verwiesen werden. Die weiteren Komponenten wurden wie nachfolgend spezifiziert eingesetzt:
a) Im Rahmen der Herstellung eines ersten erfindungsgemäßen Komposit-Formkörpers A1 wurde ein Fasermaterial in Form von Glasfasern sowie das weitere Bindemittel in Form von Schmelzfasern eingesetzt, wobei es sich bei den in Rede stehenden Schmelzfasern um teilkristalline Schmelzfasern handelte, welche somit einen Erweichungspunkt und einen hiervon verschiedenen Schmelzpunkt aufweisen. Diesbezüglich wurde eine Mischung aus Mineralfasern und Schmelzfasern eingesetzt, wobei der Gehalt an Schmelzfasern in Bezug auf die eingesetzte Fasermischung 10 Gew.-%, bezogen auf das Gesamtgewicht der eingesetzten Fasermischung, betrug. In Bezug auf den resultierenden Komposit-Formkörper wurde die Fasermischung in einer Menge von 5 Gew.-%, bezogen auf den Komposit-Formkörper, eingesetzt. Bei der Herstellung des Komposit-Formkörpers A1 wurde dabei derart verfahren, dass die Temperatur beim Zusammenführen der Komponenten oberhalb des Erweichungspunktes und unterhalb des Schmelzpunktes der eingesetzten Schmelzfasern lag. Eine visuelle Begutachtung im Lichtmikroskop zeigte dabei, dass die Faserstruktur bzw. die Gestalt der eingesetzten Schmelzfasern zumindest im Wesentlichen vollständig erhalten blieb.
b) In Bezug auf einen zweiten erfindungsgemäßen Komposit-Formkörper wurde wie unter a) mit der Maßgabe verfahren, dass beim Zusammenführen bzw. Vermischen der jeweiligen Komponenten die Temperatur auf Werte oberhalb des Schmelzpunktes der eingesetzten Schmelzfasern eingestellt wurde. Es resultierten erfindungsgemäße Komposit-Formkörper A2. Eine diesbezügliche optische Kontrolle unter Einsatz eines Lichtmikroskops zeigte, dass die Schmelzfasern größtenteils aufgeschmolzen waren. Insbesondere zeigten sich hinsichtlich der Schmelzfasern bei ansonsten intakter Struktur des Komposit-Formkörpers deutliche Formveränderungen.
c) Im Hinblick auf einen weiteren erfindungsgemäßen Komposit-Formkörper A3 wurde wie unter a) beschrieben verfahren, wobei jedoch anstelle der Schmelzfasern das Bindemittel in Form von kugelförmigen Schmelzkleberteilchen mit einem mittleren Durchmesser von etwa 0,5 mm eingesetzt wurde.
d) In Bezug auf einen wiederum weiteren erfindungsgemäßen Komposit-Formkörper A4 wurde wie unter a) verfahren, wobei jedoch die Schmelzfasern in Form von mit einem Schmelzkleber umhüllten Mineralfasern eingesetzt wurden.
e) In Bezug auf einen weiteren Komposit-Formkörper B1 (Vergleich) wurde derart verfahren, dass als weitere Komponente ausschließlich Schmelzfasern in einer Menge von 5 Gew.-%, bezogen auf den Komposit-Formkörper, eingesetzt wurden. Der resultierende Komposit-Formkörper wies somit kein Fasermaterial bzw. keine Mineralfasern auf.
f) Weiterhin wurde ein Komposit-Formkörper B2 (Vergleich) hergestellt, welcher als weitere Komponente ausschließlich Mineralfasern in den oben bezeichneten Mengen und somit kein weiteres Bindemittel in Form von Schmelzfasern aufwies.

In einer ersten Versuchsreihe wurde an den jeweiligen Komposit-Formkörpern der mittlere Wirkungsgrad Eₘ nach DIN EN 779 (Juli 1993) und der mittlere Abscheidegrad A", nach DIN EN 779 (Juli 1993) bestimmt. Weiterhin wurde bei den zugrundeliegenden Komposit-Formkörpern der integrale Anfangsdurchlassgrad D₁ nach DIN EN 1822 (April 1998; DEHS-Aerosol, MPPS = 0,1 bis 0,3 µm) bestimmt.

Weiterhin wurden die zuvor angeführten Komposit-Formkörper hinsichtlich ihrer jeweiligen Barrierewirkung gegenüber Senfgas im Rahmen des so genannten konvektiven Strömungstests (*convective flow test*) untersucht. Zu diesem Zweck wurde bei konstantem Strömungswiderstand mit einer Strömungsgeschwindigkeit von etwa 0,45 cm/s ein Senfgas enthaltender Luftstrom auf das Adsorptionsmaterial einwirken gelassen, wobei die flächenbezogene Durchbruchsmenge nach 16 Stunden (80 % relative Luftfeuchtigkeit, T = 32 °C) bestimmt wurde.

Weiterhin wurden Formkörper des jeweils entsprechenden Typs hinsichtlich ihrer mechanischen Eigenschaften im Hinblick auf die Zug- bzw. Bruchfestigkeit untersucht.

Die nachfolgende Tabelle 2 fasst die erhaltenen Ergebnisse zusammen, wobei die zugrundeliegenden Resultate auf Basis eines Schulnotensystems (1 = sehr gut bis 6 = ungenügend) bewertet sind.

**Tabelle 2: Zusammenfassung der Untersuchungsergebnisse an den Komposit-Formkörpern A1 bis A4 sowie B1 und B2**

| Komposit-Formkörper | A1 | A2 | A3 | A4 | B1 | B2 |
|---|---|---|---|---|---|---|
| Mittlerer Wirkungsgrad Eₘ sowie mittlere Abscheiderate Aₘ | 1 | 1-2 | 2 | 1 | 4-5 | 4 |
| Integraler Anfangsdurchlassgrad D₁ | 1 | 1-2 | 2-3 | 1 | 4 | 4-5 |
| Barrierewirkung gegenüber Senfgas | 1-2 | 1-2 | 2 | 1-2 | 3 | 3 |
| Zug- bzw. Bruchfestigkeit | 1 | 2 | 2-3 | 1 | 4-5 | 5-6 |

Die Untersuchungen zeigen insgesamt die hervorragenden Eigenschaften der erfindungsgemäßen Komposit-Formkörper in Bezug auf die kombinierte Bereitstellung einer Adsorptionseigenschaft einerseits und einer Partikel- bzw. Aerosolfilterfunktion andererseits, wobei die erfindungsgemäßen Komposit-Formkörper gleichermaßen auch hervorragende Eigenschaften hinsichtlich ihrer mechanischen Stabilität aufweisen.

## Patentansprüche

1. Dreidimensionaler, adsorptiver faserverstärkter Komposit-Formkörper, wobei der Komposit-Formkörper mindestens ein Adsorptionsmaterial in Form einer Vielzahl diskreter Adsorberpartikel einerseits und mindestens ein Fasermaterial in Form einer Vielzahl diskreter Fasern andererseits aufweist,
wobei das Adsorptionsmaterial und das Fasermaterial gleichmäßig und homogen im Komposit-Formkörper verteilt sind,
wobei die Adsorberpartikel und das Fasermaterial mittels mindestens zweier voneinander verschiedener Bindemittel formstabil und/oder dauerhaft miteinander verbunden und/oder aneinander fixiert und/oder aneinander zum Haften gebracht sind,
wobei als Bindemittel mindestens ein thermoplastisches und hitzeklebriges organisches Polymer und/oder mindestens ein thermoplastischer Schmelzklebstoff eingesetzt ist und
wobei mindestens ein Bindemittel in Form von Schmelzfasern eingesetzt ist und wobei mindestens ein weiteres, hiervon verschiedenes Bindemittel eingesetzt ist, wobei das weitere Bindemittel nicht in Form von Schmelzfasern eingesetzt ist.

2. Formkörper nach Anspruch 1,
wobei die Schmelzfasern eine Faserlänge, insbesondere eine mittlere Faserlänge, von mindestens 0,1 mm, insbesondere mindestens 0,5 mm, vorzugsweise mindestens 1 mm, bevorzugt mindestens 2 mm, aufweisen und/oder wobei die Schmelzfasern eine Faserlänge von höchstens 100 mm, insbesondere höchstens 80 mm, vorzugsweise höchstens 50 mm, bevorzugt höchstens 20 mm, besonders bevorzugt höchstens 15 mm, ganz besonders bevorzugt höchstens 10 mm, noch mehr bevorzugt höchstens 5 mm, aufweisen und/oder wobei die Schmelzfasern eine Faserlänge im Bereich von 0,1 mm bis 100 mm, insbesondere 0,5 mm bis 20 mm, vorzugsweise 1 mm bis 15 mm, bevorzugt 2 mm bis 10 mm, aufweisen; und/oder
wobei die Schmelzfasern einen Faserdurchmesser, insbesondere einen mittleren Faserdurchmesser, von mindestens 0,05 µm, insbesondere mindestens 0,2 µm, vorzugsweise mindestens 0,5 µm, bevorzugt mindestens 1 µm, aufweisen und/oder wobei die Schmelzfasern einen Faserdurchmesser, insbesondere einen mittleren Faserdurchmesser, von höchstens 900 µm, insbesondere höchstens 700 µm, vorzugsweise höchstens 600 µm, bevorzugt höchstens 500 µm, aufweisen und/oder wobei die Schmelzfasern einen Faserdurchmesser, insbesondere einen mittleren Faserdurchmesser, im Bereich von 0,05 µm bis 900 µm, insbesondere 0,2 µm bis 700 µm, vorzugsweise 0,5 µm bis 600 µm, bevorzugt 1 µm bis 500 µm, aufweisen; und/oder
wobei der Komposit-Formkörper selbsttragend ist und/oder wobei der Komposit-Formkörper monolithisch und/oder einstückig ausgebildet ist; und/oder
wobei der Komposit-Formkörper eine definierte und/oder eine regelmäßige Form aufweist; und/oder
wobei der Komposit-Formkörper mattenförmig ausgebildet ist; und/oder
wobei das Fasermaterial Fasern mit einer Faserlänge von mindestens 0,1 mm, insbesondere mindestens 0,5 mm, vorzugsweise mindestens 0,75 mm, bevorzugt mindestens 1 mm, aufweist und/oder wobei das Fasermaterial Fasern mit einer Faserlänge von höchstens 50 mm, insbesondere höchstens 30 mm, vorzugsweise höchstens 20 mm, bevorzugt höchstens 10 mm, aufweist und/oder wobei das Fasermaterial Fasern mit einer Faserlänge im Bereich von 0,1 bis 50 mm, insbesondere 0,5 bis 50 mm, vorzugsweise 0,75 bis 20 mm, bevorzugt 1 bis 10 mm, aufweist; und/oder
wobei das Fasermaterial Fasern mit einem mittleren Faserdurchmesser von mindestens 0,4 µm, insbesondere mindestens 0,6 µm, vorzugsweise mindestens 0,8 µm, bevorzugt mindestens 1 µm, aufweist und/oder wobei das Fasermaterial Fasern mit einem mittleren Faserdurchmesser von höchstens 1.000 µm, insbesondere höchstens 800 µm, vorzugsweise höchstens 600 µm, bevorzugt höchstens 500 µm, aufweist und/oder wobei das Fasermaterial Fasern mit einem mittleren Faserdurchmesser im Bereich von 0,4 bis 1.000 µm, insbesondere 0,6 bis 800 µm, vorzugsweise 0,8 bis 600 µm, bevorzugt 1 bis 500 µm, aufweist; und/oder
wobei der Komposit-Formkörper die Adsorberpartikel in Mengen von mindestens 2 Adsorberpartikeln, insbesondere mindestens 10 Adsorberpartikeln, vorzugsweise mindestens 100 Adsorberpartikeln, bevorzugt mindestens 500 Adsorberpartikeln, besonders bevorzugt mindestens 1.000 Adsorberpartikeln, aufweist und/oder wobei der Komposit-Formkörper die Adsorberpartikel in Mengen von bis zu 50 Adsorberpartikeln, insbesondere bis zu 500 Adsorberpartikeln, vorzugsweise bis zu 1.000 Adsorberpartikeln oder mehr, aufweist; und/oder
wobei der Komposit-Formkörper das Fasermaterial in Form von und/oder in Mengen von mindestens 5 Fasern, insbesondere mindestens 10 Fasern, vorzugsweise mindestens 100 Fasern, bevorzugt mindestens 500 Fasern, besonders bevorzugt mindestens 1.000 Fasern, aufweist und/oder wobei der Komposit-Formkörper das Fasermaterial in Form von und/oder in Mengen von bis zu 100 Fasern, insbesondere bis zu 500 Fasern, vorzugsweise bis zu 1.000 Fasern oder mehr, umfasst; und/oder
wobei der Komposit-Formkörper die Adsorberpartikel und das Fasermaterial in einem Gewichtsverhältnis von Adsorberpartikeln einerseits zu Fasern andererseits von mindestens 1 : 10, insbesondere mindestens 1 : 5, vorzugsweise mindestens 1 : 1, bevorzugt mindestens 5 : 1, besonders bevorzugt mindestens 10 : 1, ganz besonders bevorzugt mindestens 50 : 1 oder mehr, aufweist.

3. Komposit-Formkörper nach Anspruch 1 oder 2,
wobei der Adsorberpartikel ausgewählt sind aus der Gruppe von
(i) Aktivkohle, insbesondere kornförmiger Aktivkohle, vorzugsweise kugelförmiger Aktivkohle und/oder insbesondere geformter und/oder extrudierter Aktivkohle und/oder pulverförmiger Aktivkohle;
(ii) Zeolithen, insbesondere natürlichen und/oder synthetischen Zeolithen;
(iii) Molekularsieben, insbesondere zeolithischen Molekularsieben, synthetischen Molekularsieben und/oder insbesondere synthetischen Molekularsieben auf Basis von Kohlenstoff, Oxiden und/oder Gläsern;
(iv) Metalloxid- und/oder Metallpartikeln;
(v) Ionenaustauscherharzen, insbesondere polydispersen und/oder monodispersen Kationen- und/oder Anionenaustauschern, insbesondere vom Geltyp und/oder vom makroporösen Typ;
(vi) anorganischen Oxiden, insbesondere Siliciumdioxiden, Silicagelen und/oder Aluminiumoxiden;
(vii) porösen organischen Polymeren und/oder porösen organisch-anorganischen Hybridpolymeren;
(viii) mineralischen Granulaten;
(ix) Klathraten;
(x) metallorganischen Gerüstverbindungen (*metal-organic frameworks* bzw. MOFs); sowie
(xi) deren Mischungen und/oder Kombinationen; und/oder
wobei die Adsorberpartikel Teilchengrößen, insbesondere Teilchendurchmesser, im Bereich von 0,001 bis 3 mm, insbesondere 0,005 bis 2,5 mm, vorzugsweise 0,01 bis 2 mm, besonders bevorzugt 0,02 bis 1,5 mm, ganz besonders bevorzugt 0,05 bis 1 mm, aufweisen; und/oder
wobei die Adsorberpartikel mittlere Teilchengrößen, insbesondere mittlere Teilchendurchmesser (D50), im Bereich von 0,01 bis 2 mm, insbesondere 0,05 bis 1,5 mm, vorzugsweise 0,1 bis 1 mm, aufweisen; und/oder
wobei die Adsorberpartikel eine spezifische Oberfläche (BET-Oberfläche) von mindestens 500 m²/g, insbesondere mindestens 750 m²/g, vorzugsweise mindestens 1.000 m²/g, besonders bevorzugt mindestens 1.200 m²/g, aufweisen und/oder wobei die Adsorberpartikel eine spezifische Oberfläche (BET-Oberfläche) im Bereich von 500 bis 4.000 m²/g, insbesondere 750 bis 3.000 m²/g, vorzugsweise 900 bis 2.500 m²/g, besonders bevorzugt 950 bis 2.000 m²/g, aufweisen; und/oder
wobei die Adsorberpartikel ein Gesamtporenvolumen nach Gurvich von mindestens 0,50 cm³/g, insbesondere mindestens 0,55 cm³/g, vorzugsweise mindestens 0,60 cm³/g, besonders bevorzugt mindestens 0,65 cm³/g, ganz besonders bevorzugt mindestens 0,70 cm³/g, aufweisen und/oder wobei die Adsorberpartikel ein Gesamtporenvolumen nach Gurvich im Bereich von 0,50 bis 2,0 cm³/g, insbesondere 0,55 bis 1,5 cm³/g, vorzugsweise 0,60 bis 1,2 cm³/g, besonders bevorzugt 0,65 bis 1,0 cm³/g, aufweisen; und/oder
wobei die Adsorberpartikel eine Gesamtporosität im Bereich von 10 % bis 80 %, insbesondere 20 % bis 75 %, vorzugsweise 25 % bis 70 %, aufweisen.

4. Komposit-Formkörper nach einem der vorangehenden Ansprüche,
wobei das Fasermaterial ausgewählt ist aus der Gruppe von synthetischen Fasern, Naturfasern, insbesondere tierischen und/oder pflanzlichen Fasern, und Mineralfasern sowie deren Mischungen, vorzugsweise synthetischen Fasern; und/oder
wobei das Fasermaterial in Form von synthetischen Fasern eingesetzt ist oder diese umfasst, insbesondere aus der Gruppe von Polyestern (PES); Polyolefinen, wie Polyethylen (PE) und Polypropylen (PP), Polyvinylchlorid (CLF); Polyvinylidenchlorid (CLF); Acetat (CA); Triacetat (CTA); Polyacryl (PAN), Polyamid (PA); Polyvinylalkohol (PVAL); Polyurethanen; Polyvinylestern; (Meth-)Acrylaten; sowie deren Mischungen; und/oder
wobei das Fasermaterial in Form von Wollfasern, insbesondere Wollfasern tierischen und/oder pflanzlichen Ursprungs, vorzugsweise in Form von Schafswolle und/oder Baumwolle, bevorzugt Schafswolle, eingesetzt ist oder diese umfasst; und/oder
wobei das Fasermaterial in Form von Glasfasern eingesetzt ist oder diese umfasst und/oder wobei das Fasermaterial in Form von Bastfasern; Fruchtfasern, insbesondere Kokosfasern; Tierhaar, insbesondere Rosshaar; Seidenfasern; Fasern aus natürlichen Polymeren, insbesondere Viskosefasern; Basaltfasern; Kohlenstofffasern; Metallfasern und/oder Keramikfasern eingesetzt ist oder diese umfasst; und/oder
wobei das Fasermaterial in Form von Aktivkohlefasern eingesetzt ist, insbesondere wobei die Aktivkohlefasern erhältlich sind durch Carbonisieren und nachfolgende Aktivierung organischer Ausgangsfasern, insbesondere von Cellulosefasern, Fasern auf Basis von Cellulosederivaten, Phenolharzfasern, Polyvinylalkoholfasern, Pechfasern, Acrylharzfasern, Polyacrylnitrilfasern, aromatischen Polyamidfasern, Formaldehydharzfasern, divinylbenzolvernetzten Polystyrolfasern, Ligninfasern, Baumwollfasern und/oder Hanffasern.

5. Komposit-Formkörper nach einem der vorangehenden Ansprüche, wobei das eine Bindemittel einen höheren Erweichungs- oder Schmelzpunkt als das andere Bindemittel aufweist.

6. Verfahren zur Herstellung eines dreidimensionalen, adsorptiven faserverstärkten Komposit-Formkörpers, wie in den Ansprüchen 1 bis 5 definiert, wobei der Komposit-Formkörper mindestens ein partikuläres Adsorptionsmaterial und mindestens ein Fasermaterial aufweist, wobei das Verfahren die nachfolgenden Schritte in der nachstehend spezifizierten Abfolge (a) bis (c) umfasst:
(a) Bereitstellen mindestens eines Agglomerats mit einer Vielzahl diskreter Adsorberpartikel einerseits und mindestens eines Fasermaterials in Form einer Vielzahl diskreter Fasern andererseits,
(b) Zusammenführen und Inkontaktbringen der in Verfahrensschritt (a) bereitgestellten Komponenten, unter Verwendung mindestens eines Bindemittels, wobei als Bindemittel mindestens ein thermoplastisches und/oder hitzeklebriges organisches Polymer und/oder mindestens ein thermoplastischer Schmelzklebstoff eingesetzt wird und wobei einerseits das Bindemittel teilweise durch das Agglomerat bereitgestellt und nicht in Form von Schmelzfasern eingesetzt wird und anderseits das Bindemittel teilweise durch eine Vielzahl von Schmelzfasern bereitgestellt wird, und
(c) homogene und gleichmäßige Vermischung einerseits und formstabiles und dauerhaftes miteinander Verbinden und aneinander Fixieren der in Schritt (b) zusammengeführten und in Kontakt gebrachten Komponenten andererseits, so dass ein dreidimensionaler, adsorptiver faserverstärkter Komposit-Formkörper resultiert.

7. Verfahren nach Anspruch 6,
wobei als Bindemittel mindestens ein thermoplastisches und/oder hitzeklebriges organisches Polymer und/oder mindestens ein thermoplastischer Schmelzklebstoff eingesetzt wird, wobei das organische Polymer und/oder der thermoplastische Schmelzklebstoff, unabhängig voneinander, aus Polymeren aus der Gruppe von Polyestern, Polyamiden, Polyethern, Polyetherestern und/oder Polyurethanen sowie deren Mischungen und Copolymeren ausgewählt werden; und/oder
wobei sich das durch das Agglomerat bereitgestellte Bindemittel und das durch die Schmelzfasern bereitgestellte Bindemittel in mindestens einem Parameter unterscheiden, insbesondere wobei der Parameter ausgewählt wird aus der Gruppe von physikalischen und/oder chemischen Parametern, insbesondere chemische Beschaffenheit, Erweichungs- oder Schmelzpunkt, Viskosität, insbesondere Viskosität der Schmelze, und Haft- und/oder Klebeeigenschaften; und/oder
wobei das durch das Agglomerat bereitgestellte Bindemittel einen höheren Erweichungs- oder Schmelzpunkt als das durch die Schmelzfasern bereitgestellte Bindemittel aufweist; und/oder
wobei das Agglomerat ein Gewichtsverhältnis von diskreten Adsorberpartikel zu Bindemittel von mindestens 1,5 : 1, insbesondere mindestens 2 : 1, vorzugsweise mindestens 3 : 1, besonders bevorzugt mindestens 5 : 1, ganz besonders bevorzugt mindestens 7 : 1, aufweist und/oder wobei das Agglomerat jeweils ein Gewichtsverhältnis von diskreten Adsorberpartikel zu Bindemittel im Bereich von 1,5 : 1 bis 30 : 1, insbesondere 2 : 1 bis 20 : 1, vorzugsweise 3 : 1 bis 15 : 1, besonders bevorzugt 4: 1 bis 10 : 1, aufweist; und/oder
wobei das Agglomerat das Bindemittel in Mengen von mindestens 1 Gew.-%, insbesondere mindestens 2 Gew.-%, vorzugsweise mindestens 5 Gew.-%, bevorzugt mindestens 10 Gew.-%, bezogen auf das Gesamtgewicht des Agglomerats, enthält und/oder wobei das Agglomerat das Bindemittel in Mengen von höchstens 80 Gew.-%, insbesondere höchstens 70 Gew.-%, vorzugsweise höchstens 60 Gew.-%, bevorzugt höchstens 50 Gew.-%, bezogen auf das Gesamtgewicht des Agglomerats, enthält und/oder wobei das Agglomerat das Bindemittel in Mengen im Bereich von mindestens 1 Gew.-% bis 80 Gew.-%, insbesondere 2 Gew.-% bis 70 Gew.-%, vorzugsweise 3 Gew.-% bis 60 Gew.-%, bevorzugt 4 Gew.-% bis 55 Gew.-%, besonders bevorzugt 5 Gew.-% bis 50 Gew.-%, bezogen auf das Gesamtgewicht des Agglomerats, enthält; und/oder
wobei die Schmelzfasern in Mengen von mindestens 0,1 Gew.-%, vorzugsweise mindestens 0,2 Gew.-%, bevorzugt mindestens 0,5 Gew.-%, besonders bevorzugt mindestens 1 Gew.-%, bezogen auf das Gesamtgewicht aus Agglomerat, Fasermaterial und Bindemittel, eingesetzt werden und/oder wobei die Schmelzfasern in Mengen von höchstens 20 Gew.-%, vorzugsweise höchstens 15 Gew.-%, bevorzugt höchstens 10 Gew.-%, besonders bevorzugt höchstens 8 Gew.-%, bezogen auf das Gesamtgewicht aus Agglomerat, Fasermaterial und Bindemittel, eingesetzt werden und/oder wobei die Schmelzfasern in Mengen in einem Bereich von 0,1 Gew.-% bis 20 Gew.-%, vorzugsweise 0,2 Gew.-% bis 15 Gew.-%, bevorzugt 0,5 Gew.-% bis 10 Gew.-%, besonders bevorzugt 1 Gew.-% bis 8 Gew.-%, bezogen auf das Gesamtgewicht aus Agglomerat, Fasermaterial und Bindemittel, eingesetzt werden.

8. Verfahren nach Anspruch 6 oder 7,
wobei das Bindemittel, insbesondere die Schmelzfasern, gemeinsam mit dem Fasermaterial, insbesondere in Form einer Mischung, vorzugsweise in Form einer homogenen Mischung, eingesetzt wird bzw. werden, und/oder wobei das Bindemittel, insbesondere die Schmelzfasern, und das Fasermaterial vor dem Zusammenführen und/oder Inkontaktbringen der Komponenten bzw. vor Verfahrensschritt (b) in eine homogene Mischung überführt wird bzw. werden und anschließend die so erhaltene Mischung dem Agglomerat zugeführt und/oder in Verfahrensschritt (c) eingesetzt wird, insbesondere wobei die Menge an Bindemittel, insbesondere Schmelzfasern, in der Mischung auf mindestens 1 Gew.-%, insbesondere mindestens 2 Gew.-%, vorzugsweise mindestens 5 Gew.-%, bevorzugt mindestens 10 Gew.-%, bezogen auf das Gesamtgewicht aus Bindemittel und Fasermaterial, eingestellt wird, insbesondere wobei die Bereitstellung der Mischung auf Basis einer vorzugsweise wässrigen Dispersion des Bindemittels, insbesondere der Schmelzfasern, und des Fasermaterials erfolgt, insbesondere gefolgt von einer Entfernung des Dispersionsmediums; und/oder
wobei das Bindemittel, insbesondere die Schmelzfasern, und das Fasermaterial in einem gewichtsbezogenen Verhältnis von Bindemittel, insbesondere Schmelzfasern, zu Fasermaterial [Bindemittel : Fasermaterial] im Bereich von 1 : 0,5 bis 1 : 100, insbesondere 1 : 1 bis 1 : 80, vorzugsweise 1 : 1,5 bis 1 : 60, bevorzugt 1 : 2 bis 1 : 20, eingesetzt werden; und/oder
wobei das Fasermaterial in Mengen von mindestens 0,2 Gew.-%, vorzugsweise mindestens 0,5 Gew.-%, bevorzugt mindestens 1 Gew.-%, besonders bevorzugt mindestens 3 Gew.-%, bezogen auf das Gesamtgewicht aus Agglomerat, Fasermaterial und Bindemittel, eingesetzt wird und/oder wobei das Fasermaterial in Mengen von höchstens 25 Gew.-%, vorzugsweise höchstens 20 Gew.-%, bevorzugt höchstens 10 Gew.-%, bezogen auf das Gesamtgewicht aus Agglomerat, Fasermaterial und Bindemittel, eingesetzt wird und/oder wobei das Fasermaterial in Mengen in einem Bereich zwischen 0,1 Gew.-% und 25 Gew.-%, vorzugsweise zwischen 0,2 Gew.-% und 20 Gew.-%, bevorzugt zwischen 0,5 Gew.-% und 10 Gew.-%, bezogen auf das Gesamtgewicht aus Agglomerat, Fasermaterial und Bindemittel, eingesetzt wird; und/oder
wobei das Fasermaterial ausgewählt wird aus der Gruppe von synthetischen Fasern (Chemiefasern), Naturfasern, insbesondere tierischen und/oder pflanzlichen Fasern, und Mineralfasern sowie deren Mischungen, vorzugsweise synthetischen Fasern (Chemiefasern); und/oder
wobei das Fasermaterial in Form von Glasfasern eingesetzt wird oder diese umfasst; und/oder
wobei das Fasermaterial in Form von Aktivkohlefasern eingesetzt wird.

9. Verfahren nach einem der Ansprüche 6 bis 8,
wobei die Adsorberpartikel des Agglomerats ausgewählt werden aus der Gruppe von
(i) Aktivkohle, insbesondere kornförmiger Aktivkohle, vorzugsweise kugelförmiger Aktivkohle und/oder insbesondere geformter und/oder extrudierter Aktivkohle und/oder pulverförmiger Aktivkohle;
(ii) Zeolithen, insbesondere natürlichen und/oder synthetischen Zeolithen;
(iii) Molekularsieben, insbesondere zeolithischen Molekularsieben, synthetischen Molekularsieben und/oder insbesondere synthetischen Molekularsieben auf Basis von Kohlenstoff, Oxiden und/oder Gläsern;
(iv) Metalloxid- und/oder Metallpartikeln;
(v) lonenaustauscherharzen, insbesondere polydispersen und/oder monodispersen Kationen- und/oder Anionenaustauschern, insbesondere vom Geltyp und/oder vom makroporösen Typ;
(vi) anorganischen Oxiden, insbesondere Siliciumdioxiden, Silicagelen und/oder Aluminiumoxiden;
(vii) porösen organischen Polymeren und/oder porösen organisch-anorganischen Hybridpolymeren;
(viii) mineralischen Granulaten;
(ix) Klathraten;
(x) metallorganischen Gerüstverbindungen (*metal-organic frameworks* bzw. MOFs); sowie
(xi) deren Mischungen und/oder Kombinationen; und/oder
wobei das Agglomerat die Adsorberpartikel in Mengen von mindestens 5 Gew.-%, insbesondere mindestens 10 Gew.-%, vorzugsweise mindestens 20 Gew.-%, bevorzugt mindestens 30 Gew.-%, besonders bevorzugt mindestens 50 Gew.-% oder mehr, bezogen auf das Gesamtgewicht des Agglomerats, aufweist und/oder wobei das Agglomerat die Adsorberpartikel in Mengen im Bereich von 5 bis 95 Gew.-%, insbesondere 10 bis 90 Gew.-%, vorzugsweise 20 bis 85 Gew.-%, bevorzugt 30 bis 85 Gew.-%, besonders bevorzugt 50 bis 85 Gew.-%, bezogen auf das Gesamtgewicht des Agglomerats, aufweist.

10. Verfahren nach einem der Ansprüche 6 bis 9,
wobei bei dem Zusammenführen und/oder Inkontaktbringen der Komponenten bzw. in Verfahrensschritt (b) und/oder bei der Vermengung und/oder Vermischung und/oder dem Verbinden und/oder Fixieren bzw. in Verfahrensschritt (c) bei Temperaturen oberhalb des Erweichungspunkts des durch das Agglomerat bereitgestellten Bindemittels und/oder oberhalb des Erweichungspunktes des durch die Schmelzfasern bereitgestellten Bindemittels verfahren wird; und/oder
wobei bei dem Zusammenführen und/oder Inkontaktbringen der Komponenten bzw. in Verfahrensschritt (b) und/oder bei der Vermengung und/oder Vermischung und/oder dem Verbinden und/oder Fixieren bzw. in Verfahrensschritt (c) derart erwärmt wird und/oder bei solchen Temperaturen verfahren wird, dass bzw. bei welchen das Fasermaterial nicht thermisch beeinträchtigt oder thermisch nicht zerstört wird; und/oder wobei das Agglomerat allein und/oder vor dem Zusammenführen und/oder Inkontaktbringen der Komponenten bzw. vor Verfahrensschritt (b) auf Temperaturen oberhalb des Erweichungspunkts des durch das Agglomerat bereitgestellten Bindemittels erwärmt wird.

11. Verfahren nach Anspruch 10,
wobei derart erwärmt wird, dass zumindest ein Teil des durch das Agglomerat bereitgestellten Bindemittels an die Oberfläche des Agglomerats tritt und/oder ein Teil des durch das Agglomerat bereitgestellten Bindemittels aus dem inneren Bereich und/oder dem Kern des Agglomerats nach außen und/oder an die Oberfläche des Agglomerats tritt, und/oder wobei derart erwärmt wird, dass das durch das Agglomerat bereitgestellte Bindemittel in einen klebrigen, insbesondere hitzeklebrigen Zustand überführt wird und/oder wobei derart erwärmt wird, dass auf der Oberfläche des Agglomerats, insbesondere auf der Oberfläche des durch das Bindemittel gebildeten Kerns des Agglomerats, klebrige Stellen und/oder klebrige Bereiche resultieren; und/oder
wobei derart erwärmt wird, dass das durch die Schmelzfasern bereitgestellte Bindemittel und/oder die Schmelzfasern in einen klebrigen, insbesondere hitzeklebrigen Zustand überführt werden, insbesondere wobei die Formgebung der Schmelzfasern und/oder die Faserform aufrechterhalten wird; und/oder
wobei das Agglomerat auf eine Temperatur von höchstens 230 °C, insbesondere höchstens 210 °C, vorzugsweise höchstens 190 °C, bevorzugt höchstens 160 °C, erwärmt wird und/oder wobei bei dem Zusammenführen und/oder Inkontaktbringen der Komponenten bzw. in Verfahrensschritt (b) und/oder bei der Vermengung und/oder Vermischung und/oder dem Verbinden und/oder Fixieren bzw. in Verfahrensschritt (c) auf eine Temperatur von höchstens 230 °C, insbesondere höchstens 210 °C, vorzugsweise höchstens 190 °C, bevorzugt höchstens 160 °C, erwärmt wird.

12. Verfahren nach einem der Ansprüche 6 bis 11,
wobei das Agglomerat erwärmt wird, insbesondere allein oder in Gegenwart des durch die Schmelzfasern bereitgestellten Bindemittels und/oder in Gegenwart der Schmelzfasern und/oder in Gegenwart des Fasermaterials, wobei das Erwärmen insbesondere auf Temperaturen oberhalb des Erweichungspunkts des durch das Agglomerat bereitgestellten Bindemittels und/oder des durch die Schmelzfasern bereitgestellten Bindemittels erfolgt, insbesondere derart, dass ein Teil des durch das Agglomerat bereitgestellten Bindemittels an die Oberfläche des Agglomerats tritt und/oder ein Teil des durch das Agglomerat bereitgestellten Bindemittels aus dem inneren Bereich des Agglomerats nach außen tritt, gegebenenfalls im Beisein des durch die Schmelzfasern bereitgestellten Bindemittels und/oder in Gegenwart der Schmelzfasern und/oder in Gegenwart des Fasermaterials, und/oder insbesondere derart, dass das durch die Schmelzfasern bereitgestellte Bindemittel und/oder die Schmelzfasern in einen klebrigen, insbesondere hitzeklebrigen Zustand unter vollständiger Aufrechterhaltung der Form und/oder Gestalt der Schmelzfasern überführt wird bzw. werden, sofern das durch die Schmelzfasern bereitgestellte Bindemittel und/oder die Schmelzfasern bei dem Erwärmen des Agglomerats zugegen sind; und/oder
wobei bei dem Vermengen und/oder Vermischen und Verbinden und/oder Fixieren und/oder Zumhaftenbringen des Agglomerats und der weiteren Komponenten bzw. in Verfahrensschritt (c) das Agglomerat und die weiteren Komponenten durch Energieeintrag, insbesondere durch Mischen und/oder Fügen, vorzugsweise durch insbesondere alternierendes vertikales und/oder horizontales Pressen, und/oder insbesondere durch Umformen, vorzugsweise durch Druckumformen, bevorzugt durch Walzen, miteinander vermengt und/oder vermischt werden und/oder formstabil und/oder dauerhaft miteinander verbunden und/oder aneinander fixiert und/oder aneinander zum Haften gebracht werden; und/oder
wobei sich dem Vermengen und/oder Vermischen und Verbinden und/oder Fixieren und/oder Zumhaftenbringen des Agglomerats und der weiteren Komponenten bzw. Verfahrensschritt (c) ein Formgebungsschritt und/oder Abkühlschritt zum Erhalt des Komposit-Formkörpers anschließt, insbesondere wobei der resultierende Komposit-Formkörper insbesondere durch vorzugsweise mechanischen Energieeintrag zertrennt und/oder zerkleinert wird, insbesondere so dass vorzugsweise agglomeratbasierte Bruchstücke des Komposit-Formkörpers erhalten werden.

13. Verwendung von dreidimensionalen, adsorptiven faserverstärkten KompositFormkörpern, wie in den Ansprüchen 1 bis 5 definiert, mit einer Vielzahl von Adsorberpartikeln und mit einem Fasermaterial in Form einer Vielzahl von Fasern,
für die Adsorption von Giftstoffen, Schadstoffen und Gerüchen, insbesondere aus Gas- oder Luftströmen oder aber aus Flüssigkeiten, insbesondere Wasser, oder
zur Reinigung oder Aufbereitung von Gasen, Gasströmen oder Gasgemischen, insbesondere Luft, oder von Flüssigkeiten, insbesondere Wasser, oder
in Adsorptionsfiltern und/oder zur Herstellung von Filtern, insbesondere Adsorptionsfiltern, oder als Sorptionsspeicher für Gase, insbesondere Wasserstoff.

## Claims

1. Three-dimensional, adsorptive fiber-reinforced composite shaped body, wherein the composite shaped body comprises at least one adsorption material in the form of a plurality of discrete adsorber particles, on the one hand, and at least one fiber material in the form of a plurality of discrete fibers, on the other hand,
wherein the adsorption material and the fiber material are uniformly and homogeneously distributed in the composite shaped body,
wherein the adsorber particles and the fiber material are connected to one another and/or are fixed to one another and/or brought into adhesive contact with one another in a form-stable and/or permanent manner by means of at least two mutually different binders,
wherein at least one thermoplastic and heat-adhesive organic polymer and/or at least one thermoplastic melt-adhesive adhesive is used as the binder, and
wherein at least one binder is used in the form of melt fibers, and at least one further binder different from this is used, wherein the further binder is not used in the form of melt fibers.

2. Shaped body according to claim 1,
wherein the melt fibers comprise a fiber length, in particular an average fiber length, of at least 0.1 mm, in particular at least 0.5 mm, preferably at least 1 mm, more preferably at least 2 mm, and/or wherein the melt fibers have a fiber length of at most 100 mm, in particular at most 80 mm, preferably at most 50 mm, more preferably at most 20 mm, particularly preferably at most 15 mm, very particularly at most 10 mm, even more preferably at most 5 mm, and/or the melt fibers have a fiber length in the range of 0.1 mm to 100 mm, in particular 0.5 mm to 20 mm, preferably 1 mm to 15 mm, more preferably 2 mm to 10 mm; and/or
wherein the melt fibers comprise a fiber diameter, in particular an average fiber diameter, of at least 0.05 µm, in particular at least 0.2 µm, preferably at least 0.5 µm, more preferably at least 1 µm, and/or wherein the melt fibers comprise a fiber diameter, in particular an average fiber diameter, in the range of at most 900 µm, in particular at most 700 µm, preferably at most 600 µm, more preferably at most 500 µm, and/or wherein the melt fibers comprise a fiber diameter, in particular an average fiber diameter, in the range from 0.05 µm to 900 µm, in particular 0.2 µm to 700 µm, preferably 0.5 µm to 600 µm, more preferably 1 µm to 500 µm; and/or
wherein the composite shaped body is self-supporting and/or wherein the composite shaped body is monolithic and/or integral; and/or
wherein the composite shaped body has a defined and/or a regular shape; and/or
wherein the composite shaped body is of mat-shaped design; and/or
wherein the fiber material has fibers with a fiber length of at least 0.1 mm, in particular at least 0.5 mm, preferably at least 0.75 mm, more preferably at least 1 mm, and/or wherein the fiber material comprises fibers with a fiber length of at most 50 mm, in particular at most 30 mm , preferably at most 20 mm, particularly preferably at most 10 mm, and/or wherein the fiber material has fibers with a fiber length in the range from 0.1 to 50 mm, in particular from 0.5 to 50 mm, preferably from 0.75 to 20 mm, more preferably from 1 to 10 mm; and/or
wherein the fiber material has fibers with an average fiber diameter of at least 0.4 µm, in particular at least 0.6 µm, preferably at least 0.8 µm, more preferably at least 1 µm, and/or wherein the fiber material comprises fibers with an average fiber diameter of at most 1,000 µm, in particular at most 800 µm, preferably at most 600 µm, more preferably at most 500 µm, and/or wherein the fiber material comprises fibers with an average fiber diameter in the range from 0.4 to 1,000 µm, in particular 0.6 to 800 µm, preferably 0.8 to 600 µm, more preferably 1 to 500 µm; and/or
wherein the composite shaped body comprises the adsorber particles in amounts of at least 2 adsorber particles, in particular at least 10 adsorber particles, preferably at least 100 adsorber particles, more preferably at least 500 adsorber particles, even more preferably at least 1,000 adsorber particles, and/or wherein the composite shaped body comprises the adsorber particles in amounts up to 50 adsorber particles, in particular up to 500 adsorber particles, preferably up to 1,000 adsorber particles or more; and/or
wherein the composite shaped body comprises the fiber material in the form of and/or in amounts of at least 5 fibers, in particular at least 10 fibers, preferably at least 100 fibers, more preferably at least 500 fibers, particularly preferably at least 1,000 fibers, and/or wherein the composite shaped body comprises the fiber material in the form of and/or in amounts of up to 100 fibers, in particular up to 500 fibers, preferably up to 1,000 fibers or more; and/or
wherein the composite shaped body comprises the adsorber particles and the fiber material in a weight ratio of adsorber particles, on the one hand, to fibers, on the other hand, of at least 1 : 10, in particular at least 1 : 5, preferably at least 1 : 1, more preferably at least 5 : 1, particularly more preferably 10 : 1, most preferably at least 50 : 1 or more.

3. Composite shaped body according to claim 1 or 2,
wherein the adsorber particles are selected from the group consisting of
(i) activated carbon, in particular grain-shaped active carbon, preferably spherical active carbon and/or in particular shaped and/or extruded activated carbon and/or powdery activated carbon;
(ii) zeolites, in particular natural and/or synthetic zeolites;
(iii) molecular sieves, in particular zeolitic molecular sieves, synthetic molecular sieves and/or in particular synthetic molecular sieves based on carbon monoxide, oxides and/or glasses;
(iv) metal oxide and/or metal particles;
(v) ion exchange resins, in particular polydisperse and/or monodisperse cation and/or anion exchangers, in particular of the gel type and/or of the macroporous type;
(vi) inorganic oxides, in particular silicon dioxides, silica gels and/or aluminum oxides;
(vii) porous organic polymers and/or porous organic-inorganic hybrid polymers;
(viii) mineral granules;
(ix) clathrates;
(x) organometallic framework compounds (*metal*/*organic frameworks* or MOFs); as well as
(xi) their mixtures and/or combinations; and/or
wherein the adsorber particles comprise particle sizes, in particular particle diameters, in the range from 0.001 to 3 mm, in particular from 0.005 to 2.5 mm, preferably from 0.01 to 2 mm, particularly preferably from 0.02 to 1.5 mm, quite particularly preferably from 0.05 to 1 mm; and/or
wherein the adsorber particles comprise average particle sizes, in particular average particle diameters (D50), in the range from 0.01 to 2 mm, in particular from 0.05 to 1.5 mm, preferably from 0.1 to 1 mm; and/or
wherein the adsorber particles comprise a specific surface area (BET surface area) of at least 500 m²/g, in particular at least 750 m²/g, preferably at least 1000 m²/g, more preferably at least 1200 m²/g, and/or wherein the adsorber particles have a specific surface area (BET surface area) in the range from 500 to 4000 m²/g, in particular from 750 to 3,000 m²/g, preferably from 900 to 2,500 m²/g, particularly preferably from 950 to 2,000 m²/g, and/or
wherein the adsorber particles have a total pore volume according to Gurvich of at least 0.50 cm³/g, in particular at least 0.55 cm³/g, preferably at least 0.60 cm³/g, particularly preferably at least 0.65 cm³/g, very particularly preferably at least 0.70 cm³/g, and/or wherein the adsorber particles have a total pore volume according to Gurvich in the range from 0.50 to 2.0 cm³/g, in particular 0.55 to 1.5 cm³/g, preferably 0.60 to 1.2 cm³/g, more preferably 0.65 to 1.0 cm³/g, and/or
wherein the adsorber particles comprise a total porosity in the range from 10% to 80%, in particular 20% to 75%, preferably 25% to 70%.

4. Composite shaped body according to one of the preceding claims,
wherein the fiber material is selected from the group consisting of synthetic fibers, natural fibers, in particular animal and/or vegetable fibers, and mineral fibers, as well as mixtures thereof, preferably synthetic fibers; and/or
wherein the fiber material is in the form of or comprises synthetic fibers, in particular from the group of polyesters (PES); polyolefins such as polyethylene (PE) and polypropylene (PP), polyvinyl chloride (CLF); polyvinylidene chloride (CLF); acetate (CA); triacetate (CTA); polyacrylic (PAN), polyamide (PA); polyvinyl alcohol (PVAL); polyurethanes; polyvinyl esters; (meth) acrylates; as well as mixtures thereof; and/or
wherein the fiber material is in the form of or comprises wool fibers, in particular wool fibers of animal and/or vegetable origin, preferably in the form of sheep wool and/or cotton, preferably sheep wool; and/or
wherein the fiber material is in the form of or comprises glass fibers, and/or wherein the fiber material is in the form of bast fibers; fruit fibers, in particular coconut fibers; animal hair, in particular horse hair; silk fibers; fibers of natural polymers, in particular viscose fibers; basalt fibers; carbon fibers; metal fibers and/or ceramic fibers; and/or
wherein the fibrous material is in the form of activated carbon fibers, in particular wherein the activated carbon fibers are obtainable by carbonizing and subsequently activating organic starting fibers, in particular cellulose fibers, fibers based on cellulose derivatives, phenolic resin fibers, polyvinyl alcohol fibers, pitch fibers, acrylic resin fibers, polyacrylonitrile fibers, aromatic polyamide fibers, formaldehyde resin fibers, divinylbenzene crosslinked polystyrene fibers, lignin fibers, cotton fibers and/or hemp fibers.

5. Composite shaped body according to one of the preceding claims, wherein one binder has a higher softening point or melting point than the other binder.

6. Method for producing a three-dimensional adsorptive fiber-reinforced composite shaped body as defined in claims 1 to 5, wherein the composite shaped body comprises at least one particulate adsorption material and at least one fiber material, wherein the method comprises the steps of the following sequence (a) to (c):
(a) preparation of at least one agglomerate having a plurality of discrete adsorber particles, on the one hand, and at least one fiber material in the form of a plurality of discrete fibers, on the other hand,
(b) bringing together and bringing into contact the components provided in process step (a), using at least one binder, at least one thermoplastic and/or heat-adhesive organic polymer, and/or at least one thermoplastic hot-melt adhesive, and wherein, on the one hand, the binder is prepared partly from the agglomerate and is not used in the form of melt fibers, while, on the other hand, the binder is partly prepared from a plurality of melt fibers, and
(c) homogeneous and uniform mixing, on the one hand, and a form-stable and permanent connection to one another and fixing of the components brought together and brought into contact in step (b), on the other hand, resulting in a three-dimensional adsorptive fiber-reinforced composite shaped body.

7. Method according to claim 6,
wherein at least a thermoplastic and/or heat-sticky polymer and/or at least a thermoplastic melt adhesive is used as the binder, wherein the organic polymer and/or the thermoplastic melt adhesive, independently of one another, is/are selected from polymers of the group consisting of polyesters, polyamides, polyethers, polyether esters and/or polyurethanes as well as their mixtures and copolymers thereof; and/or
wherein the binder prepared from the agglomerate and the binder prepared from the melt fibers differ in at least one parameter, in particular wherein the parameter is selected from the group of physical and/or chemical parameters, in particular chemical properties, softening or melting point, viscosity, in particular the viscosity of the melt, and the adhesion and/or adhesive properties; and/or
wherein the binder prepared from the agglomerate comprises a higher softening or melting point than the binder prepared from the melt fibers; and/or
wherein the agglomerate has a weight ratio of discrete adsorber particles to binder of at least 1.5 : 1, in particular at least 2 : 1, preferably at least 3 : 1, particularly preferably at least 5 : 1, most preferably at least 7 : 1, and/or wherein the agglomerate respectively comprises a weight ratio of discrete adsorber particles to binder in the range from 1.5 : 1 to 30 : 1, in particular 2 : 1 to 20 : 1, preferably 3 : 1 to 15 : 1, particularly preferably 4 : 1 to 10 : 1; and/or
wherein the agglomerate contains the binder in amounts of at least 1 wt.-%, in particular at least 2 wt.-%, preferably at least 5 wt.-%,, more preferably at least 10 wt.-%, based on the total weight of the agglomerate, and/or wherein the agglomerate contains the binder in amounts of at most 80 wt.-%, in particular at most 70 wt.-%, preferably at most 60 wt.-%, more preferably at most 50 wt.-%, based on the total weight of the agglomerate, and/or wherein the agglomerate contains the binder in amounts ranging from at least 1 wt.-% to 80 wt.-%, preferably 2 wt.-% to 70 wt.-%, more preferably 3 wt.-% to 60 wt.-%, particularly preferably 4 wt.-% to 55 wt.-%, most preferably 5 wt.-% to 50 wt.-%, based on the total weight of the agglomerate; and/or
wherein the melt fibers are present in amounts of at least 0.1 wt.-%, preferably at least 0.2 wt.-%, more preferably at least 0.5 wt.-%, particularly preferably at least 1 wt.-%, based on the total weight of agglomerate, fiber material and binder, and/or wherein the melt fibers are present in amounts of at most 20 wt.-%, preferably at most 15 wt.-%, more preferably at most 10 wt.-%, particularly preferably at most 8 wt.-%, based on the total weight of agglomerate, fiber material and binder, and/or wherein the melt fibers are used in amounts ranging from 0.1 wt.-% to 20 wt.-%, preferably 0.2 wt.-% to 15 wt.-%, more preferably 0.5 wt.-% to 10 wt.-%, particularly preferably from 1 wt.-% to 8 wt.-%, based on the total weight of agglomerate, fiber material and binder.

8. Method according to claim 6 or 7,
wherein the binder, in particular the melt fibers are used jointly with the fiber material, in particular in the form of a mixture, preferably in the form of a homogeneous mixture, and/or wherein the binder, in particular the melt fibers, and the fiber material, is/are converted into a homogeneous mixture before the bringing together and/or bringing into contact in method step (b), and the mixture thus obtained is then fed into the agglomerate and/or is used in process step (c), in particular wherein the quantity of binder, in particular melt fibers, is adjusted in the mixture to at least 1% by weight, in particular at least 2 wt.-%, preferably at least 5 wt.-%, more preferably at least 10 wt.-%, based on the total weight of the binder and fiber material, in particular wherein the preparation of the mixture is based on a preferably aqueous dispersion of the binder, in particular based on the melt fibers, and the fiber material, in particular followed by removal of the dispersion medium; and/or
wherein the binder, in particular the melt fibers, and the fiber material are present in a weight-related ratio of binder, in particular melt fibers to fiber material [binder: fiber material] in the range from 1 : 0.5 to 1 : 100, in particular 1 : 1 to 1 : 80, preferably from 1 : 1.5 to 1 : 60, preferably from 1 : 2 to 1 : 20; and/or
wherein the fiber material is present in amounts of at least 0.2 wt.-%, preferably at least 0.5 wt.-%, more preferably at least 1 wt.-%, particularly preferably at least 3 wt.-%, based on the total weight of the agglomerate and fiber material, and/or wherein the fiber material is used in amounts of at most 25 wt.-%, preferably at most 20 wt.-%, more preferably at most 10 wt.-%, based on the total weight of the agglomerate, fiber material and binder, and/or wherein the fiber material is present in amounts ranging from 0.1 wt.-% to 25 wt.-%, preferably between 0.2 wt.-% and 20 wt.-%, more preferably between 0.5 % and 10 wt.-%, based on the total weight of agglomerate, fiber material and binder; and/or
wherein the fiber material is selected from the group consisting of synthetic fibers (chemical fibers), natural fibers, in particular animal and/or vegetable fibers, and mineral fibers, as well as mixtures thereof, preferably synthetic fibers (chemical fibers); and/or
wherein the fiber material is employed in the form of or comprises glass fibers; and/or
wherein the fiber material is used in the form of activated carbon fibers.

9. Method according to one of the claims 6 to 8,
wherein the adsorber particles of the agglomerate are selected from the group consisting of
(i) activated carbon, in particular grain-shaped active carbon, preferably spherical active carbon and/or in particular shaped and/or extruded activated carbon and/or powdery activated carbon;
(ii) zeolites, in particular natural and/or synthetic zeolites;
(iii) molecular sieves, in particular zeolitic molecular sieves, synthetic molecular sieves and/or in particular synthetic molecular sieves based on carbon monoxide, oxides and/or glasses;
(iv) metal oxide and/or metal particles;
(v) ion exchange resins, in particular polydisperse and/or monodisperse cation and/or anion exchangers, in particular of the gel type and/or of the macroporous type;
(vi) inorganic oxides, in particular silicon dioxides, silica gels and/or aluminum oxides;
(vii) porous organic polymers and/or porous organic-inorganic hybrid polymers;
(viii) mineral granules;
(ix) clathrates;
(x) organometallic framework compounds (*metallorganic frameworks* or MOFs); as well as
(xi) their mixtures and/or combinations; and/or
wherein the agglomerate comprises the adsorber particles in amounts of at least 5 wt.-%, in particular at least 10 wt.-%, preferably at least 20 wt.-%, more preferably at least 30 wt.-%, particularly preferably at least 50 wt.-% or more, based on the total weight of the agglomerate, and/or wherein the agglomerate contains the adsorber particles in amounts ranging from 5 to 95 wt.-%, in particular 10 to 90 wt.-%, preferably 20 to 85 wt.-%, more preferably 30 to 85 wt.-%, particularly preferably 50 to 85 wt.-%, based on the total weight of the agglomerate.

10. Method according to one of the claims 6 to 9,
wherein heat is applied during the bringing together or bringing into contact of the components or in method step (b) and/or during the blending and/or mixing and/or connecting and/or fixing or in method step (c) at temperatures above the softening point of the binder prepared from the agglomerate and/or above the softening point of the binder prepared from the melt fibers; and/or
wherein heat is applied during the bringing together or bringing into contact of the components or in method step (b) and/or during the blending and/or mixing and/or connecting and/or fixing or in method step (c) at such temperatures that the fiber material is not thermally impaired or thermally destroyed; and/or
wherein the agglomerate, alone and/or before bringing together and/or bringing the components or before the process step (b), is heated to temperatures above the softening point of the binder prepared from the agglomerate.

11. Method according to claim 10,
wherein heat is so applied that at least a portion of the binder prepared from the agglomerate is applied to the surface of the agglomerate and/or a portion of the binder prepared from the agglomerate is transferred from the inner region and/or the core of the agglomerate to the outside and/or to the surface of the agglomerate and/or is heated in such a way that the binder prepared from the agglomerate is converted into a sticky, in particular heat-sticky state, and/or is heated in such a way that sticky points and/or sticky areas occur on the surface of the agglomerate, in particular on the surface of the core formed by the binder on the surface of the agglomerate; and/or
wherein the binder and/or the melt fibers prepared from the melt fibers is/are heated to a sticky, in particular heat-sticky state, in particular wherein the shaping of the melt fibers and/or the fiber shape is maintained; and/or
wherein the agglomerate is heated to a temperature of at most 230 °C, in particular at most 210 °C, preferably at most 190 °C, more preferably at most 160 °C, and/or wherein, upon the components being brought together and/or brought into contact or in method step (b), and/or in the course of blending and/or mixing and/or bonding and/or fixing or in method step (c), the agglomerate is heated to a temperature of at most 230 °C, in particular at most 210 °C, preferably at most 190 °C, more preferably at most 160 °C.

12. Method according to one of the claims 6 to 11,
wherein the agglomerate is heated, in particular alone or in the presence of the binder prepared from the melt fibers and/or in the presence of the melt fibers and/or in the presence of the fiber material, wherein the heating is effected in particular at temperatures above the softening point of the binder prepared from the agglomerate and/or of the binder prepared from the melt fibers, in particular in such a way that a part of the binder provided by the agglomerate occurs on the surface of the agglomerate and/or a part of the binder prepared from the agglomerate emerges from the inner region of the agglomerate, optionally in the presence of the binder prepared from the melt fibers and/or in the presence of fiber material and/or in particular in such a way that the binder prepared from the melt fibers and/or the melt fibers are converted into a sticky, in particular heat-sticky state, while mantaining the complete shape and/or form of the melt fibers, provided that the binders prepared from the melt fibers and/or the melt fibers are present during the heating of the agglomerate; and/or
wherein during the blending and/or mixing and connecting and/or fixing and/or bringing into adhesion of the agglomerate and the further components or in method step (c), the agglomerate and the further components are blended and/or mixed together and/or stably formed and/or permanently connected to one another and/or fixed to one another and/or brought into adhesion with one another by means of energy input, preferably through, in particular, alternating vertical and/or horizontal pressing and/or forming, preferably through pressure forming, preferably through rollers; and/or
wherein a shaping step and/or a cooling step follows the blending and/or mixing and connecting and/or fixing and/or bringing into adhesion of the agglomerate and the further components or process step (c) to obtain the composite shaped body, in particular wherein the resulting composite-shaped body is separated and/or comminuted in particular by a preferably mechanical energy input, in particular so that preferably agglomerate-based fragments of the composite shaped body are obtained.

13. Use of three-dimensional, adsorptive fiber-reinforced composite-shaped body as defined in claims 1 to 5 with a plurality of adsorber particles and a fiber material in the form of a plurality of fibers,
for the adsorption of toxins, pollutants and odors, in particular from gas or air streams or else from liquids, in particular water, or
for the purification or treatment of gases, gas streams or gas mixtures, in particular air, or of liquids, in particular water, or
in adsorption filters and/or for the production of filters, in particular adsorption filters, or as sorption storage for gases, in particular hydrogen.

## Revendications

1. Objet façonné composite adsorbant tridimensionnel renforcé par des fibres, l'objet façonné composite comprenant d'une part au moins un matériau adsorbant sous forme d'un grand nombre de particules adsorbantes discrètes, et d'autre part au moins un matériau fibreux sous forme d'un grand nombre de fibres discrètes,
dans lequel le matériau adsorbant et le matériau fibreux sont répartis d'une manière uniforme et homogène dans l'objet façonné composite,
dans lequel les particules adsorbantes et le matériau fibreux sont, à l'aide d'au moins deux liants différents l'un de l'autre, assemblés l'un à l'autre et/ou fixés l'un à l'autre et/ou mis à adhérer l'un à l'autre, avec stabilité de forme et/ou d'une manière permanente,
dans lequel on utilise en tant que liant au moins un polymère organique thermoplastique et thermoadhésif et/ou au moins un adhésif fusible thermoplastique, et
dans lequel on utilise au moins un liant sous forme de fibres filées par fusion, et dans lequel on utilise au moins un liant supplémentaire, différent de celui-ci, le liant supplémentaire n'étant pas utilisé sous forme de fibres filées par fusion.

2. Objet façonné selon la revendication 1,
dans lequel les fibres filées par fusion présentent une longueur de fibre, en particulier une longueur moyenne de fibre, d'au moins 0,1 mm, en particulier d'au moins 0,5 mm, de préférence d'au moins 1 mm, préférentiellement d'au moins 2 mm, et/ou dans lequel les fibres filées par fusion présentent une longueur de fibre d'au plus 100 mm, en particulier d'au plus 80 mm, de préférence d'au plus 50 mm, préférentiellement d'au plus 20 mm, d'une manière particulièrement préférée d'au plus 15 mm, d'une manière tout particulièrement préférée d'au plus 10 mm, d'une manière encore plus préférée d'au plus 5 mm, et/ou dans lequel les fibres filées par fusion présentent une longueur de fibre comprise dans la plage de 0,1 mm à 100 mm, en particulier de 0,5 mm à 20 mm, de préférence de 1 mm à 15 mm, préférentiellement de 2 mm à 10 mm ; et/ou
dans lequel les fibres filées par fusion présentent un diamètre de fibre, en particulier un diamètre moyen de fibre, d'au moins 0,05 µm, en particulier d'au moins 0,2 µm, de préférence d'au moins 0,5 µm, préférentiellement d'au moins 1 µm, et/ou dans lequel les fibres filées par fusion présentent un diamètre de fibre, en particulier un diamètre moyen de fibre, d'au plus 900 µm, en particulier d'au plus 700 µm, de préférence d'au plus 600 µm, préférentiellement d'au plus 500 µm, et/ou dans lequel les fibres filées par fusion présentent un diamètre de fibre, en particulier un diamètre moyen de fibre, compris dans la plage de 0,05 µm à 900 µm, en particulier de 0,2 µm à 700 µm, de préférence de 0,5 µm à 600 µm, préférentiellement de 1 µm à 500 µm ; et/ou
l'objet façonné composite étant autoportant, et/ou l'objet façonné composite étant configuré monolithique et/ou en une pièce ; et/ou
l'objet façonné composite présentant une forme définie et/ou régulière ; et/ou
l'objet façonné composite étant conçu sous forme d'un mat ; et/ou
dans lequel le matériau fibreux comprend des fibres ayant une longueur de fibre d'au moins 0,1 mm, en particulier d'au moins 0,5 mm, de préférence d'au moins 0,75 mm, préférentiellement d'au moins 1 mm, et/ou dans lequel le matériau fibreux comprend des fibres ayant une longueur de fibre d'au plus 50 mm, en particulier d'au plus 30 mm, de préférence d'au plus 20 mm, préférentiellement d'au plus 10 mm, et/ou dans lequel le matériau fibreux comprend des fibres ayant une longueur de fibre comprise dans la plage de 0,1 à 50 mm, en particulier de 0,5 à 50 mm, de préférence de 0,75 à 20 mm, préférentiellement de 1 à 10 mm ; et/ou
dans lequel le matériau fibreux comprend des fibres ayant un diamètre moyen de fibre d'au moins 0,4 µm, en particulier d'au moins 0,6 µm, de préférence d'au moins 0,8 µm, préférentiellement d'au moins 1 µm, et/ou dans lequel le matériau fibreux comprend des fibres ayant un diamètre moyen de fibre d'au plus 1000 µm, en particulier d'au plus 800 µm, de préférence d'au plus 600 µm, préférentiellement d'au plus 500 µm, et/ou dans lequel le matériau fibreux comprend des fibres ayant un diamètre moyen de fibre compris dans la plage de 0,4 à 1000 µm, en particulier de 0,6 à 800 µm, de préférence de 0,8 à 600 µm, préférentiellement de 1 à 500 µm ; et/ou
l'objet façonné composite comprenant les particules adsorbantes en des quantités d'au moins 2 particules adsorbantes, en particulier d'au moins 10 particules adsorbantes, de préférence d'au moins 100 particules adsorbantes, préférentiellement d'au moins 500 particules adsorbantes, d'une manière particulièrement préférée d'au moins 1000 particules adsorbantes, et/ou l'objet façonné composite comprenant les particules adsorbantes en des quantités allant jusqu'à 50 particules adsorbantes, en particulier jusqu'à 500 particules adsorbantes, de préférence jusqu'à 1000 particules adsorbantes ou plus ; et/ou
l'objet façonné composite comprenant le matériau fibreux sous forme et/ou en des quantités d'au moins 5 fibres, en particulier d'au moins 10 fibres, de préférence d'au moins 100 fibres, préférentiellement d'au moins 500 fibres, d'une manière particulièrement préférée d'au moins 1000 fibres, et/ou l'objet façonné composite comprenant le matériau fibreux sous forme et/ou en des quantités allant jusqu'à 100 fibres, en particulier jusqu'à 500 fibres, de préférence jusqu'à 1000 fibres ou plus ; et/ou
l'objet façonné composite comprenant les particules adsorbantes et le matériau fibreux selon un rapport en poids entre d'une part les particules adsorbantes et d'autre part les fibres d'au moins 1:10, en particulier d'au moins 1:5, de préférence d'au moins 1:1, préférentiellement d'au moins 5:1, d'une manière particulièrement préférée d'au moins 10:1, d'une manière tout particulièrement préférée d'au moins 50:1 ou plus.

3. Objet façonné composite selon la revendication 1 ou 2,
dans lequel les particules adsorbantes sont choisies dans le groupe consistant en
(i) le charbon actif, en particulier le charbon actif granulaire, de préférence le charbon actif sphérique et/ou le charbon actif en particulier façonné et/ou extrudé et/ou le charbon actif pulvérulent ;
(ii) les zéolites, en particulier les zéolites naturelles et/ou synthétiques ;
(iii) les tamis moléculaires, en particulier les tamis moléculaires zéolitiques, les tamis moléculaires synthétiques et/ou les tamis moléculaires synthétiques à base de carbone, d'oxydes et/ou de verres ;
(iv) les particules d'oxydes métalliques et/ou de métaux ;
(v) les résines échangeuses d'ions, en particulier les échangeurs de cations et/ou d'anions polydispersés et/ou monodispersés, en particulier du type gel et/ou du macroporeux ;
(vi) les oxydes inorganiques, en particulier les dioxydes de silicium, les gels de silice et/ou les oxydes d'aluminium ;
(vii) les polymères organiques poreux et/ou les polymères hybrides organiques-inorganiques poreux ;
(viii)les granulés minéraux ;
(ix) les clathrates ;
(x) les structures organométalliques poreuses (*metal-organic frameworks,* ou MOF) ; ainsi que
(xi) les mélanges et/ou combinaisons de ceux-ci ; et/ou
dans lequel les particules adsorbantes présentent une granulométrie, en particulier un diamètre des particules, comprise dans la plage de 0,001 à 3 mm, en particulier de 0,005 à 2,5 mm, de préférence de 0,01 à 2 mm, d'une manière particulièrement préférée de 0,02 à 1,5 mm, d'une manière tout particulièrement préférée de 0,05 à 1 mm ; et/ou
dans lequel les particules adsorbantes présentent une granulométrie moyenne, en particulier un diamètre moyen des particules (D50), comprise dans la plage de 0,01 à 2 mm, en particulier de 0,05 à 1,5 mm, de préférence de 0,1 à 1 mm ; et/ou
dans lequel les particules adsorbantes présentent une aire spécifique (aire BET) d'au moins 500 m²/g, en particulier d'au moins 750 m²/g, de préférence d'au moins 1000 m²/g, d'une manière particulièrement préférée d'au moins 1200 m²/g, et/ou dans lequel les particules adsorbantes présentent une aire spécifique (aire BET) comprise dans la plage de 500 à 4000 m²/g, en particulier de 750 à 3000 m²/g, de préférence de 900 à 2500 m²/g, d'une manière particulièrement préférée de 950 à 2000 m²/g ; et/ou
dans lequel les particules adsorbantes présentent une volume total des pores selon Gurvich d'au moins 0,50 cm³/g, en particulier d'au moins 0,55 cm³/g, de préférence d'au moins 0,60 cm³/g, d'une manière particulièrement préférée d'au moins 0,65 cm³/g, d'une manière tout particulièrement préférée d'au moins 0,70 cm³/g, et/ou dans lequel les particules adsorbantes présentent un volume total des pores selon Gurvich compris dans la plage de 0,50 à 2,0 cm³/g, en particulier de 0,55 à 1,5 cm³/g, de préférence de 0,60 à 1,2 cm³/g, d'une manière particulièrement préférée de 0,65 à 1,0 cm³/g ; et/ou
dans lequel les particules adsorbantes présentent une porosité totale comprise dans la plage de 10 % à 80 %, en particulier de 20 % à 75 %, de préférence de 25 % à 70 %.

4. Objet façonné composite selon l'une des revendications précédentes,
dans lequel le matériau fibreux est choisi dans le groupe consistant en les fibres synthétiques, les fibres naturelles, en particulier les fibres animales et/ou végétales, et les fibres minérales, ainsi que les mélanges de celles-ci, de préférence les fibres synthétiques ; et/ou
dans lequel le matériau fibreux est utilisé sous forme de fibres synthétiques ou les comprend, en particulier du groupe consistant en les polyesters (PES) ; les polyoléfines, telles que le polyéthylène (PE) et le polypropylène (PP), le poly(chlorure de vinyle) (CLF) ; le poly(chlorure de vinylidène) (CLF) ; l'acétate (CA) ; le triacétate (CTA) ; les polyacryliques (PAN), le polyamide (PA) ; le poly(alcool vinylique) (PVAL) ; les polyuréthannes ; les poly(esters vinyliques) ; les (méth)acrylates ; ainsi que les mélanges de ceux-ci ; et/ou
dans lequel matériau fibreux est utilisé sous forme de fibres de laine, en particulier de fibres de laine d'origine animale et/ou végétale, de préférence sous forme de laine de mouton et/ou de coton, de préférence de laine de mouton, ou les comprend ; et/ou
dans lequel le matériau fibreux est utilisé sous forme de fibres de verre ou les comprend, et/ou dans lequel le matériau fibreux est utilisé sous forme de fibres libériennes ; de fibres de fruits, en particulier de fibres de coco ; de poils d'animaux, en particulier de crin de cheval ; de fibres de soie ; de fibres de polymères naturels, en particulier de fibres de viscose ; de fibres de basalte ; de fibres de carbone ; de fibres métalliques et/ou de fibres céramiques, ou les comprend ; et/ou
dans lequel le matériau fibreux est utilisé sous forme de fibres de charbon actif, en particulier dans lequel les fibres de charbon actif peuvent être obtenues par carbonisation, suivie d'une activation de fibres organiques de départ, en particulier de fibres de cellulose, de fibres à base de dérivés de la cellulose, de fibres d'une résine phénolique, de fibres de poly(alcool vinylique), de fibres de brai, de fibres de résine acrylique, de fibres de polyacrylonitrile, de fibres de polyamide aromatique, de fibres de résine de formaldéhyde, de fibres de polystyrène réticulé par du divinylbenzène, de fibres de lignine, de fibres de coton et/ou de fibres de chanvre.

5. Objet façonné composite selon l'une des revendications précédentes, dans lequel l'un des liants présente un point de ramollissement ou de fusion plus élevé que l'autre liant.

6. Procédé de fabrication d'un objet façonné composite adsorbant tridimensionnel renforcé par des fibres tel que défini dans les revendications 1 à 5, dans lequel l'objet façonné composite comprend au moins un matériau adsorbant particulaire et au moins un matériau fibreux, le procédé comprenant les étapes suivantes, dans l'ordre (a) à (c) spécifié ci-après :
(a) mise à disposition d'au moins un agglomérat comportant un grand nombre de particules adsorbantes discrètes, et d'autre part d'au moins un matériau fibreux sous forme d'un grand nombre de fibres discrètes,
(b) réunion et mise en contact des composants mis à disposition dans l'étape (a) du procédé, par utilisation d'au moins un liant, auquel cas on utilise en tant que liant au moins un polymère organique thermoplastique et/ou thermoadhésif et/ou au moins un adhésif fusible thermoplastique, et dans lequel d'une part le liant est partiellement mis à disposition par l'agglomérat et n'est pas utilisé sous forme de fibres filées par fusion, et d'autre part le liant est partiellement mis à disposition par un grand nombre de fibres filées par fusion, et
(c) d'une part mélange homogène et uniforme, et d'autre part assemblage les uns avec les autres et fixation les uns aux autres, avec stabilité de forme et d'une manière permanente, des composants réunis et mis en contact dans l'étape (b), de façon qu'il en résulte un objet façonné composite adsorbant tridimensionnel renforcé par des fibres.

7. Procédé selon la revendication 6,
dans lequel on utilise en tant que liant au moins un polymère organique thermoplastique et/ou thermoadhésif et/ou au moins un adhésif fusible thermoplastique, le polymère organique et/ou l'adhésif fusible thermoplastique étant indépendamment l'un de l'autre choisis parmi les polymères du groupe des polyesters, des polyamides, des polyéthers, des polyétheresters et/ou des polyuréthannes, ainsi que des mélanges et copolymères de ceux-ci ; et/ou
dans lequel le liant mis à disposition par l'agglomérat et le liant mis à disposition par les fibres filées par fusion se distinguent par au moins un paramètre, le paramètre étant en particulier choisi dans le groupe consistant en les paramètres physiques et/ou chimiques, en particulier les propriétés chimiques, le point de ramollissement ou de fusion, la viscosité, en particulier la viscosité à l'état fondu, et les propriétés d'adhérence de contact et/ou d'adhérence ; et/ou
dans lequel le liant mis à disposition par l'agglomérat présente un point de ramollissement ou un point de fusion plus élevé que le liant mis à disposition par les fibres filées à l'état fondu ; et/ou
dans lequel l'agglomérat présente un rapport en poids des particules adsorbantes discrètes au liant d'au moins 1,5:1, en particulier d'au moins 2:1, de préférence d'au moins 3:1, d'une manière particulièrement préférée d'au moins 5:1, d'une manière tout particulièrement préférée d'au moins 7:1, et/ou dans lequel l'agglomérat présente un rapport en poids des particules adsorbantes discrètes au liant compris dans la plage de 1,5:1 à 30:1, en particulier de 2:1 à 20:1, de préférence de 3:1 à 15:1, d'une manière particulièrement préférée de 4:1 à 10:1 ; et/ou
dans lequel l'agglomérat contient le liant en des quantités d'au moins 1 % en poids, en particulier d'au moins 2 % en poids, de préférence d'au moins 5 % en poids, préférentiellement d'au moins 10 % en poids, par rapport au poids total de l'agglomérat, et/ou dans lequel l'agglomérat contient le liant en des quantités d'au plus 80 % en poids, en particulier d'au plus 70 % en poids, de préférence d'au plus 60 % en poids, de préférence d'au plus 50 % en poids, par rapport au poids total de l'agglomérat, et/ou dans lequel l'agglomérat contient le liant en des quantités comprises dans la plage d'au moins 1 % en poids à 80 % en poids, en particulier de 2 % en poids à 70 % en poids, de préférence de 3 % en poids à 60 % en poids, de préférence de 4 % en poids à 55 % en poids, d'une manière particulièrement préférée de 5 % en poids à 50 % en poids, par rapport au poids total de l'agglomérat ; et/ou
dans lequel les fibres filées à l'état fondu sont utilisées en des quantités d'au moins 0,1 % en poids, de préférence d'au moins 0,2 % en poids, préférentiellement d'au moins 0,5 % en poids, d'une manière particulièrement préférée d'au moins 1 % en poids, par rapport au poids total de l'agglomérat, du matériau fibreux et du liant, et/ou dans lequel les fibres à l'état fondu sont utilisées en des quantités d'au plus 20 % en poids, de préférence d'au plus 15 % en poids, préférentiellement d'au moins 10 % en poids, d'une manière particulièrement préférée d'au plus 8 % en poids, par rapport au poids total de l'agglomérat, du matériau fibreux et du liant, et/ou dans lequel les fibres filées à l'état fondu sont utilisées en des quantités comprises dans la plage de 0,1 % en poids à 20 % en poids, de préférence de 0,2 % en poids à 15 % en poids, préférentiellement de 0,5 % en poids à 10 % en poids, d'une manière particulièrement préférée de 1 % en poids à 8 % en poids, par rapport au poids total de l'agglomérat, du matériau fibreux et du liant.

8. Procédé selon la revendication 6 ou 7,
dans lequel le liant, en particulier les fibres filées par fusion, est utilisé en même temps que le matériau fibreux, en particulier sous forme d'un mélange, de préférence sous forme d'un mélange homogène, et/ou dans lequel le liant, en particulier les fibres filées par fusion, et le matériau fibreux, est converti, avant la réunion et/ou la mise en contact des composants, ou avant l'étape (b) du procédé, en un mélange homogène, puis le mélange ainsi obtenu est envoyé à l'agglomérat et/ou est utilisé dans l'étape (c) du procédé, en particulier dans lequel la quantité du liant, en particulier des fibres filées par fusion, dans le mélange est ajustée à au moins 1 % en poids, en particulier à au moins 2 % en poids, de préférence à au moins 5 % en poids, préférentiellement à au moins 10 % en poids, par rapport au poids total du liant et du matériau fibreux, en particulier dans lequel la mise à disposition du mélange a lieu sur la base d'une dispersion de préférence aqueuse du liant, en particulier des fibres filées par fusion, opération en particulier suivie d'une élimination du milieu de dispersion ; et/ou
dans lequel le liant, en particulier les fibres filées par fusion, et le matériau fibreux, sont utilisés selon un rapport en poids du liant, en particulier des fibres filées par fusion, au matériau fibreux [liant : matériau fibreux], compris dans la plage de 1:0,5 à 1:100, en particulier de 1:1 à 1:80, de préférence de 1:1,5 à 1:60, préférentiellement de 1:2 à 1:20 ; et/ou
dans lequel le matériau fibreux est utilisé en des quantités d'au moins 0,2 % en poids, de préférence d'au moins 0,5 % en poids, préférentiellement d'au moins 1 % en poids, d'une manière particulièrement préférée d'au moins 3 % en poids, par rapport au poids total de l'agglomérat, du matériau fibreux et du liant, et/ou dans lequel le matériau fibreux est utilisé en des quantités d'au plus 25 % en poids, de préférence d'au plus 20 % en poids, préférentiellement d'au plus 10 % en poids, par rapport au poids total de l'agglomérat, du matériau fibreux et du liant, et/ou dans lequel le matériau fibreux est utilisé en des quantités comprises dans la plage entre 0,1 % en poids et 25 % en poids, de préférence entre 0,2 % en poids et 20 % en poids, préférentiellement entre 0,5 % en poids et 10 % en poids, par rapport au poids total de l'agglomérat, du matériau fibreux et du liant ; et/ou
dans lequel le matériau fibreux est choisi dans le groupe consistant en les fibres synthétiques (fibres chimiques), les fibres naturelles, en particulier les fibres animales et/ou végétales, et les fibres minérales et les mélanges de celles-ci, de préférence les fibres synthétiques (fibres chimiques) ; et/ou
dans lequel le matériau fibreux est utilisé sous forme de fibres de verre ou les comprend ; et/ou
dans lequel le matériau fibreux est utilisé sous forme de fibres de charbon actif.

9. Procédé selon l'une des revendications 6 à 8,
dans lequel les particules adsorbantes de l'agglomérat sont choisies dans le groupes consistant en
(i) le charbon actif, en particulier le charbon actif granulaire, de préférence le charbon actif sphérique et/ou le charbon actif en particulier façonné et/ou extrudé et/ou le charbon actif pulvérulent ;
(ii) les zéolites, en particulier les zéolites naturelles et/ou synthétiques ;
(iii) les tamis moléculaires, en particulier les tamis moléculaires zéolitiques, les tamis moléculaires synthétiques et/ou les tamis moléculaires synthétiques à base de carbone, d'oxydes et/ou de verres ;
(iv) les particules d'oxydes métalliques et/ou de métaux ;
(v) les résines échangeuses d'ions, en particulier les échangeurs de cations et/ou d'anions polydispersés et/ou monodispersés, en particulier du type gel et/ou du macroporeux ;
(vi) les oxydes inorganiques, en particulier les dioxydes de silicium, les gels de silice et/ou les oxydes d'aluminium ;
(vii) les polymères organiques poreux et/ou les polymères hybrides organiques-inorganiques poreux ;
(viii)les granulés minéraux ;
(ix) les clathrates ;
(x) les structures organométalliques poreuses (*metal-organic frameworks,* ou MOF) ; ainsi que
(xi) les mélanges et/ou combinaisons de ceux-ci ; et/ou
dans lequel l'agglomérat comprend les particules adsorbantes en des quantités d'au moins 5 % en poids, en particulier d'au moins 10 % en poids, de préférence d'au moins 20 % en poids, préférentiellement d'au moins 30 % en poids, d'une manière particulièrement préférée d'au moins 50 % en poids ou plus, par rapport au poids total de l'agglomérat, et/ou dans lequel l'agglomérat comprend les particules adsorbantes en des quantités comprises dans la plage de 5 à 95 % en poids, en particulier de 10 à 90 % en poids, de préférence de 20 à 85 % en poids, préférentiellement de 30 à 85 % en poids, d'une manière particulièrement préférée de 50 à 85 % en poids, par rapport au poids total de l'agglomérat.

10. Procédé selon l'une des revendications 6 à 9,
dans lequel, lors de la réunion et/ou de la mise en contact des composants, ou dans l'étape (b) du procédé, et/ou lors du mélange et/ou du mélange intime et/ou lors de l'assemblage et/ou de la fixation, ou dans l'étape (c) du procédé, on procède à des températures supérieures au point de ramollissement du liant mis à disposition par l'agglomérat et/ou au-dessus du point de ramollissement du liant mis à disposition par les fibres filées par fusion ; et/ou
dans lequel, lors de la réunion et/ou de la mise en contact des composants, ou dans l'étape (b) du procédé, et/ou lors du mélange et/ou du mélange intime et/ou de l'assemblage et/ou de la fixation, ou dans l'étape (c) du procédé, on chauffe de telle sorte et/ou on procède à des températures telles, qu'il n'en résulte pas une dégradation thermique ou une destruction thermique du matériau fibreux ; et/ou
dans lequel l'agglomérat, à titre individuel et/ou avant la réunion et/ou la mise en contact des composants, ou avant l'étape (b) du procédé, est chauffé à des températures supérieures au point de ramollissement du liant mis à disposition par l'agglomérat.

11. Procédé selon la revendication 10,
dans lequel on chauffe de telle sorte qu'au moins une partie du liant mis à disposition par l'agglomérat vienne sur la surface de l'agglomérat, et/ou une partie du liant mis à disposition par l'agglomérat passe vers l'extérieur et/ou sur la surface de l'agglomérat à partir de la zone intérieure et/ou du coeur de l'agglomérat, et/ou dans lequel on chauffe de telle sorte que le liant mis à disposition par l'agglomérat soit converti à un état collant, en particulier collant à chaud, et/ou dans lequel on chauffe de telle sorte qu'il se crée sur la surface de l'agglomérat, en particulier sur la surface du coeur de l'agglomérat formé par le liant, des points collants et/ou des zones collantes ; et/ou
dans lequel on chauffe de telle sorte que le liant mis à disposition par les fibres filées par fusion et/ou les fibres filées par fusion soient convertis en un état collant, en particulier collant à chaud, en particulier dans lequel le façonnage des fibres filées par fusion et/ou la forme des fibres soient maintenus ; et/ou
dans lequel l'agglomérat est chauffé à une température d'au plus 230°C, en particulier d'au plus 210°C, de préférence d'au plus 190°C, préférentiellement d'au plus 160°C, et/ou dans lequel, lors de la réunion et/ou de la mise en contact des composants, ou dans l'étape (b) du procédé, et/ou lors du mélange et/ou du mélange intime et/ou de l'assemblage, et/ou de la fixation, ou dans l'étape (c) du procédé, on chauffe à une température d'au plus 230°C, en particulier d'au plus 210°C, de préférence d'au plus 190°C, préférentiellement d'au plus 160°C.

12. Procédé selon l'une des revendications 6 à 11,
dans lequel l'agglomérat est chauffé, en particulier à titre individuel ou en présence du liant mis à disposition par les fibres filées par fusion et/ou en présence des fibres filées par fusion et/ou en présence du matériau fibreux, dans lequel le chauffage est réalisé en particulier à des températures supérieures au point de ramollissement du liant mis à disposition par l'agglomérat et/ou du liant mis à disposition par les fibres filées par fusion, en particulier de telle sorte qu'une partie du liant mis à disposition par l'agglomérat vienne sur la surface de l'agglomérat, et/ou qu'une partie du liant mis à disposition par l'agglomérat passe vers l'extérieur à partir de la zone intérieure de l'agglomérat, éventuellement en présence du liant mis à disposition par les fibres filées par fusion et/ou en présence des fibres filées par fusion et/ou en présence du matériau fibreux, et/ou de telle sorte que le liant mis à disposition par les fibres filées par fusion et/ou les fibres filées par fusion soient convertis en un état collant, en particulier collant à chaud, avec maintien complet de la forme et/ou de la conformation des fibres filées par fusion, du moment que le liant mis à disposition par les fibres filées par fusion, et/ou les fibres filées par fusion, sont présents lors du chauffage de l'agglomérat ; et/ou
dans lequel, lors du mélange intime et/ou du mélange, et de l'assemblage et/ou de la fixation, et/ou de la mise à adhérer de l'agglomérat et des composants supplémentaires, ou dans l'étape (c) du procédé, l'agglomérat et les composants supplémentaires sont soumis à un mélange et/ou à un mélange intime les uns avec les autres, et/ou sont assemblés les uns aux autres avec stabilité de forme et/ou d'une manière permanente et/ou sont fixés les uns aux autres et/ou sont mis à adhérer les uns aux autres, par un apport d'énergie, en particulier par mélange et/ou conjugaison, de préférence par un pressage vertical et/ou horizontal, en particulier alterné, et/ou en particulier par formage, de préférence par formage sous pression, préférentiellement par passage aux rouleaux ; et/ou
dans lequel le mélange intime et/ou le mélange, et l'assemblage et/ou la fixation, et/ou la mise à adhérer de l'agglomérat et des composants supplémentaires, ou l'étape (c) du procédé, sont suivis d'une étape de façonnage et/ou d'une étape de refroidissement pour obtenir l'objet façonné composite, en particulier dans lequel l'objet façonné composite est disjoint et/ou broyé en particulier par un apport d'énergie de préférence mécanique, de façon que l'on obtienne des fragments de préférence à base d'agglomérats de l'objet façonné composite.

13. Utilisation d'objets façonnés composites adsorbants tridimensionnels renforcés par des fibres, tels que définis dans les revendications 1 à 5, comprenant un grand nombre de particules adsorbantes, et un matériau fibreux sous forme d'un grand nombre de fibres,
pour l'adsorption de poisons, de polluants et d'odeurs, en particulier à partir de flux de gaz ou d'air, ou cependant de liquides, en particulier l'eau, ou
pour purifier ou préparer des gaz, des flux de gaz ou des mélanges de gaz, en particulier l'air, ou de liquides, en particulier l'eau, ou
dans des filtres adsorbants et/ou pour fabriquer des filtres, en particulier des filtres à adsorption, ou en tant qu'accumulateurs à sorption pour gaz, en particulier pour l'hydrogène.
